(19)

Europäisches Patentamt
European Patent Office
Office européen des brevets

(11)  **EP 1 066 495 B1**

(12)  **EUROPEAN PATENT SPECIFICATION**

(45) Date of publication and mention
of the grant of the patent:
**24.11.2010   Bulletin 2010/47**

(21) Application number: **99934334.6**

(22) Date of filing: **18.02.1999**

(51) Int Cl.:
***G01B 9/02*** (2006.01)     ***G01N 21/45*** (2006.01)

(86) International application number:
**PCT/US1999/003499**

(87) International publication number:
**WO 1999/042785 (26.08.1999 Gazette 1999/34)**

(54) **APPARATUS AND METHOD FOR MEASURING THE REFRACTIVE INDEX AND OPTICAL PATH LENGTH EFFECTS OF AIR USING MULTIPLE-PASS INTERFEROMETRY**

VERFAHREN UND VORRICHTUNG ZUM MESSEN DES EINFLUSSES DER LUFT AUF DEN BRECHUNGSINDEX UND DIE OPTISCHE WEGLÄNGE MITTELS VIELFACHREFLEKTIONS-INTERFEROMETRIE

APPAREIL ET PROCEDE DE MESURE DE L'INDICE DE REFRACTION ET DES EFFETS DE LA LONGUEUR DU TRAJET OPTIQUE DE L'AIR PAR INTERFEROMETRIE A PASSAGES MULTIPLES

(84) Designated Contracting States:
**DE NL**

(30) Priority: **23.02.1998   US 75566 P**
**13.05.1998   US 78163**

(43) Date of publication of application:
**10.01.2001   Bulletin 2001/02**

(73) Proprietor: **ZYGO CORPORATION**
**Middlefield**
**Connecticut 06455-0448 (US)**

(72) Inventors:
• **HILL, Henry, Allen**
  **Tucson, AZ 85716 (US)**

• **DE GROOT, Peter**
  **Middletown, CT 06457 (US)**
• **DEMAREST, Frank, C.**
  **Middletown, CT 06457 (US)**

(74) Representative: **Cole, David John**
**46 Kirkhill Gardens,**
**West Greenlees Estate**
**Cambuslang,**
**Glasgow G72 8EZ (GB)**

(56) References cited:
**US-A- 4 802 764     US-A- 5 404 222**

EP 1 066 495 B1

**Description**

The present invention relates to interferometric apparatus. The invention relates in particular to interferometric apparatus for measuring the effects of the refractive index of a gas in a measurement path, and to method for using such apparatus.

A frequently-encountered problem in metrology is the measurement of the refractive index of a column of air. Several techniques exist for measuring the index under highly controlled circumstances, such as when the air column is contained in a sample cell and is monitored for temperature, pressure, and physical dimension. See for example, an article entitled "An air refractometer for interference length metrology," by J. Terrien, Metrologia 1(3), 80-83 (1965).

Perhaps the most difficult measurement related to the refractive index of air is the measurement of refractive index fluctuations over a measurement path of unknown or variable length, with uncontrolled temperature and pressure. Such circumstances arise frequently in geophysical and meteorological surveying, for which the atmosphere is obviously uncontrolled and the refractive index is changing dramatically because of variations in air density and composition. The problem is described in an article entitled "Effects of the atmospheric phase fluctuation on long-distance measurement," by H. Matsumoto and K. Tsukahara, Appl. Opt. 23(19), 3388-3394 (1984), and in an article entitled "Optical path length fluctuation in the atmosphere," by G. N. Gibson et al., Appl. Opt. 23(23), 4383-4389 (1984).

Another example situation is high-precision distance measuring interferometry, such as is employed in micro-lithographic fabrication of integrated circuits. See for example an article entitled "Residual errors in laser interferometry from air turbulence and non-linearity," by N. Bobroff, Appl. Opt. 26(13), 2676-2682 (1987), and an article entitled "Recent advances in displacement measuring interferometry," also by N. Bobroff, Measurement Science & Tech. 4(9), 907-926 (1993). As noted in the aforementioned cited references, interferometric displacement measurements in air are subject to environmental uncertainties, particularly to changes in air pressure and temperature; to uncertainties in air composition such as resulting from changes in humidity; and to the effects of turbulence in the air. Such factors alter the wavelength of the light used to measure the displacement. Under normal conditions the refractive index of air is approximately 1.0003 with a variation of the order of $1 \times 10^{-5}$ to $1 \times 10^{-4}$. In many applications the refractive index of air must be known with a relative precision of less than 0.1 ppm (parts per million) to 0.003 ppm, these two relative precisions corresponding to a displacement measurement accuracy of 100 nm and 3 nm, respectively, for a one meter interferometric displacement measurement.

There are frequent references in the art to heterodyne methods of phase estimation, in which the phase varies with time in a controlled way. For example, in a known form of prior-art heterodyne distance-measuring interferometer, the source emits two orthogonally polarized beams having slightly different optical frequencies (*e.g.* 2 MHz). The interferometric receiver in this case is typically comprised of a linear polarizer and a photodetector to measure a time-varying interference signal. The signal oscillates at the beat frequency and the phase of the signal corresponds to the relative phase difference. A further representative example of the prior art in heterodyne distance-measuring interferometry is taught in commonly-owned U.S. Pat. No. 4,688,940 issued to G. E. Sommargren and M. Schaham (1987). However, these known forms of interferometric metrology are limited by fluctuations in refractive index, and by themselves are unsuited to the next generation of micro-lithography instruments.

Another known form of interferometer for distance measurement is disclosed in U.S. Pat. No. 4,005,936 entitled "Interferometric Methods And Apparatus For Measuring Distance To A Surface" issued to J. D. Redman and M. R. Wall (1977). The method taught by Redman and Wall consists of employing laser beams of two different wavelengths, each of which is split into two parts. Frequency shifts are introduced into one part of the respective beams. One part of each beam reflects from an object and recombines with the other part on a photodetector. From the interference signal at the detector, a phase at a difference frequency is derived which is a measure of the distance to the surface. The equivalent wavelength of the phase associated with the difference frequency is equal to the product of the two laser wavelengths divided by the difference of the two wavelengths. This two-wavelength technique of Redman and Wall reduces measurement ambiguities, but is at least as sensitive to the deleterious effects of refractive index fluctuations of the air as single-wavelength techniques.

Another example of a two-wavelength interferometer similar to that of Redman and Wall is disclosed in U.S. Pat. No.4,907,886 entitled "Method And Apparatus For Two-Wavelength Interferometry With Optical Heterodyne Processes And Use For Position Or Range Finding," issued to R. Dändliker and W. Heerburgg (1990). This system is also described in an article entitled "Two-Wavelength Laser Interferometry Using Superheterodyne Detection," by R. Dändliker, R. Thalmann, and D. Prongué, Opt. Let. 13(5), 339-341 (1988), and in an article entitled "High-Accuracy Distance Measurements With Multiple-Wavelength Interferometry," by R. Dändliker, K. Hug, J. Politch, and E. Zimmermann. The system of Dändliker *et al.*, as taught in U.S. Pat. No.4,907,886, employs laser beams of two wavelengths, each of the beams comprising two polarization components separated in frequency by means of acousto-optic modulation. After passing these beams collinearly through a Michelson interferometer, the polarization components are mixed, resulting in an interference signal, *i.e.* a heterodyne signal. In that the heterodyne signal has a different frequency for each of the two wavelengths, a so-called superheterodyne signal results therefrom having a frequency equal to the difference in the heterodyne frequencies and a phase associated with an equivalent wavelength equal to the product of the two laser wavelengths divided by the difference of the two wavelengths. According to U.S. Pat. No. 4,907,886 (cited above), the phase of the superheterodyne signal is assumed to be dependent only on the position of a measurement object and the equivalent wavelength. Therefore, this system is also not designed to measure or compensate for the fluctuations in the refractive index of air.

Further examples of the two-wavelength superheterodyne technique developed by Redman and Wall and by Dändliker and Heerburgg (cited above) are found in an article entitled "Two-wavelength double heterodyne interferometry using a matched grating technique," by Z. Sodnik, E. Fischer, T. Ittner, and H. J. Tiziani, Appl. Opt. 30(22), 3139-3144 (1991), and in an article entitled "Diode laser and fiber optics for dual-wavelength heterodyne interferometry," by S. Manhart and R. Maurer, SPIE 1319, 214-216 (1990). However, neither one of these examples addresses the problem of refractive index fluctuations.

It may be concluded from the foregoing that the prior art in heterodyne and superheterodyne interferometry does not provide a high speed method and corresponding means for measuring and compensating the optical path length effects of air in a measuring path, particularly effects due to fluctuations in the refractive index of air. This deficiency in the prior art results in significant measurement uncertainty, thus seriously affecting the precision of systems employing such interferometers as found for example in micro-lithographic fabrication of integrated circuits. Future interferometers will necessarily incorporate an inventive, new method and means for measuring and compensating a fluctuating refractive index in a measurement path comprised of a changing physical length.

One way to detect refractive index fluctuations is to measure changes in pressure and temperature along a measurement path and calculate the effect on the optical path length of the measurement path. Mathematical equations for effecting this calculation are disclosed in an article entitled "The Refractivity Of Air," by F. E. Jones, J. Res. NBS 86 (1), 27-32 (1981). An implementation of the technique is described in an article entitled "High-Accuracy Displacement Interferometry In Air," by W. T. Estler, Appl. Opt. 24(6), 808-815 (1985). Unfortunately, this technique provides only approximate values, is cumbersome, and corrects only for slow, global fluctuations in air density.

Another, more direct way to detect the effects of a fluctuating refractive index over a measurement path is by multiple-wavelength distance measurement. The basic principle may be understood as follows. Interferometers and laser radar measure the optical path length between a reference and an object, most often in open air. The optical path length is the integrated product of the refractive index and the physical path traversed by a measurement beam. In that the refractive index varies with wavelength, but the physical path is independent of wavelength, it is generally possible to determine the physical path length from the optical path length, particularly the contributions of fluctuations in refractive index, provided that the instrument employs at least two wavelengths. The variation of refractive index with wavelength is known in the art as dispersion, therefore this technique will be referred to hereinafter as the dispersion technique.

The dispersion technique for refractive index measurement has a long history, and predates the introduction of the laser. An article entitled "Long-Path Interferometry Through An Uncontrolled Atmosphere," by K. E. Erickson, JOSA 52(7), 781-787 (1962), describes the basic principles and provides an analysis of the feasibility of the technique for geophysical measurements. Additional theoretical proposals are found in an article entitled "Correction Of Optical Distance Measurements For The Fluctuating Atmospheric Index Of Refraction," by P. L. Bender and J. C. Owens, J. Geo. Res. 70(10), 2461-2462 (1965).

Commercial distance-measuring laser radar based on the dispersion technique for refractive index compensation appeared in the 1970's. An article entitled "Two-Laser Optical Distance-Measuring Instrument That Corrects For The Atmospheric Index Of Refraction," by K. B. Earnshaw and E. N. Hernandez, Appl. Opt. 11(4), 749-754 (1972), discloses an instrument employing microwave-modulated HeNe and HeCd lasers for operation over a 5 to 10 km measurement path. Further details of this instrument are found in an article entitled "Field Tests Of A Two-Laser (4416A and 6328A) Optical Distance-Measuring Instrument Correcting For The Atmospheric Index Of Refraction," by E. N. Hernandez and K. B. Earnshaw, J. Geo. Res. 77(35), 6994-6998 (1972). Further examples of applications of the dispersion technique are discussed in an article entitled "Distance Corrections For Single- And Dual-Color Lasers By Ray Tracing," by E. Berg and J. A. Carter, J. Geo. Res. 85(B11), 6513-6520 (1980), and in an article entitled "A Multi-Wavelength Distance-Measuring Instrument For Geophysical Experiments," by L. E. Slater and G. R. Huggett, J. Geo. Res. 81(35), 6299-6306 (1976).

Although instrumentation for geophysical measurements typically employs intensity-modulation laser radar, it is understood in the art that optical interference phase detection is more advantageous for shorter distances. In U.S. Pat. No. 3,647,302 issued in 1972 to R. B. Zipin and J. T. Zalusky, entitled "Apparatus For And Method Of Obtaining Precision Dimensional Measurements," there is disclosed an interferometric displacement-measuring system employing multiple wavelengths to compensate for variations in ambient conditions such as temperature, pressure, and humidity. The instrument is specifically designed for operation with a movable object, that is, with a variable physical path length. However, the phase-detection means of Zipin and Zalusky is insufficiently accurate for high-precision measurement.

A more modern and detailed example is the system described in an article by Y. Zhu, H. Matsumoto, T. O'ishi, SPIE 1319, Optics in Complex Systems, 538-539 (1990), entitled "Long-Arm Two-Color Interferometer For Measuring The Change Of Air Refractive Index." The system of Zhu *et al.* employs a 1064 nm wavelength YAG laser and an 632 nm HeNe laser together with quadrature phase detection. Substantially the same instrument is described in Japanese in an earlier article by Zhu et al. entitled "Measurement Of Atmospheric Phase And Intensity Turbulence For Long-Path Distance Interferometer," Proc. 3rd Meeting On Lightwave Sensing Technology, Appl. Phys. Soc. of Japan, 39 (1989). However, the interferometer of Zhu *et al.* has insufficient resolution for all applications, *e.g.* sub-micron interferometry for micro-lithography.

A recent attempt at high-precision interferometry for micro-lithography is represented by U.S. Pat. No. 4,948,254 issued to A. Ishida (1990). A similar device is described by Ishida in an article entitled "Two Wavelength Displacement-Measuring Interferometer Using Second-Harmonic Light To Eliminate Air-Turbulence-Induced Errors," Jpn. J. Appl. Phys. 28(3), L473-475 (1989). In the article, a displacement-measuring interferometer is disclosed which eliminates errors caused by fluctuations in the refractive index by means of two-wavelength dispersion detection. An Ar$^+$ laser source provides both wavelengths simultaneously by means of a frequency-doubling crystal known in the art as BBO. The use of a BBO doubling crystal results in two wavelengths that are fundamentally phase locked, thus greatly improving the stability and accuracy of the refractive index measurement. However, the phase detection means, which employ simple homodyne quadrature detection, are insufficient for high resolution phase measurement. Further, the phase detection and signal processing means are not suitable for dynamic measurements, in which the motion of the object results in rapid variations in phase that are difficult to detect accurately.

In U.S. Pat. No. 5,404,222 entitled "Interferometric Measuring System With Air Turbulence Compensation," issued to S. A. Lis (1995), there is disclosed a two-wavelength interferometer employing the dispersion technique for detecting and compensating refractive index fluctuations. This patent describes an interferometric measuring system which projects a first beam of light at a first measurement wavelength along a reference path to a reference reflector and a second beam of light at a second measurement wavelength along a measurement path to a measurement reflector, and determines a change in position of the measurement reflector from an interference pattern produced between a first light beam reflected from the reference reflector and a second light beam reflected from the measurement reflector. The system can measure atmospheric disturbances along the measurement path, concurrently with measuring a change in the position of the measurement reflector. A similar device is described by Lis in an article entitled "An Air Turbulence Compensated Interferometer For IC Manufacturing," SPIE 2440 (1995). Improvement on U. S. Pat. No. 5,404,222 by S. A. Lis is disclosed in U. S. Pat. No. 5,537,209, issued July 1996. The principal innovation of this system with respect to that taught by Ishida in *Jpn. J. Appl. Phys.* (cited above) is the addition of a second BBO doubling crystal to improve the precision of the phase detection means. The additional BBO crystal makes it possible to optically interfere two beams having wavelengths that are exactly a factor of two different. The resultant interference has a phase that is directly dependent on the refractive index but is substantially independent of stage motion. However, the system taught by Lis has the disadvantage that it is complicated and requires an additional BBO crystal for every measurement path. In that micro-lithography stages frequently involve six or more measurement paths, and that BBO can be relatively expensive, the additional crystals are a significant cost burden. An additional disadvantage of Lis' system is that it employs a low-speed (32-Hz) phase detection system based on the physical displacement of a PZT transducer.

U.S. Patent No. 4,802,764 describes a differential plane mirror interferometer comprising a source which emits a light beam containing two orthogonally polarized components of different frequencies; a source of a stabilized electrical reference signal of a frequency corresponding to a difference frequency between the two components of the light beam; a beamsplitter/beam folder assembly for converting the input beam into two separated, parallel, orthogonally polarized beams; a half-wave retardation plate located in one of the separated beams to produce two separated parallel beams with the same polarization; means including a polarizing beamsplitter for causing each of the separated parallel beams with the same polarization to be reflected twice by one of two plane mirrors to produce two parallel output beams with the same polarization; a half-wave retardation plate located in one of the separated parallel output beams, with the beamsplitter/beam folder assembly converting the two separated parallel orthogonally polarized output beams into a single output beam in which the phase difference between the two frequency components of the single output beam is directly proportional to the optical path length between the two plane mirrors; a polarizer for mixing the orthogonal components of the output beam; a photoelectric detector to produce the measurement signal; and a phase/meter accumulator to indicate the phase difference between the reference and measurement signals which is directly proportional to the changes in the optical path length between the two plane mirrors.

WO 99/18424, which was published only after the priority date of the present application, describes an interferometric apparatus for monitoring select intrinsic optical properties of a gas. The interferometric apparatus comprises: interferometer means; means for generating at least two light beams having different wavelengths; and means for introducing at least a portion of each of the light beams into the interferometer means. The interferometer means comprises a reference leg and a measurement leg, each of which has predetermined physical path lengths, the reference leg being occupied by a predetermined medium and the measurement leg being occupied by the gas being tested. Each beam portion travels through the predetermined medium and gas along predetermined paths of substantially the same physical path lengths, and portions of the beams emerge from the interferometer means as exit beams containing information about the respective optical path lengths through the predetermined medium in the reference leg and the gas in the measurement leg. The apparatus further comprising means for combining the exit beams to produce mixed optical signals containing information corresponding to the phase differences between each of the exit beams from corresponding ones of the predetermined paths of the reference and measurement legs; and means for detecting the mixed optical signals and generating electrical interference signals containing information corresponding to the refractivities of the gas at the different beam wavelengths Finally, the apparatus comprises electronic means for analyzing the interference signals and determining the select intrinsic optical properties of the gas.

It is clear from the foregoing, that the prior art does not provide a practical, high-speed, high-precision method and corresponding means for measuring refractive index of air and measuring and compensating for the optical path length effects of the air in a measuring path, particularly the effects due to fluctuations in the refractive index of the air. The limitations in the prior art arise principally from the following, unresolved technical difficulties: (1) Prior-art heterodyne and superheterodyne interferometers are limited in accuracy by fluctuations in the refractive index of air; (2) Prior-art dispersion techniques for measuring index fluctuations require extremely high accuracy in interference phase measurement, typically exceeding by an order of magnitude the typical accuracy of high-precision distance-measuring interferometers; (3) Obvious modifications to prior-art interferometers to improve phase-measuring accuracy would increase the measurement time to an extent incompatible with the rapidity of stage motion in modern microlithography equipment; (4) Prior-art dispersion techniques require at least two extremely stable laser sources, or a single source emitting multiple, phase-locked wavelengths; (5) Prior-art dispersion techniques in micro-lithography applications are sensitive to stage motion during the measurement, resulting in systematic errors; and (6) Prior-art dispersion techniques that employ doubling crystals (e.g. U. S. Pat. No. 5,404,222 to Lis) as part of the detection system are expensive and complicated.

These deficiencies in the prior art have led to the absence of any practical interferometric system for performing displacement measurement for micro-lithography in the presence of a gas in a measurement path where there are typically refractive index fluctuations and the measurement path is comprised of a changing physical length.

Accordingly, this invention seeks to provide a method and apparatus for rapidly and accurately measuring and monitoring the refractive index of a gas in a measurement path and/or the optical path length effects of the gas wherein the refractive index may be fluctuating and/or the physical length of the measurement path may be changing.

This invention also seeks to provide a method and apparatus for rapidly and accurately measuring and monitoring the refractive index of a gas in a measurement path and/or the optical path length effects of the gas wherein the accuracy of measurements and monitoring of the refractive index of the gas and/or of the optical path length effects of the gas are substantially not compromised by a rapid change in physical length of measurement path. The present method and apparatus does not require measurement and monitoring of environmental conditions such as temperature and pressure. The method and apparatus may use but do not require the use of two or more optical beams of differing wavelengths which are phase locked.

In the present method and apparatus the lengths of measuring paths in an interferometric measurement are substantially not used in a computation of the optical path length effects of the gas. Also, the frequencies of the optical beams used in an interferometric measurement and monitoring of the refractive index of a gas in a measurement path and/or the optical path length effects of the gas are substantially not used in a computation of the relative contribution of the optical path length effects of the gas.

The present invention provides an interferometric apparatus for measuring the effects of the refractive index of a gas in a measurement path, the apparatus comprising:

a source of at least two light beams having different wavelengths;
an interferometer having first and second measurement legs having optical paths structured and arranged such that at least one leg has a variable physical length and at least one leg is at least in part occupied by the gas, and one leg may at least in part be occupied by a predetermined medium, the optical path length difference between the first and second measurement legs varying in accordance with the difference between the respective physical length of their optical paths and the properties of the gas and the predetermined medium;
introduction means for introducing first and second predetermined portions of each of the light beams into the first and second measurement legs respectively, said first and second predetermined portions emerging from the interferometer as exit beams containing information about the respective optical path lengths through the first and second measurement legs at the wavelengths of the original beams;
mixing means for combining the exit beams to produce mixed optical signals containing information corresponding to the phase differences between the exit beams.

The apparatus of the invention is characterized in that beams at one of the wavelengths of the first and second predetermined portions travel through at least one of the first and second measurement legs along predetermined optical paths a different number of passes than beams of the other of the wavelengths of the first and second predetermined portions to compensate for the relative rates at which the physical path lengths of the first and second measurement legs are changing, and by detecting means for detecting the mixed optical signals and generating electrical interference signals containing information corresponding to the effects of the indices of refraction of the gas and the predetermined medium at the differing beam wavelengths and the relative physical path lengths of the first and second measurement legs and their relative rates of change; and electronic means for analyzing the electrical interference signals to determine the effects of the gas in the measurement legs.

This invention also provides an interferometric method for measuring the effects of the refractive index of a gas in a measurement path, the method comprising:

generating light beams having differing wavelengths;

providing an interferometer having first and second measurement legs having optical paths structured and arranged such that at least one leg has a variable physical length and at least one leg is at least in part occupied by the gas and the other leg may at least in part be occupied by a predetermined medium, the optical path length difference between the first and second measurement legs varying in accordance with the respective physical lengths of their optical paths and the properties of the gas and the predetermined medium;

introducing first and second predetermined portions of each of the light beams into the first and second measurement legs so that the first and second predetermined portions emerge from the interferometer as exit beams containing information about the respective optical path lengths through the first and second measurements legs at the wavelengths of the original beams; and

combining the exit beams to produce mixed optical signals containing information corresponding to the phase differences between the exit beams.

The method is characterized in that beams at one of the wavelengths of the first and second predetermined portions travel through at least one of the first and second measurement legs along predetermined optical paths a different number of passes than beams of the other of the wavelengths of the first and second predetermined portions to compensate for the relative rates at which the physical path lengths of the first and second measurement legs are changing, and by detecting the mixed optical signals and generating electrical interference signals containing information corresponding to the effects of the indices of refraction of the gas and the predetermined medium at the differing wavelengths and the relative physical path lengths of the first and second measurement legs and their relative rates of change, and electronically analyzing the electrical interference signals to determine the effects of the gas in the measurement legs.

The present invention generally relates to apparatus and methods for measuring and monitoring the refractive index of a gas in a measurement path and/or the change in optical path length of the measurement path due to the gas wherein the refractive index of the gas may be fluctuating, e.g. the gas is turbulent, and/or the physical length of the measuring path may be changing. The present invention also relates to apparatus and methods for use in electro-optical metrology and other applications. More specifically, the invention operates to provide measurements of dispersion of the refractive index, the dispersion being substantially proportional to the density of the gas, and/or measurements of dispersion of the optical path length, the dispersion of the optical path length being related to the dispersion of the refractive index and the physical length of the measurement path. The refractive index of the gas and/or the optical path length effects of the gas are subsequently computed from the measured dispersion of the refractive index and/or the measured dispersion of the optical path length, respectively. The information generated by the inventive apparatus is particularly suitable for use in interferometric distance measuring instruments (DMI) to compensate for errors related to refractive index of gas in at least one measurement path brought about by environmental effects and turbulence induced by rapid stage slew rates.

Several embodiments of the invention have been made and these fall broadly into two categories that address the need for more or less precision in final measurements. While the various embodiments share common features, they differ in some details to achieve individual goals.

In general, the inventive apparatus comprises interferometer means having first and second measurement legs at least one of which has a variable length and at least one of which is at least in part occupied by the gas. In preferred embodiments one of the measurement legs is a reference leg and the other a measurement leg. The constituent legs are preferably configured and arranged so that the measurement leg has a portion of its optical path length substantially the same as the optical path length of the reference leg. The gas in the remaining portion of the optical path of the measurement leg in a typical interferometric DMI application is air.

Means for generating at least two light beams having different wavelengths are included. In preferred embodiments, a source generates a set of light beams, the set of light beams being comprised of at least two light beams, each beam of the set of light beams having a different wavelength. The relationship between the wavelengths of the beams of the set of light beams, the approximate relationship, is known.

A set of frequency-shifted light beams is generated from the set of light beams by introducing at least one frequency difference between two orthogonally polarized components of each beam of the set of light beams. In certain of the embodiments, no two beams of the set of frequency-shifted light beams have the same frequency difference while in certain other of the embodiments, at least two of the beams of the set of frequency-shifted beams have the same frequency difference. For a given embodiment, the ratios of the wavelengths are the same as the known approximate relationship to relative precisions, which depend on chosen operating wavelengths and the corresponding known approximate relationship. Because of this wavelength dependence, these relative precisions are referred to as the respective relative precisions of the ratios of the wavelengths. In a number of embodiments, the respective relative precisions of the ratios of wavelengths are of an order of magnitude less than the respective dispersions of the gas times the relative precision required for the measurement of the respective refractive indices of the gas and/9or for the measurement of the respective changes in the optical path length of the measurement leg due to the gas.

In certain ones of the embodiments, the approximate relationship is expressed as a sequence of ratios, each ratio comprising a ratio of low order non-zero integers, *e.g.* 2/1, to respective relative precisions, the respective relative precisions of the sequence of ratios, wherein a respective relative precision of the respective relative precisions of the sequence of ratios is of an order of magnitude less than the respective dispersion of the gas times the respective relative precision required for the measurement of the respective refractive index of the gas and/or for the measurement of the respective change in the optical path length of the measurement leg due to the gas.

In other embodiments, where the respective relative precisions of the ratios of the wavelengths is inappropriate with respect to the desired value, means are provided for monitoring the ratios of the wavelengths and either providing feedback to control the respective relative precisions of the ratios of the wavelengths, information to correct subsequent calculations influenced by undesirable departures of the respective relative precisions of the ratios of the wavelengths from the desired respective relative precisions of the ratios of the wavelengths, or some combination of both. Means are also provided for monitoring the wavelength used in the primary objective of DMI, i.e., the determination of a change in a length of the measurement path.

At least a portion of each of the frequency-shifted light beams is introduced into the interferometer means by suitable optical means so that a first portion of at least a portion of each frequency-shifted light beam travels through the reference leg along predetermined paths of the reference leg and a second portion of at least a portion of each frequency-shifted light beam travels through the measurement leg along predetermined paths of the measurement leg, the first and second portions of at least a portion of each frequency-shifted light beam being different. Afterwards, the first and second portions of at least a portion of each frequency-shifted light beam emerge from the interferometer means as exit beams containing information about the optical path length through the predetermined paths in the reference leg and the optical path length through the predetermined paths in the measurement leg. In one of the embodiments, three sets of first and second portions of at least a portion of each frequency-shifted light beam are generated, one set at one wavelength and two sets at another wavelength.

In yet another embodiment, the optical means are configured to cause certain ones of the at least a portion of each of the frequency-shifted light beams to undergo multiple passes as they travel through the reference and measurement legs and to cause additional certain ones of the at least a portion of each of the frequency-shifted light beams to undergo multiple passes as they travel through the reference and measurement legs, the number of multiple passes for the certain ones being different from the number of multiple passes for the additional certain ones.

More generally, first and second predetermined portions of the light beams travel through a first and second measurement legs along predetermined optical paths a different number of passes to compensate for the relative rates at which the physical path lengths of the first and second measurement legs are changing

Combining means are provided for receiving the exit beams to produce mixed optical signals which contain information corresponding to the phase differences between the exit beams of the first and second portions of at least a portion of each frequency-shifted light beam. The mixed optical signals are then sensed by a photodetector, preferably by photoelectric detection, which operates to generate electrical interference signals that contain information corresponding to the refractive index of the gas at the different beam wavelengths and to the optical path length in the measurement leg due to the refractive index of the gas at the different beam wavelengths.

The electrical interference signals are then analyzed by electronic means that operate to determine the dispersion of the optical path length of the measurement leg substantially due to the dispersion of the refractive index of the gas and/or the dispersion $(n_i-n_j)$ of the gas where $i$ and $j$ are integers corresponding to wavelengths and different from one another. From this information and the reciprocal dispersive power of the gas, the refractivity of the gas, $(n_r-1)$ where $r$ is an integer corresponding to a wavelength, and/or the contribution to the optical path length of the measurement leg due to the refractive index of the gas can also be determined by the electronic means. The value of $r$ may be different from $i$ and $j$ or equal to either $i$ or $j$. The electronic means can comprise electronic means in the form of a microprocessor or a general purpose computer suitably programmed in well-known ways to perform the needed calculations.

In preferred form, the electrical interference signals comprise heterodyne signals containing phase information corresponding to the refractive index of the gas and to the optical path length of the measurement leg and the apparatus further comprises means to determine the phases of the heterodyne signals to generate phase information corresponding to the dispersion of the refractive index of the gas and to the dispersion of the optical path length of .the measurement leg due to the dispersion of the refractive index of the gas. In certain of the embodiments, the apparatus further comprises means for mixing, *i.e.* multiplying, the heterodyne signals to generate at least one superheterodyne signal containing phase corresponding to the dispersion of the refractive index of the gas and to the dispersion of the optical path length of the measurement leg due to the dispersion of the refractive index of the gas. Means are also included for resolving phase ambiguities of the heterodyne signals and the superheterodyne signals generated in certain of the embodiments. Depending on the details of the optical paths experienced by the light beam portions as they travel through the interferometer means of the various embodiments, additional or different electronics are provided. In the foregoing manner, the electronic means operates to ameliorate any effects on calculations due to the rate at which the physical path length of the measurement leg occupied by the gas is changing.

While the inventive method disclosed may be carried out using the preferred apparatus described, it will be evident that it may also be practiced using other well-known apparatus. In addition, it is shown that apparatus may be employed which uses homodyne signals.

The structure and operation of the invention, together with other objects and advantages thereof, may best be understood by reading the detailed description in conjunction with the drawings wherein the invention's parts have an assigned reference numeral that is used to identify them in all of the drawings in which they appear and wherein:

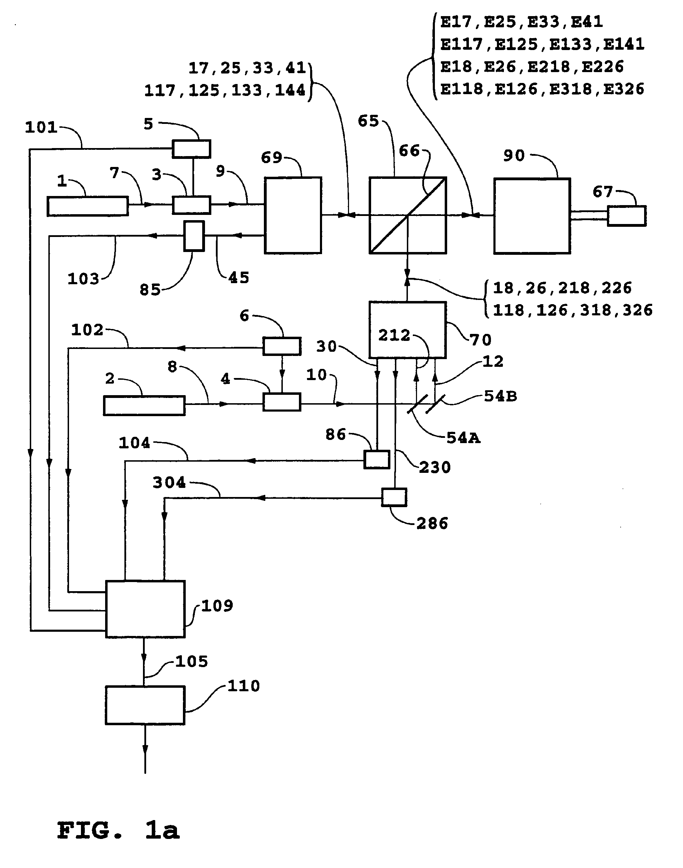

FIGS. 1a-1f taken together illustrate, in diagrammatic form, the presently preferred first embodiment of the present invention with FIG. 1a showing optical paths between source **1,** modulator **3,** source **2,** modulator **4,** differential plane mirror interferometer **69,** differential plane mirror interferometer group **70,** beam splitter **65,** external mirror system **90,** and detectors **85, 86,** and **286** and the paths of electrical signals between driver **5,** modulator **3,** driver **6,** modulator **4,** detectors **85, 86,** and **286,** electronic processor **109,** and computer **110;**

FIG. **1b** illustrates differential plane mirror interferometer **69;**

FIG. **1c** illustrates differential plane mirror interferometer group **70;**

FIG. **1d** illustrates external mirror system **90,** furnishing the external mirrors for differential plane mirror interferometer **69,** and stage translator **67;**

FIG. **1e** illustrates external mirror system **90,** furnishing the external mirrors for differential plane mirror interferometer group **70,** and stage translator **67;**

FIG. **1f** is a drawing showing a block diagram of the processing electronics **109;**

FIG. **1g** is a drawing showing a block diagram of the processing electronics **109A** for the second variant of the first embodiment;

FIGS. **2a-2c** taken together illustrate, in diagrammatic form, the presently preferred second embodiment of the present invention with FIG. **2a** showing optical paths and the paths of electrical signals wherein elements of the second embodiment perform like operations as like numbered elements of the first embodiment;

FIG. **2b** illustrates differential plane mirror interferometer **170;**

FIG. **2c** is a drawing showing a block diagram of the processing electronics **209;**

FIG. **2d** is a drawing showing a block diagram of the processing electronics **209A** for the first variant of the second embodiment;

FIG. **2e** is a drawing showing a block diagram of the processing electronics **209B** for the second variant of the second embodiment;

FIG. **2f** is a drawing showing a block diagram of the processing electronics **209C** for the third variant of the second embodiment;

FIGS. **3a-3g** taken together illustrate, in diagrammatic form, the presently preferred third embodiment of the present invention with FIG. **3a** showing optical paths and the paths of electrical signals wherein elements of the third embodiment perform like operations as like numbered elements of the first embodiment;

FIG. **3b** illustrates differential plane mirror interferometer **369** for the case of light beam **9** entering differential plane mirror interferometer **369;**

FIG. **3c** illustrates differential plane mirror interferometer **369** for the case of light beam **445** exiting differential plane mirror interferometer **369;**

FIG. **3d** illustrates differential plane mirror interferometer **270;**

FIG. **3e** illustrates external mirror system **90,** furnishing the external mirrors for differential plane mirror interferometer **369,** and stage translator **67;**

FIG. **3f** illustrates external mirror system **90,** furnishing the external mirrors for differential plane mirror interferometer group **270,** and stage translator **67;**

FIG. **3g** is a drawing showing a block diagram of the processing electronics **309;**

FIGS. **4a-4d** taken together illustrate, in diagrammatic form, the presently preferred fourth embodiment of the present invention with FIG. **4a** showing optical paths and electronic paths of apparatus comprised in part of the same apparatus as for the first preferred embodiment and optical paths and electronic paths of apparatus for determination

of $\chi$ and $K/\chi$ wherein a number of elements perform analogous operations as like numbered elements of apparatus of the first preferred embodiment, apart from the suffix **"b"**;

FIG. **4b** illustrates the external mirror system **90b,** furnishing the external mirrors for differential plane mirror interferometer **69b;**

FIG. **4c** illustrates the external mirror system **90b** furnishing the external mirrors for differential plane mirror interferometer group **70b;**

FIG. **4d** is a drawing showing a block diagram of the processing electronics **109b;**

Fig. **5** is a high-level flowchart depicting various steps carried out in practicing a method in accordance with the invention;

FIG. **6a-6c** relate to lithography and its application to manufacturing integrated circuits wherein FIG. **6a** is a schematic drawing of a lithography exposure system employing the interferometry system.

FIGS. **6b** and **6c** are flow charts describing steps in manufacturing integrated circuits; and

FIG. **7** is a schematic of a beam writing system employing the interferometry system.

The present invention relates to apparatus and methods by which the refractivity of a gas in at least one measurement path and/or the change in the optical path length of the measurement path due to the gas may be quickly measured and used in subsequent downstream or contemporaneous applications wherein either or both the refractive index of the gas and the physical length of the measurement path may be changing. An example of a contemporaneous application is in an interferometric distance measuring instrument to enhance accuracy by compensating for the effects of the refractive index of the gas in the measurement path, especially changes in the optical path length that take place during the measuring period because of changing environmental conditions or air turbulence induced in the measurement path by rapid stage slew rates.

A number of different embodiments of the apparatus of the invention are shown and described. While they differ in some details, the disclosed embodiments otherwise share many common elements and naturally fall into two categories depending on the degree of control demanded of their light sources. As will be seen, the disclosed embodiments within each category also differ in the details of how their interferometric optical paths are implemented and/or how certain information signals are handled electronically.

The first group of embodiments to be described comprise three embodiments and variants thereof. This group is intended for applications where the stability of the adopted light sources is sufficient and the ratio of the wavelengths of the light beams generated by the adopted light sources is matched to a sequence of known ratio values with respective relative precisions sufficient to meet the required precision imposed on the output data by the final end use application.

The second group of embodiments also comprise three embodiments and variants thereof, and these are particularly suitable for use where it is necessary to monitor the stability of the light sources and measure the ratios of the wavelengths of the light beams generated by the adopted light sources to meet performance requirements on accuracy. For both groups, apparatus is disclosed for dealing with phase ambiguities and phase and group delays that may arise in analyzing homodyne, heterodyne, and/or superheterodyne signals, and methods are disclosed for implementing the steps of the invention.

An unusual and inventive characteristic of the different variants of the embodiments of the apparatus of the present invention is displayed in an example wherein the beam of one wavelength $\lambda_1$ effectively experiences a phase shift proportional to $2p$ times the round-trip physical length of a measurement path times the index of refraction $n_1$ at $\lambda_1$ $p$ being an integer, whereas a second beam of wavelength $\lambda_2$ effectively experiences a phase shift proportional to $p$ times the round-trip physical length of the measurement path times the index of refraction $n_2$ at $\lambda_2$, the first wavelength being approximately twice that of the second wavelength. As a consequence of the first beam effectively experiencing a multiple pass of $2p$ passes through the measurement path and the second beam effectively experiencing a multiple pass of $p$ passes through the measurement path, the optical path lengths for the two beams are approximately the same thereby enhancing the relative effect of differences due to the refractivity of the gas. Moreover, the Doppler shifts for the two beams are approximately the same thereby reducing the effects of differences in group delays experienced by interference signals. Multiple-pass interferometers are known in the art as a means of improving measurement resolution, for example, as described in an article entitled "Double-passed two-beam interferometers" by P. Hariharan and D. Sen, J. Opt. Soc. Am. 50, 357-361 (1960); however, the inventive combination of a $p$-pass and $2p$-pass interferometer in the same system for the purpose of measuring the amount of gas and compensation for gas in the measurement path is not known to the applicants and is taught herein for the first time in the art. Apparatus for achieving such an inventive combination are described in the following paragraphs. While the preferred embodiments are set forth in terms of a reference path and a measurement path, it will be apparent that both paths may be measurement paths of variable length where at least one of them is at least in part occupied by a gas.

FIGS. **1a-1f** depict in schematic form one preferred embodiment of the present invention for measuring and monitoring the refractivity of a gas in a measurement path and/or the change in the optical path length of the measurement path due to the gas wherein either or both the refractive index of the gas and the physical length of the measurement path may be changing, where the stability of the adopted light sources is sufficient, and the ratio of the wavelengths of the light beams generated by the adopted light sources is matched to a known ratio value with a relative precision sufficient to meet the required precision imposed on the output data by the final end use application. While the apparatus has application for a wide range of radiation sources, the following description is taken by way of example with respect to an optical measuring system.

Referring to FIG. **1a** and in accordance with the preferred apparatus and method of the first preferred embodiment of the present invention, a light beam **7** emitted from source **1** passes through a modulator **3** becoming light beam **9**. Modulator **3** is excited by a driver **5**. Source **1** is preferably a laser or like source of coherent radiation, preferably polarized, and having a wavelength $\lambda_1$. Modulator **3** may for example be an acousto-optical device or a combination of acousto-optical devices with additional optics for selectively modulating polarization components of beam **7**. Modulator **3** preferably shifts the oscillation frequency of one linearly polarized component of beam **7** an amount $f_1$ with respect to an orthogonally linearly polarized component, the directions of polarizations of the components denoted herein as *x* and *y*. In the following description of the first embodiment, it will be assumed that the *x* polarization component of beam **9** has an oscillation frequency shifted an amount $f_1$ with respect to the *y* polarization component of beam **9** without departing from the spirit or scope of the present invention. The oscillation frequency $f_1$ is determined by the driver **5**.

In a next step, a light beam **8** emitted from a source **2** passes through a modulator **4** becoming light beam **10**. Modulator **4** is excited by a driver **6**, similar to modulator **3** and driver **5**, respectively. Source **2**, similar to source **1**, is preferably a laser or like source of polarized, coherent radiation, but preferably at a different wavelength, $\lambda_2$, wherein the ratio of the wavelengths ($\lambda_1/\lambda_2$) has a known approximate ratio value $l_1 l_2$, *i.e.*

$$(\lambda_1/\lambda_2) \cong (l_1/l_2) \quad , \qquad\qquad (1)$$

where $l_1$ and $l_2$ may assume integer and non-integer values, and the ratio of the wavelengths ($\lambda_1/\lambda_2$) is the same as the ratio value $l_1/l_2$ to a relative precision of an order of magnitude or more less than the dispersion of the refractive index of the gas, ($n_2-n_1$), times the relative precision $\varepsilon$ desired for the measurement of the refractivity of the gas or of the change in the optical path length of the measurement leg due to the gas. The *x* polarized component of beam **10** has an oscillation frequency shifted an amount $f_2$ with respect to the *y* polarized component of beam **10**. The oscillation frequency $f_2$ is determined by the driver **6**. In addition, the directions of the frequency shifts of the *x* components of beams **9** and **10** are the same.

It will be appreciated by those skilled in the art that beams **7** and **8** may be provided alternatively by a single laser source emitting more than one wavelength, by a single laser source combined with optical frequency doubling means to achieve frequency doubling, tripling, quadrupling, *etc.*, two laser sources of differing wavelengths combined with sum-frequency generation or difference-frequency generation, or any equivalent source configuration capable of generating light beams of two or more wavelengths.

A laser source, for example, can be a gas laser, *e.g.* a HeNe, stabilized in any of a variety of conventional techniques known to those skilled in the art, see for example, T. Baer et al., "Frequency Stabilization of a 0.633 $\mu$m He-Ne-longitudinal Zeeman Laser," Applied Optics, 19, 3173-3177 (1980); Burgwald et al., U.S. Pat. No. 3,889,207, issued June 10, 1975; and Sandstrom et al., U.S. Pat. No. 3,662,279, issued May 9, 1972. Alternatively, the laser can be a diode laser frequency stabilized by one of a variety of conventional techniques known to those skilled in the art, see, for example, T. Okoshi and K. Kikuchi, "Frequency Stabilization of Semiconductor Lasers for Heterodyne-type Optical Communication Systems," Electronic Letters, 16, 179-181 (1980) and S. Yamaqguchi and M. Suzuki, "Simultaneous Stabilization of the Frequency and Power of an AlGaAs Semiconductor Laser by Use of the Optogalvanic Effect of Krypton," IEEE J. Quantum Electronics, QE-19, 1514-1519 (1983).

It will also be appreciated by those skilled in the art that the two optical frequencies of beam **9** and of beam 10 may be produced by any of a variety of frequency modulation apparatus and/or lasers: (1) use of a Zeeman split laser, see for example, Bagley et al., U.S. Patent No. 3,458,259, issued Jul. 29, 1969; G. Bouwhuis, "Interferometrie Mit Gaslasers," Ned. T. Natuurk, 34, 225-232 (Aug. 1968); Bagley et al., U.S. Patent No. 3,656,853, issued Apr. 18, 1972; and H. Matsumoto, "Recent interferometric measurements using stabilized lasers," Precision Engineering, 6(2), 87-94 (1984); (2) use of a pair of acousto-optical Bragg cells, see for example, Y. Ohtsuka and K. Itoh, "Two-frequency Laser Interferometer for Small Displacement Measurements in a Low Frequency Range," Applied Optics, 18(2), 219-224 (1979); N. Massie et al., "Measuring Laser Flow Fields With a 64-Channel Heterodyne Interferometer," Applied Optics, 22(14), 2141-2151 (1983); Y. Ohtsuka and M. Tsubokawa, "Dynamic Two-frequency Interferometry for Small Displacement Measurements," Optics and Laser Technology, 16, 25-29 (1984); H. Matsumoto, *ibid*.; P. Dirksen, et al., U.S. Patent No. 5,485,272, issued Jan. 16, 1996; N. A. Riza and M. M. K. Howlader, "Acousto-optic system for the generation and control of tunable low-frequency signals," Opt. Eng., 35(4), 920-925 (1996); (3) use of a single acousto-optic Bragg cell, see for example, G. E. Sommargren, commonly owned U.S. Patent No. 4,684,828, issued Aug. 4, 1987; G. E. Sommargren, commonly owned U.S. Patent No. 4,687,958, issued Aug. 18, 1987; P. Dirksen, *et al*., *ibid*.; (4) use of two longitudinal modes of a randomly polarized HeNe laser, see for example, J. B. Ferguson and R. H. Morris, "Single Mode Collapse in 6328 A HeNe Lasers," Applied Optics, 17(18), 2924-2929 (1978); or (5) use of birefringent elements or the like internal to the laser, see for example, V. Evtuhov and A. E. Siegman, "A 'Twisted-Mode' Technique for Obtaining Axially Uniform Energy Density in a Laser Cavity," Applied Optics, 4(1), 142-143 (1965).

The specific device used for the sources of beams **7** and **8** will determine the diameter and divergence of beams **7** and **8,** respectively. For some sources, *e.g*., a diode laser, it will likely be necessary to use conventional beam shaping optics, *e.g*., a conventional microscope objective, to provide beams **7** and **8** with a suitable diameter and divergence for the elements that follow. When the source is a HeNe laser, for example, beam shaping optics may not be required.

It will be further appreciated by those skilled in the art that both the *x* and *y* polarization components of beam **9** and/or of beam **10** may be frequency shifted without departing from the scope and spirit of the invention, $f_1$ remaining the difference in frequencies of the *x* and *y* polarization components of beam **9** and $f_2$ remaining the difference in frequencies of the *x* and *y* polarization components of beam **10.** Improved isolation of an interferometer and a laser source is generally possible by frequency shifting both *x* and *y* polarization components of a beam, the degree of improved isolation depending on the means used for generating the frequency shifts.

In a next step, a portion of beam **10** is reflected by a beam splitter **54A,** preferably a nonpolarizing type, as beam **212,** and a second portion of beam **10** is transmitted by beam splitter **54A** and subsequently reflected by mirror **54B** becoming beam **12.** Beam **9** is incident on differential plane mirror.interferometer **69** and beams **12** and **212** are incident on differential plane mirror interferometer group **70** comprising two differential plane mirror interferometers. Differential plane mirror interferometer **69** and differential plane mirror interferometer group **70** with beam splitter **65** and external mirrors furnished by external mirror system **90** comprise means for introducing a phase shift $\varphi_1$ between the *x* and *y* components of beam **9,** a phase shift $\varphi_2$ between the *x* and *y* components of beam **12,** and a phase shift $\varphi_3$ between the *x* and *y* components of beam **212.** External plane mirror system 90 may be connected to a photolithographic apparatus 67 of one of the types described hereinafter or other downstream application.

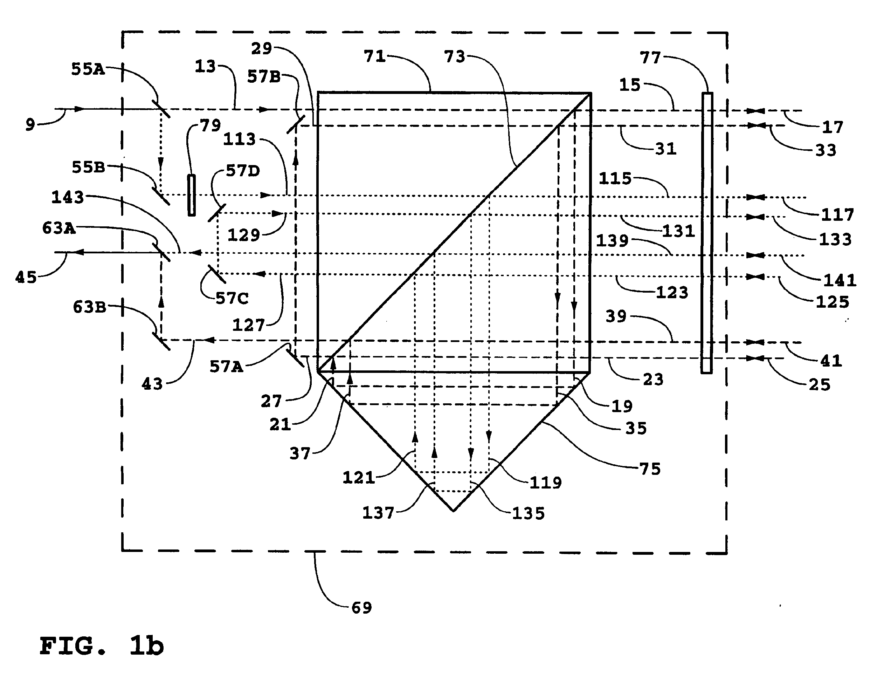

A differential plane mirror interferometer measures the optical path changes between two external plane mirrors. In addition, it is insensitive to thermal and mechanical disturbances that may occur in the interferometer beam splitting cube and associated optical components. Differential plane mirror interferometer **69** as shown in FIG. **1b** has eight exit/ return beams **17, 25, 33, 41, 117, 125, 133,** and **141.** Beams **17, 25, 33,** and **41** originating from one frequency component of beam **9,** the first frequency component, comprise beams for a reference leg and beams **117, 125, 133,** and **141** originating from a second frequency component of beam **9** comprise beams for a measurement leg. Beams for which the first frequency component of beam **9** is the sole progenitor are indicated in FIG. **1b** by dashed lines and beams for which the second frequency component of beam **9** is the sole progenitor are indicated in FIG. **1b** by dotted lines.

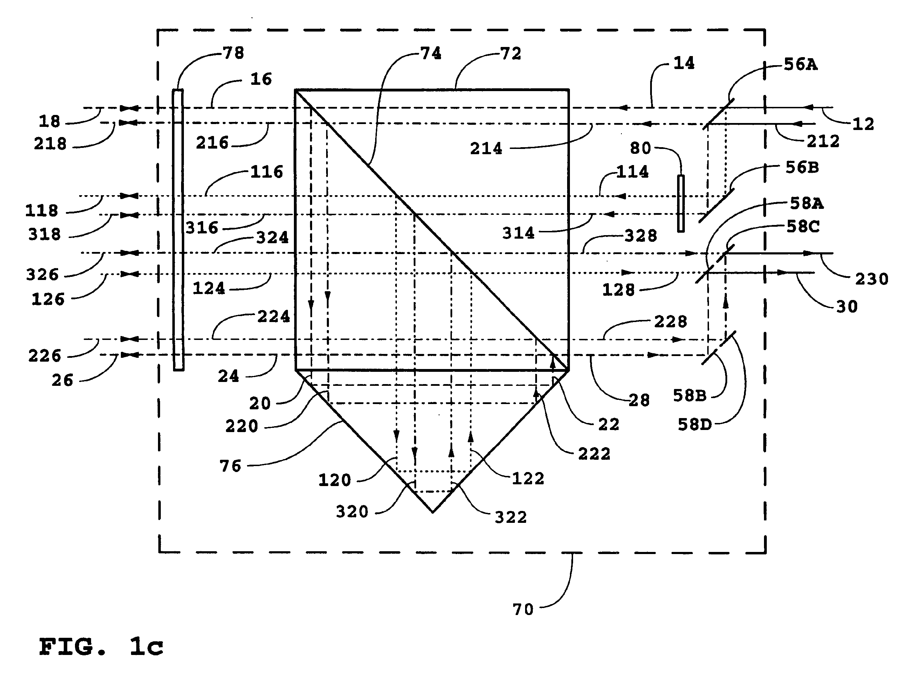

One differential plane mirror interferometer of differential plane mirror interferometer group **70** has four exit/ return beams **18, 26, 118,** and **126** (See Fig. 1c). Beams **18** and **26** originating from one frequency component, a first frequency component, of beam **12** comprise beams for a reference leg and beams **118** and **126** originating from a second frequency component of beam **12** comprise beams for a measurement leg. Beams for which the first frequency component of beam **12** is the sole progenitor are indicated in FIG. **1c** by dashed lines and beams for which the second frequency component of beam **12** is the sole progenitor are indicated in FIG. **1c** by dotted lines. A second differential plane mirror interferometer of differential plane mirror interferometer group **70** has four exit/return beams **218, 226, 318,** and **326.** Beams **218** and **226** originating from one frequency component, a first frequency component, of beam **212** comprise beams for a reference leg and beams **318** and **326** originating from a second frequency component of beam **212** comprise beams for a measurement leg. Beams for which the first frequency component of beam **212** is the sole progenitor are indicated in FIG. **1c** by lines comprised of alternating dots and dashes and beams for which the second frequency component of beam **212** is the sole progenitor are indicated in FIG. **1c** by lines comprised of alternating dot pairs and dashes.

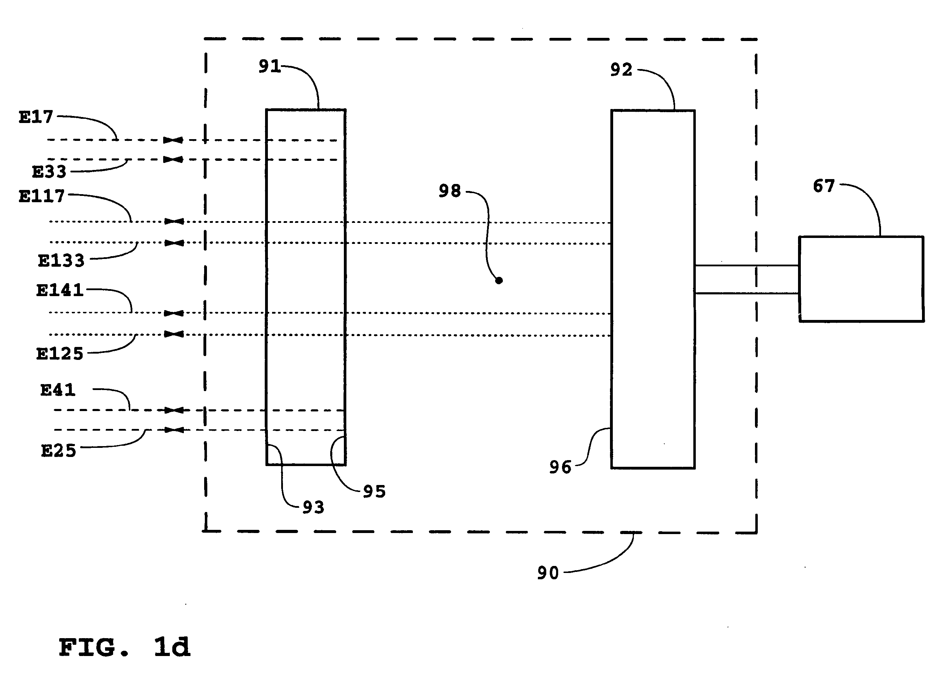

Beams **17, 25, 33, 41, 117, 125, 133,** and **141** are incident on beam splitter 65 (Fig. 1a) and are transmitted by coating 66, preferably a dichroic coating, as beams **E17, E25, E33, E41, E117, E125, E133,** and **E141,** respectively. Beams **E17, E25, E33, E41, E117, E125, E133,** and **E141** are incident on external mirror system 90, illustrated in detail in FIG. **1d**, which results in beams **43** and **143** (Fig. 1b). Beams **143** and **43** contain information at wavelength $\lambda_1$ about the optical path length through the gas in measuring path of external mirror system 90 and about the optical path length through a reference path, respectively.

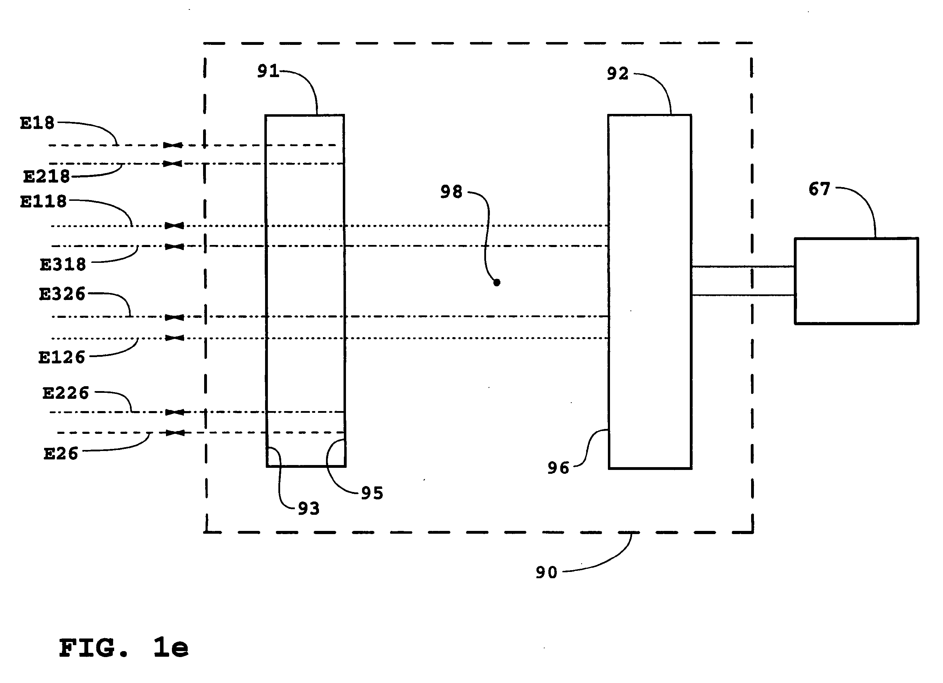

Likewise, beams **18, 26, 118, 126, 218, 226, 318,** and **326** are incident on beam splitter **65** and are reflected by dichroic coating **66** as beams **E18, E26, E118, E126, E218, E226, E318,** and **E326,** respectively. Beams **E18, E26, E118, E126, E218, E226, E318,** and **E326** are incident on external mirror system **90,** illustrated in FIG. **1e,** which results in beams **28, 128, 228,** and **328,** respectively (Fig. 1c). Beams **128** and **328** contain information at wavelength $\lambda_2$ about optical path lengths through the gas in the measuring path of external mirror system **90,** and beams **28** and **128** contain

information at wavelength $\lambda_2$ about optical path lengths through a reference path.

Beam **43** is reflected by mirror **63B,** a portion of which is reflected by beam splitter **63A,** preferably a nonpolarizing type, to become one component of beam **45** (Fig. 1b). A portion of beam **143** is transmitted by beam splitter **63A** to become a second component of beam **45.** Beam **45** is a mixed beam, the first and second components of beam **45** having the same linear polarizations. Beam **45** exits the differential plane mirror interferometer **69.**

Beam **28** (Fig. 1c) is reflected by mirror **58B,** a portion of which is reflected by beam splitter **58A,** preferably a nonpolarizing beam splitter, to become a first component of beam **30.** A portion of beam **128** is transmitted by beam splitter **58A** to become a second component of beam **30.** Beam **30** is a mixed beam, the first and second components of beam **30** having the same linear polarizations.

Beam **228** is reflected by mirror **58D,** a portion of which is reflected by beam splitter **58C,** preferably a nonpolarizing beam splitter, to become a first component of beam **230.** A portion of beam **328** is transmitted by beam splitter **58C** to became a second component of beam **230.** Beam **230** is a mixed beam, the first and second components of beam **230** having the same linear polarizations. Beams **30** and **230** exit differential plane mirror interferometer group **70.**

The magnitude of phase shifts $\varphi_1$, $\varphi_2$, and $\varphi_3$ are related to the difference $L_i$ between the round-trip physical length of path $i$ of measurement path **98** and of reference paths shown in FIGS. **1a-1e** according to the formulae

$$\varphi_1(t) = \sum_{i=1}^{i=p_1} \varphi_{1,i}(t_i) = \sum_{i=1}^{i=p_1} L_i(t_i) k_1 n_{1i} + \zeta_1 \quad ,$$

$$\varphi_2(t) = \sum_{i=1}^{i=p_2} \varphi_{2,i}(t_i) = \sum_{i=1}^{i=p_2} L_i(t_i) k_2 n_{2i} + \zeta_2 \quad , \tag{2}$$

$$\varphi_3(t) = \sum_{i=p_2+1}^{i=p_1} \varphi_{3,i}(t_i) = \sum_{i=p_2+1}^{i=p_1} L_i(t_i) k_2 n_{2i} + \zeta_3 \quad ,$$

for the case of $p_1 = 2p_2$ where $n_{ji}$ are the refractive indices of gas in path $i$ of measurement path **98** corresponding to wavenumber $k_j = (2\pi)/\lambda_j$. The nominal value for $L_i$ corresponds to twice the spatial separation of mirror surfaces **95** and **96** in external mirror system **90** (*cf.* FIGS. **1d** and **1e**). The phase offsets $\zeta_\ell$ comprise all contributions to the phase shifts $\varphi_\ell$ that are not related to the measurement path **98** or reference paths. To those skilled in the art, the generalization to case when $p_1 \neq 2p_2$ is a straight forward procedure. In FIGS. **1b-1e,** differential plane mirror interferometer **69,** differential plane mirror interferometer group **70,** beam splitter **65,** and external mirror system **90** are configured so that $p_1 = 4$ and $p_2 = 2$, respectively, so as to illustrate in the simplest manner the function of the apparatus of the first preferred embodiment of the present invention.

Eqs. (2) are valid for the case where the combined paths for one wavelength and the combined paths for the second wavelength are substantially coextensive, a case chosen to illustrate in the simplest manner the function of the invention in the first embodiment. To those skilled in the art, the generalization to the case where the respective combined paths for the two different wavelengths are not substantially coextensive is a straight forward procedure.

Cyclic errors that produce non-linearities in distance measuring interferometry (*cf.* the cited articles by Bobroff) have been omitted in Eqs. (2). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer [M. Tanaka, T. Yamagami, and K. Nakayama, "Linear Interpolation of Periodic Error in a Heterodyne Laser Interferometer at Subnanometer Levels," IEEE Trans. Instrum. and Meas., 38(2), 552-554, 1989] and light beam sources with reduced polarization and/or frequency mixing. The technique of separated beams in the interferometer is incorporated for example in the first embodiment as shown in FIGS. **1a-1e.**

The average time delay for a light beam to travel from the mirror **92** of external mirror system **90** to the point where the respective measurement and reference beams are mixed will in general be different for the light beams of differing wavelengths since the number of multiple passes for one light beam with a first wavelength being different from the number of multiple passes for a light beam with a second wavelength, the first and second wavelengths being different. The effect of the differences in the average time delay for light beams of differing wavelengths has been omitted in Eqs. (2) so as to not unduly complicate the description of the first embodiment.

The effect of the differences in the average time delay for light beams of differing wavelengths on the differences of respective phases is a second order effect, the effect being proportional to the velocity of the mirror **92** of external mirror system **90** and to approximately the instantaneous average value for $L_i$. For a speed of motion of the mirror **92** of 2 m/s and a instantaneous average value of $L_i$ of 2m, the differences of respective phases is approximately 1 radian. Such phase differences occur at low frequencies, typically less than or of the order of 10Hz. It will be apparent to those skilled in the art that such phase differences, the effect of the differences in the average time delay for light beams of differing wavelengths, can be modeled and compensated with knowledge of the velocity of the mirror **92** and the approximate instantaneous average value for $L_i$ in subsequent signal processing to the required precision imposed on the output data by the final end use application.

In a next step as shown in FIG. **1a**, beams **45, 30,** and **230** impinge upon photodetectors **85, 86,** and **286,** respectively, resulting in three interference signals, heterodyne signals $s_1$, $s_2$, and $s_3$, respectively, preferably by photoelectric detection. The signal $s_1$ corresponds to wavelength $\lambda_1$ and signals $s_2$ and $s_3$ correspond to the wavelength $\lambda_2$. The signals $s_\ell$ have the form

$$s_\ell = A_\ell \cos[\alpha_\ell(t)] \quad , \qquad \ell = 1, 2, \text{ and } 3 \quad , \tag{3}$$

where the time-dependent arguments $\alpha_\ell(t)$ are given by

$$\alpha_1(t) = 2\pi f_1 t + \varphi_1 \quad ,$$
$$\alpha_2(t) = 2\pi f_2 t + \varphi_2 \quad , \tag{4}$$
$$\alpha_3(t) = 2\pi f_2 t + \varphi_3 \quad .$$

Heterodyne signals $s_1$, $s_2$, and $s_3$ are transmitted as electronic signals **103, 104,** and **304,** respectively, to electronic processor **109** for analysis in either digital or analog format, preferably in digital format.

A preferred method for electronically processing the heterodyne signals $s_1$, $s_2$, and $s_3$ is presented herewithin for the case when $l_1$ and/or $l_2$ are not low order integers. For the case when $l_1$ and $l_2$ are both low order integers and the ratio of the wavelengths matched to the ratio ($l_1/l_2$) with a relative precision sufficient to meet the required precision imposed on the output data by the end use application, the preferred procedure for electronically processing the heterodyne signals $s_1$, $s_2$, and $s_3$ is the same as the one subsequently set down for the second variant of the first embodiment of the present invention.

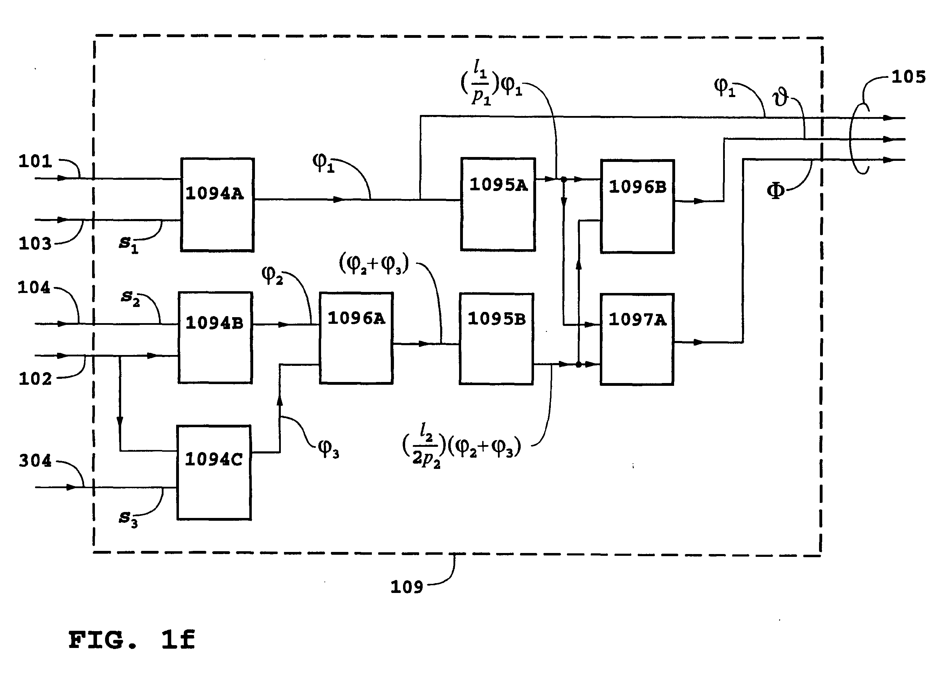

Referring now to FIG. **1f**, electronic processor **109** comprises electronic processors **1094A, 1094B,** and **1094C** to determine the phases $\varphi_1$, $\varphi_2'$ and $\varphi_3'$ respectively, by either digital or analog signal processes, preferably digital processes, using time-based phase detection such as a digital Hilbert transform phase detector [see section 4.1.1 of "Phase-locked loops: theory, design, and applications" 2nd ed. McGraw-Hill (New York) 1993, by R. E. Best] or the like and the phase of drivers **5** and **6**.

The phases of drivers **5** and **6** are transmitted by electrical signals, reference signals **101** and **102,** respectively, in either digital or analog format, preferably in digital format, to electronic processor **109**. Reference signals, alternatives to reference signals **101** and **102,** may also be generated by an optical pick off means and detectors (not shown in figures) by splitting off portions of beams **9** and **10** with beam splitters, preferably nonpolarizing beam splitters, mixing the portion of the beam **9** and the portion of the beam **10** that are split off, and detecting the mixed portions to produce heterodyne reference signals.

Referring again to FIG. **1f,** electronic processor **109** comprises electronic processors **1096A** to add together $\varphi_2$ and $\varphi_3$. Next, the phase $\varphi_1$ and the resulting phase sum ($\varphi_2 + \varphi_3$) are multiplied by $l_1/p_1$ and ($l_2/p_2$)(1/2), respectively, in electronic processors **1095A** and 1095B, respectively, preferably by digital processing, resulting in phases ($l_1/p_1$)$\varphi_1$ and ($l_2/p_2$)($\varphi_2+\varphi_3$)/2. The phases ($l_1/p_1$)$\varphi_1$ and ($l_2/p_2$)($\varphi_2+\varphi_3$)/2 are next added together in electronic processor **1096B** and subtracted one from the other in electronic processor **1097A,** preferably by digital processes, to create the phases $\vartheta$ and $\Phi$, respectively. Formally,

$$\vartheta = \left[ \frac{l_1}{p_1} \varphi_1 + \frac{l_2}{p_2} \frac{(\varphi_2 + \varphi_3)}{2} \right] \qquad , \qquad (5)$$

$$\Phi = \left[ \frac{l_1}{p_1} \varphi_1 - \frac{l_2}{p_2} \frac{(\varphi_2 + \varphi_3)}{2} \right] \qquad . \qquad (6)$$

Note from Eqs. (5) and (6) that $\vartheta$ and $\Phi$ are not sensitive to tilt and/or yaw of either mirrors **91** or **92** of external mirror system **90,** except for instantaneous changing of tilt and/or yaw through the effect of the differences in the average time delay for light beams of differing wavelengths such as described in relation to Eq. (2), of either mirror **91** or **92** of external mirror system **90** and insensitive to thermal and mechanical disturbances that may occur in the interferometer beam splitting cubes and associated optical components as a consequence of the use of differential plane mirror interferometers.

The phase effects in $\vartheta$ and $\Phi$ resulting from instantaneous changing of tilt and/or yaw of either mirror **91** or **92** through the effect of the differences in the average time delay for light beams of differing wavelengths are second order effects, the effects being proportional to the instantaneous angular velocity in either tilt or yaw and proportional to the approximate instantaneous average value for $L_i$ and occur at low frequencies, typically less than or of the order of 10Hz. The phase effects in $\vartheta$ and $\Phi$ resulting from instantaneous changing of tilt and/or yaw of either mirror **91** or **92** through the effect of the differences in the average time delay for light beams of differing wavelengths are typically less than 1 radian. It will be apparent to those skilled in the art that the phase effects in $\vartheta$ and $\Phi$ resulting from instantaneous changing of tilt and/or yaw of either mirror **91** or **92** can be modeled and compensated, with knowledge of the instantaneous tilt and/or yaw angular velocities of mirror **91** or **92** and the approximate instantaneous average value for $L_i$, in subsequent signal processing to the required precision imposed on the output data by the final end use application.

For a measuring path comprised of a vacuum, phase $\Phi$ should substantially be a constant independent of Doppler shifts due to a motion of one or both of the mirrors in the external mirror system **90,** that motion which changes the mirror separation. This may not be the case in practice due to differences in the group delay experienced by the electrical signals $s_1$, $s_2$, and $s_3$. Group delay, often called envelope delay, describes the delay of a packet of frequencies and the group delay at a particular frequency is defined as the negative of the slope of the phase curve at the particular frequency [see H. J. Blinchikoff and A. I. Zverev, Filtering in the Time and Frequency Domains, Section 2.6, 1976 (Wiley, New York)]. If phase $\Phi$ is not a constant for a measuring path comprised of a vacuum, techniques known to those skilled in the art can be used to compensate for departures of phase $\Phi$ from a constant (*cf.* Blinchikoff and Zveriv, ibid.). It is important to note that the group delay effects in $\Phi$ can not only be detected but can also be determined for a measuring path comprising a vacuum by measuring $\Phi$ as a function of different translational velocities of mirror **92** produced by translator **67.** It is also important to note that the group delay effects in $\Phi$ can be significantly reduced by performing analog-to-digital conversion of signals $s_1$, $s_2$, and $s_3$ as close to the photoelectric detectors in detectors **85, 86,** and **286,** respectively, as practical followed by digital signal processing as opposed to transmitting the signals $s_1$, $s_2$, and $s_3$ as analog signals for subsequent analog signal processing and/or analog-to-digital conversion downstream. The compensation for a particular group delay can generally be introduced before or after, or in part before and in part after, the processing elements producing the particular group delay.

Electronic processor **109** additionally comprises processors **1094A** to determine the phase shift $\varphi_1$ using time-based phase detection or the like by analog or digital signal processing, preferably by digital processing, reference signal **101** serving as the reference signal in phase sensitive detection. The phases $\varphi_1$, $\vartheta$, and $\Phi$ are transmitted to computer **110** as signal **105,** in either digital or analog format, preferably in digital format.

The refractivity of the gas, $(n_1-1)$, can be calculated using the formula

$$n_1 - 1 = \frac{\Gamma}{\chi L \left[ 1 - (K/\chi)^2 \right]} \left\{ \left[ \vartheta (K/\chi) - \Phi \right] - Q \right\} \qquad , \qquad (7)$$

where $L$ is the average of physical lengths $L_i$,

$$\chi = \left(l_1 k_1 + l_2 k_2\right)/2 \quad , \tag{8}$$

$$K = \left(l_1 k_1 - l_2 k_2\right)/2 \quad , \tag{9}$$

$$\Gamma = \frac{n_1 - 1}{n_2 - n_1} \quad , \tag{10}$$

and second order correction terms have been omitted. The second order correction terms are due to a first order change in the index of refraction in the measurement path $i$ from the average of the index of refraction over the measurement paths $i$ and to the difference of the physical length $L_i$ from $L$. The quantity $\Gamma$ is the reciprocal dispersive power of the gas that is substantially independent of environmental conditions and turbulence in the gas. The offset term $Q$ is defined as

$$Q = \xi(K/\chi) - Z \quad , \tag{11}$$

where

$$\xi = \left( \frac{l_1}{p_1} \zeta_1 + \frac{l_2}{p_2} \frac{\zeta_2 + \zeta_3}{2} \right) \quad , \tag{12}$$

$$Z = \left( \frac{l_1}{p_1} \zeta_1 - \frac{l_2}{p_2} \frac{\zeta_2 + \zeta_3}{2} \right) \quad . \tag{13}$$

Values of $\Gamma$ may be computed from knowledge of the gas composition and from knowledge of the wavelength dependent refractivities of the gas constituents. For the example of $\lambda_1 = 0.63\ \mu\text{m}$, $\lambda_2 = 0.32\ \mu\text{m}$, and a standard atmosphere, $\Gamma \cong 24$.

In addition, Eq. (7) is valid for the case where the combined paths for optical beams at one wavelength are substantially coextensive with the combined paths for optical beams at a second wavelength, a preferred configuration which also serves to illustrate in the simplest manner the function of the invention in the second embodiment. To those skilled in the art, the generalization to the case where combined paths for optical beams at one wavelength are not substantially coextensive with the combined paths for optical beams at a second wavelength is a straight forward procedure.

For those applications related to distance measuring interferometry, the heterodyne phase $\varphi_1$ and phases $\vartheta$ and $\Phi$ may be used to determine the distance $L$, independent of the effects of the refractive index of the gas in the measuring path of a distance measuring interferometer, using the formula

$$L = \frac{1}{(\chi + K)} \left\{ \frac{l_1}{p_1} (\varphi_1 - \zeta_1) - \frac{\Gamma}{\left[1 - (K/\chi)\right]} \left[(K/\chi)\vartheta - \Phi - Q\right] \right\} \quad . \tag{14}$$

The ratio of the wavelengths can be expressed in terms of $(K/\chi)$ from Eqs. (8) and (9) with the result

$$\frac{\lambda_1}{\lambda_2} = \left(\frac{l_1}{l_2}\right)\left[\frac{1-(K/\chi)}{1+(K/\chi)}\right] \qquad . \qquad (15)$$

When operating under the condition

$$\left|K/\chi\right| \ll \frac{(n_2 - n_1)}{(n_2 + n_1)} \qquad , \qquad (16)$$

the ratio of the phases $\Phi$ and $\vartheta$ has the approximate value

$$(\Phi/\vartheta) \cong -\frac{(n_2 - n_1)}{(n_2 + n_1)} \qquad . \qquad (17)$$

Therefore, for the case of the first embodiment where the ratio of the wavelengths $(\lambda_1/\lambda_2)$ has a known approximate ratio value $l_1/l_2$, cf. Eq. (1), where $l_1$ and $l_2$ may assume integer and non-integer values, and the ratio of the wavelengths $(\lambda_1/\lambda_2)$ is the same as the ratio value $l_1/l_2$ to a relative precision of an order of magnitude or more less than the dispersion of the refractive index of the gas, $(n_2-n_1)$, times the relative precision $\varepsilon$ desired for the measurement of the refractivity of the gas or of the change in the optical path length of the measurement leg due to the gas, expressed formally by the inequality

$$\left|\frac{\lambda_1}{\lambda_2} - \frac{l_1}{l_2}\right| \ll \left(\frac{l_1}{l_2}\right)(n_2 - n_1)\varepsilon \qquad , \qquad (18)$$

Eqs. (7) and (14) reduce to the more simple forms of

$$n_1 - 1 = -\frac{\Gamma}{\chi L}(\Phi + Q) \qquad , \qquad (19)$$

$$L = \frac{1}{\chi}\left[\frac{l_1}{p_1}(\varphi_1 - \zeta_1) + \Gamma(\Phi + Q)\right] \qquad , \qquad (20)$$

respectively. It will also be obvious to someone skilled in the art to perform similar calculations for $L$ with respect to $n_2$,

$$(n_2 - 1) = (n_1 - 1)(1 + 1/\Gamma) \qquad , \qquad (21)$$

in place of or in addition to $n_1$.

In a next step, electronic processing means **109** transmits to the computer **110** $\varphi_1$ and $\Phi$ as electronic signal **105** in either digital or analog format, preferably a digital format, for the computation of $(n_1\text{-}1)$ and/or $L$.

The resolution of phase redundancy in $(1/l_1)\Phi$ is required in the computation of either $(n_1\text{-}1)$ or changes in $L$ due to the gas using either Eqs. (19) or (20), respectively. In addition the resolution of the phase redundancy in $\varphi_1$ is required in the computation of $L$ using Eq. (20) and the resolution of phase redundancy in $\varphi_1$ is required in the computation of changes $L$ using Eq. (20) if $\chi$ is variable in time.

The equivalent wavelength comprising $(1/l_1)\Phi$ is significantly larger than either of the wavelengths $\lambda_1$ and $\lambda_2$ and as a consequence, produces a significant simplification in a procedure implemented for resolution of phase redundancy in $(1/l_1)\Phi$. The equivalent wavelength $\lambda_{(1/l_1)\Phi}$ for $(1/l_1)\Phi$ is

$$\lambda_{(1/l_1)\Phi} = \frac{\lambda_1}{(n_2 - n_1)} \qquad . \qquad (22)$$

For the example of $\lambda_1 = 0.633\ \mu m$, $(n_1\text{-}1) \cong 3 \times 10^{-4}$, and $(n_2\text{-}n_1) \cong 1 \times 10^{-5}$, the equivalent wavelength given by Eq. (22) is

$$\lambda_\Phi \cong 63\ mm \qquad . \qquad (23)$$

Any one of several procedures may be easily employed to resolve the phase redundancy in $(1/l_1)\Phi$, given the equivalent wavelength as expressed by Eq. (22). For those applications where changes in the measurement path can be measured interferometrically, a feature for example of an application based on a distance measuring interferometer employed for measuring changes in the measurement path, the movable mirror **92** of the external mirror system **90** can be scanned by translator **67** in a controlled manner over a given length and the concomitant change in $(1/l_1)\Phi$ recorded. From the recorded change in $(1/l_1)\Phi$ and the length scanned, as recorded by the change in $\varphi_1$, the equivalent wavelength $\lambda_{(1/l_1)\Phi}$ can be calculated. With the computed value for the equivalent wavelength $\lambda_{(1/l_1)\Phi}$, the phase redundancy in $(1/l_1)\Phi$ can be easily resolved in view of the relatively large value for the equivalent wavelength $\lambda_{(1/l_1)\Phi}$.

For those applications where the determination of the refractivity and/or or the change in the optical path length due to the gas in a measurement leg is made and mirror **92** of the external mirror system does not have a scanning capability, such as considered in the preceding paragraph, other procedures are available for the resolution of the phase redundancy of $(1/l_1)\Phi$. One procedure which may be employed to resolve the phase redundancy in $(1/l_1)\Phi$ is based on the use of a series of external mirror systems where the round-trip physical lengths $L$ for the measurement legs of the external mirror systems form a geometric progression. The smallest or first round-trip physical length in the series will be approximately $\lambda_1/[4(n_2\text{-}n_1)]$ divided by the relative precision that the initial value of $(1/l_1)\Phi$ is known. The round-trip physical length of the second external mirror system **90** in the series will be approximately the round-trip physical length of the first external mirror system **90** divided by the relative precision that $\Phi$ is measured using the first external mirror system **90.** This is a geometric progression procedure, the resulting round-trip physical lengths forming a geometric progression, which is continued until the round-trip physical length of the external mirror system **90** used to measure the refractivity or the change in optical path length due to the refractivity of the gas would be exceeded if the number of external mirror systems in series were incremented by one.

A third procedure is based upon the use of a source (not shown in FIGS. **1a-1e**) of a series of known wavelengths and measuring $\Phi$ for these wavelengths. The number of known wavelengths required for the resolution of the phase redundancy is generally comprised of a small set because of the relatively large value for $\lambda_1(1/l_1)\Phi$ as given by Eq. (22).

Another procedure to resolve the phase redundancy in $(1/l_1)\Phi$ would be to observe the changes in $(1/l_1)\Phi$ as the measuring path **98** is changed from gas to an evacuated state (the vacuum pump and requisite gas handling system are not shown in FIGS. **1a-1e**) to resolve the phase redundancy in $(1/l_1)\Phi$. The problems normally encountered in measuring absolute values for refractivity and changes in the optical path length due to the refractivity of the gas based in part on changing the gas pressure from a non-zero value to a vacuum are not present in the first preferred embodiment because of the relative large equivalent wavelength of $(1/l_1)\Phi$.

The resolution of the phase redundancy in $\varphi_1$ if required presents a problem similar to the one as subsequently described with respect to the required resolution of phase redundancy in $\vartheta$ in the second and third embodiments and variants thereof of the present invention. As a consequence, the procedures described for the resolution of phase redundancy in $\vartheta$ with respect to the second and third embodiments and variants thereof can be adapted for use in the resolution of the phase redundancy in $\varphi_1$ if required.

The offset terms involving $\zeta_1$ or/and $Q$ that are present in Eqs. (19) and (20) and defined in Eqs. (2) and (11) are terms that require some combination of determination and/or monitoring depending on whether $\chi$ is variable in time, whether the refractivity or/and the length $L$ are to be determined, respectively, or whether changes in refractivity or/and the length $L$ are to be determined, respectively. One procedure for the determination of $\zeta_1$ and $Q$ is based on replacement of mirror **91** of the external mirror system **90** with a mirror **R91** (not shown in FIGS. **1d** and **1e**) having a surface **R93** corresponding to surface **93** of mirror **91** coated so as be a reflecting surface for both wavelengths $\lambda_1$ and $\lambda_2$ and measuring the resulting values of $\varphi_1$ and $\Phi$. Let the resulting values of $\varphi_1$ and $\Phi$ be $\varphi_{1R}$ and $\Phi_R$, respectively. Quantities $\zeta_1$ and $Q$ are related to $\varphi_{1R}$ and $\Phi_R$, respectively, as evident from Eqs. (2) and (19) by the formulae

$$\zeta_1 = \varphi_{1R} \quad , \qquad\qquad\qquad (24)$$

$$Q = -\Phi_R \quad . \qquad\qquad\qquad (25)$$

The non-electronic contributions to $\zeta_1$ and $Q$ should be substantially constant in time because of the significant level of compensation that takes place in the differential plane mirror interferometer **69,** the differential plane mirror interferometer group **70,** beam splitter **65,** and external mirror system **90.** The electronic contributions to $\zeta_1$ and $Q$ may be monitored by purely electronic means (not shown).

It will be apparent to someone skilled in the art that as a consequence of the incorporation of beam splitter **65** in the first preferred embodiment, the measuring paths for beams at $\lambda_1$ and $\lambda_2$ are coextensive in external mirror system **90,** so that the dispersion of the gas can serve as a proxy to high precision for the gas column density in the measuring path, whereas polarizing coating **73** of beam splitter **71** and quarter-wave retardation plate **77** need only meet performance specifications at $\lambda_1$ while polarizing coating **74** of beam splitter **72** and quarter-wave retardation plate **78** need only meet performance specifications at $\lambda_2$. This assignment of critical operations according to wavelength as disclosed in the first embodiment can be an important feature of the present invention when requiring use of three or more light beams with different wavelengths having coextensive measuring paths in the gas, particularly in high precision applications such as the case of micro-lithographic fabrication of integrated circuits. However, the assignment of operations according to wavelength need not be done as disclosed in the first preferred embodiment, *e.g.* the function of beam splitters **71** and **72** being achieved by a single beam splitter with an appropriately modified polarizing surface, without departing from the spirit or scope of the present invention.

The description of the first preferred embodiment noted that the configuration of interferometers illustrated in FIGS. **1a-1e** are known in the art as differential plane mirror interferometers. Other forms of the differential plane mirror interferometer and forms of other interferometers such as the plane mirror interferometer or the angle-compensating interferometer or similar device such as is described in an article entitled "Differential interferometer arrangements for distance and angle measurements: Principles, advantages and applications" by C. Zanoni, VDI Berichte Nr. 749, 93-106 (1989), is preferably incorporated into the apparatus of the first embodiment of the present invention as when working with stages commonly encountered in the micro-lithographic fabrication of integrated circuits without departing from the spirit or scope of the present invention.

FIG. **1b** depicts in schematic form one embodiment of the differential plane mirror interferometer **69** shown in FIG. **1a.** It operates in the following way: beam **9** is incident on beam splitter **55A,** preferably a polarizing beam splitter, with a portion of beam **9** being transmitted as beam **13.** A second portion of beam **9** reflected by beam splitter **55A** is reflected by mirror **55B** and then transmitted by half-wave phase retardation plate **79** as beam **113,** the half-wave phase retardation plate **79** rotating the plane of polarization of the reflected portion of beam **9** by 90˚. Beams **13** and **113** have the same polarizations but still have different frequencies. The function of beam splitter **55A** and mirror **55B** is to spatially separate the two frequency components of beam **9** using conventional polarization techniques.

Beams **13** and **113** enter polarizing beam splitter **71,** which has a polarizing coating **73,** and are transmitted as beams **15** and **115,** respectively. Beams **15** and **115** pass through quarter-wave phase retardation plate **77** and are converted into circularly polarized beams **17** and **117,** respectively. Beams **17** and **117** are transmitted by beam splitter **65** with dichroic coating **66,** reflected back on themselves by mirrors within external mirror system **90** as illustrated in FIG. **1d,** pass back through beam splitter **65,** and subsequently pass back through quarter-wave retardation plate **77** and are converted back into linearly polarized beams that are orthogonally polarized to the original incident beams **15** and **115.** These beams are reflected by polarizing coating **73** to become beams **19** and **119,** respectively. Beams **19** and **119** are reflected by retroreflector **75** to become beams **21** and **121,** respectively. Beams **21** and **121** are reflected by polarizing coating **73** to become beams **23** and **123,** respectively. Beams **23** and **123** pass through quarter-wave phase retardation plate **77** and are converted into circularly polarized beams **25** and **125,** respectively. Beams **25** and **125** are transmitted by beam splitter **65,** reflected back on themselves by mirrors within external mirror system **90** as illustrated in FIG. **1d,** pass back through beam splitter **65,** and subsequently pass back through quarter-wave retardation plate **77** and are converted back into linearly polarized beams, the linear polarizations being the same as the linear polarizations of the original incident beams **15** and **115.** These beams are transmitted by polarizing coating **73** to become beams **27** and **127,** respectively. Beam **27** is reflected by mirrors **57A** and **57B** and beam **127** is reflected by mirrors **59C** and **59D** to become beams **29** and **129,** respectively.

Beams **29** and **129** enter polarizing beam splitter **71** and are transmitted by polarizing beam splitter **71** with polarizing coating **73** as beams **31** and **131,** respectively. Beams **31** and **131** pass through quarter-wave phase retardation plate **77** and are converted into circularly polarized beams **33** and **133,** respectively. Beams **33** and **133** are transmitted by beam splitter **65,** reflected back on themselves by mirrors within external mirror system **90** as illustrated in FIG. **1d,** pass back through beam splitter **65,** and subsequently pass back through quarter-wave retardation plate **77** and are converted back into linearly polarized beams that are orthogonally polarized to the original incident beams **31** and **131.** These beams are reflected by polarizing coating **73** to become beams **35** and **135,** respectively. Beams **35** and **135** are reflected by retroreflector **75** to become beams **37** and **137,** respectively. Beams **37** and **137** are reflected by polarizing coating **73** to become beams **39** and **139,** respectively. Beams **39** and **139** pass through quarter-wave phase retardation plate **77** and are converted into circularly polarized beams **41** and **141,** respectively. Beams **41** and **141** are transmitted by beam splitter **65,** reflected back on themselves by mirrors within external mirror system **90** as illustrated in FIG. **1d,** pass back through beam splitter **65,** and subsequently pass back through quarter-wave retardation plate **77** and are converted back into linearly polarized beams, the linear polarizations being the same as the linear polarizations of the original incident beams **15** and **115.** These beams are transmitted by polarizing coating **73** to become beams **43** and **143,** respectively. Beams **43** and **143** contain information at wavelength $\lambda_1$ about the optical path lengths through the gas in the measurement path **98** wherein the effects of the refractivity of the gas is to be determined and about the optical path lengths through reference leg, respectively.

Beam **43** is reflected by mirror **63B,** and then a portion reflected by beam splitter **63A,** preferably a nonpolarizing type, as a first component of beam **45.** Beam **143** is incident on beam splitter **63A** with a portion of beam **143** being transmitted as a second component of beam **45,** the first and second components of beam **45** having the same linear polarizations but still having different frequencies.

FIG. **1c** depicts in schematic form one embodiment of differential plane mirror interferometer group **70** shown in FIG. **1a.** It operates in the following way: beam **12** is incident on beam splitter **56A,** preferably a polarizing beam splitter, with a portion of beam **12** being transmitted as beam **14.** A second portion of beam **12,** reflected by beam splitter **56A,** is reflected by mirror **56B** and then transmitted by half-wave phase retardation plate **80** as beam **114,** the half-wave phase retardation plate **80** rotating the plane of polarization of the incident portion of beam **12** by 90˚. Beams **14** and **114** have the same polarizations but different frequencies. The function, in part, of beam splitter **56A** and mirror **56B** is to spatially separate the two frequency components of beam **12** using conventional polarization techniques.

Beams **14** and **114** enter polarizing beam splitter **72,** which has a polarizing coating **74,** and are transmitted as beams **16** and **116,** respectively. Beams **16** and **116** pass through quarter-wave phase retardation plate **78** and are converted into circularly polarized beams **18** and **118,** respectively. Beams **18** and **118** are reflected by beam splitter **65** with dichroic coating **66,** reflected back on themselves by mirrors within external mirror system **90** as illustrated in FIG. **1e,** reflected by surface **66** of beam splitter **65** a second time, and subsequently pass back through quarter-wave retardation plate **78** and converted back into linearly polarized beams that are orthogonally polarized to the original incident beams **16** and **116.** These beams are reflected by polarizing coating **74** to become beams **20** and **120,** respectively. Beams **20** and **120** are reflected by retroreflector **76** to become beams **22** and **122,** respectively.

Beams **22** and **122** are reflected by polarizing coating **74** to become beams **24** and **124,** respectively. Beams **24** and **124** pass through quarter-wave phase retardation plate **78** and are converted into circularly polarized beams **26** and **126,** respectively. Beams **26** and **126** are reflected by surface **66** of beam splitter **65,** reflected back on themselves by mirrors within external mirror system **90** as illustrated in FIG. **1e,** reflected by surface **66** of beam splitter **65** a second time, and subsequently pass back through quarter-wave retardation plate **78** and are converted back into linearly polarized beams, the same linear polarizations as the linear polarizations of the original incident beams **16** and **116.** These beams are transmitted by polarizing coating **74** to become beams **28** and **128,** respectively. Beams **28** and **128** contain information at wavelength $\lambda_2$ about the optical path lengths through the gas in measurement path **98** wherein the effects of the refractivity of the gas is to be determined and about the optical path lengths through the reference leg, respectively.

Beam **28** is reflected by mirror **58B,** and then a portion reflected by beam splitter **58A,** preferably a nonpolarizing type, as a first component of beam **30.** Beam **128** is incident on beam splitter **58A** with a portion of beam **128** being transmitted as a second component of beam **30,** the first and second components of beam **30** having the same linear polarizations but still having different frequencies.

Beam **212** is incident on beam splitter **56A** with a portion of beam **212** being transmitted as beam **214.** A second portion of beam **212** is reflected by beam splitter **56A,** subsequently reflected by mirror **56B,** and then transmitted by half-wave phase retardation plate **80** as beam **314,** the half-wave phase retardation plate **80** rotating the plane of polarization of the incident portion of beam **212** by 90˚. Beams **214** and **314** have the same polarizations but still have different frequencies. The function, in part, of beam splitter **56A** and mirror **56B** is to spatially separate the two frequency components of beam **212** using conventional polarization techniques.

Beams **214** and **314** enter polarizing beam splitter **72,** which has a polarizing coating **74,** and are transmitted as beams **216** and **316,** respectively. Beams **216** and **316** pass through quarter-wave phase retardation plate **78** and are converted into circularly polarized beams **218** and **318,** respectively. Beams **218** and **318** are reflected by surface **66** of beam splitter **65,** reflected back on themselves by mirrors within external mirror system **90** as illustrated in FIG. **1e,** reflected by surface **66** of beam splitter **65** a second time, and subsequently pass back through quarter-wave retardation plate **78** and are converted back into linearly polarized beams that are orthogonally polarized to the original incident beams **216** and **316.** These beams are reflected by polarizing coating **74** to become beams **220** and **320,** respectively. Beams **220** and **320** are reflected by retroreflector **76** to become beams **222** and **322,** respectively. Beams **222** and **322** are reflected by polarizing coating **74** to become beams **224** and **324,** respectively. Beams **224** and **324** pass through quarter-wave phase retardation plate **78** and are converted into circularly polarized beams **226** and **326,** respectively. Beams **226** and **326** are reflected by surface **66** of beam splitter **65,** reflected back on themselves by mirrors within external mirror system **90** as illustrated in FIG. **1e,** reflected by surface **66** of beam splitter **65** a second time, and subsequently pass back through quarter-wave retardation plate **78** and converted back into linearly polarized beams, the linear polarizations being the same as the linear polarizations of the original incident beams **216** and **316.** These beams are transmitted by polarizing coating **74** to become beams **228** and **328,** respectively. Beams **228** and **328** contain information at wavelength $\lambda_2$ about the optical path lengths through the gas in measurement path **98** wherein the effects of the refractivity of the gas is to be determined and about the optical path lengths through the reference leg, respectively.

Beam **228** is reflected by mirror **58D** and then a portion reflected by beam splitter **58C,** preferably a nonpolarizing type, as a first component of beam **230.** Beam **328** is incident on beam splitter **58C** with a portion of beam **328** being transmitted as a second component of beam **230,** the first and second components of beam **230** having the same linear polarizations but still having different frequencies.

A first variant of the first preferred embodiment is disclosed wherein the description of the apparatus of the first variant of the first embodiment is the same as that given for the apparatus of the first embodiment except with regard to the frequencies $f_1$ and $f_2$ of drivers **5** and **6,** respectively, shown in FIG. **1a.** In the first variant of the first embodiment, the frequencies of the two drivers **5** and **6** are the same, *i.e.* $f_1 = f_2$. This feature of the first variant of the first embodiment eliminates the effects of differences in group delays in the first embodiment resulting from $f_1 \neq f_2$. The remaining description of the first variant of the first embodiment is the same as corresponding portions of the description given for the first embodiment.

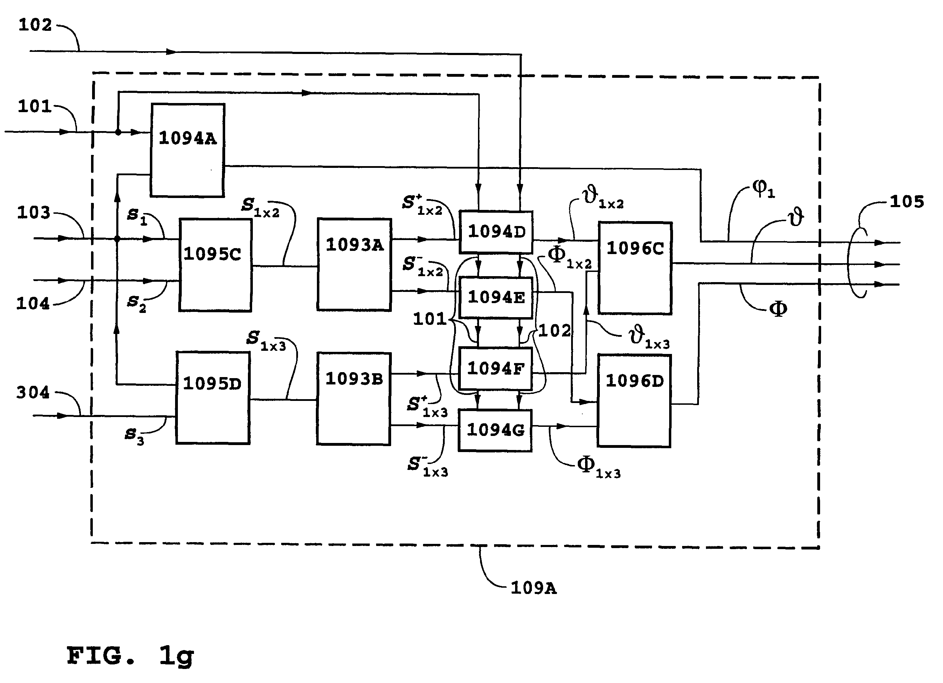

Reference is now made to FIGS. **1a-1e** and **1g** which taken together depict in diagrammatic form a second variant of the first preferred embodiment of the present invention for measuring and monitoring the refractivity of a gas in a measurement path and/or the change in the optical path length of the measurement path due to the gas wherein either or both the refractive index of the gas and the physical length of the measurement path may be changing and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the first embodiment in which the ratio $(l_1/l_2)$ is expressible as the ratio of low order non-zero integers $(p_1/p_2)$, *i.e.*

$$l_1 = p_1 \quad , \quad l_2 = p_2 \quad ,$$

$$\left(\frac{l_1}{l_2}\right) = \left(\frac{p_1}{p_2}\right) \quad , \quad p_1, p_2 = 1, 2, \ldots \quad , \quad p_1 \neq p_2 \quad , \tag{26}$$

which corresponds to the wavelengths $\lambda_1$ and $\lambda_2$ being approximately harmonically related.

The description of the sources of light beams **9** and **10** and of light beams **9** and **10** for the second variant of the first embodiment is the same as that for description of the sources of light beams **9** and **10** and of light beams **9** and **10** given for the first embodiment with the additional requirement that the wavelengths be harmonically related to a relative precision sufficient to meet the required precision imposed on the output data by the final end use application. The description of the apparatus for the second variant of the first embodiment depicted in FIGS. **1a-1e** is the same as corresponding portions of the description given for the first embodiment for the case where $p_1 = 4$ and $p_2 = 2$.

Referring now to FIG. **1g,** electronic processor **109A** preferably comprises electronic processor **1095C** for electronically multiplying together, either as an analog or digital process, preferably a digital process, heterodyne signals $s_1$ and $s_2$ to create a superheterodyne signal $S_{1\times2}$ having the mathematical form

$$S_{1\times2} = s_1 s_2 \quad .\tag{27}$$

The superheterodyne signal $S_{1\times2}$ is comprised of two sidebands with a suppressed carrier and may be rewritten as

$$S_{1\times2} = S_{1\times2}^+ + S_{1\times2}^-\tag{28}$$

where

$$S_{1\times2}^+ = \frac{1}{2} A_1 A_2 \cos(2\pi\nu t + \vartheta_{1\times2}) \quad ,\tag{29}$$

$$S_{1\times2}^- = \frac{1}{2} A_1 A_2 \cos(2\pi F t + \Phi_{1\times2}) \quad ,\tag{30}$$

$$\nu = (f_1 + f_2) \quad ,\tag{31}$$

$$\vartheta_{1\times2} = (\varphi_1 + \varphi_2) \quad ,\tag{32}$$

$$F = (f_1 - f_2) \quad ,\tag{33}$$

$$\Phi_{1\times2} = (\varphi_1 - \varphi_2) \quad .\tag{34}$$

The superheterodyne signal $S_{1\times2}$ is therefore comprised of two sidebands, $S_{1\times2}^+$ and $S_{1\times2}^-$, of equal amplitude, one sideband with frequency $\nu$ and phase $\vartheta_{1\times2}$ and a second sideband with frequency $F$ and phase $\Phi_{1\times2}$.

In a next step, the sidebands $S_{1\times2}^+$ and $S_{1\times2}^-$, are separated by electronic processor **1093A** through high pass and low pass filtering or any of the like techniques for separating two signals that are separated in frequency. The frequency $F$ of the lower frequency sideband of the superheterodyne signal is chosen to be very much smaller than the frequency $v$ of the higher frequency sideband of the superheterodyne signal, so as to make it easier to calculate the phase $\Phi_{1\times2}$ with high resolution, considerably simplifying the separating task of processor **1093A.** Electronic processor **109A** further comprises electronic processor **1094D** and **1094E** to determine the phases $\vartheta_{1\times2}$ and $\Phi_{1\times2}$, respectively, using time-based phase detection such as a digital Hilbert transform phase detector (see R. E. Best, *ibid.*) or the like and the phases of the drivers **5** and **6**.

Electronic processor **109A** further comprises electronic processor **1095D** which electronically multiplies together, either as an analog or digital process, preferably a digital process, heterodyne signals $s_1$ and $s_3$ to create a superheterodyne signal $S_{1\times3}$ having the mathematical form

$$S_{1\times3} = s_1 s_3 \quad . \tag{35}$$

The superheterodyne signal $S_{1\times3}$ also comprises two sidebands with a suppressed carrier and may be rewritten as

$$S_{1\times3} = S_{1\times3}^+ + S_{1\times3}^- \tag{36}$$

where

$$S_{1\times3}^+ = \frac{1}{2} A_1 A_3 \cos\left(2\pi v t + \vartheta_{1\times3}\right) \quad , \tag{37}$$

$$S_{1\times3}^- = \frac{1}{2} A_1 A_3 \cos\left(2\pi F t + \Phi_{1\times3}\right) \quad , \tag{38}$$

$$\vartheta_{1\times3} = \left(\varphi_1 + \varphi_3\right) \quad , \tag{39}$$

$$\Phi_{1\times3} = \left(\varphi_1 - \varphi_3\right) \quad . \tag{40}$$

The superheterodyne signal $S_{1\times3}$ therefore comprises two sidebands, $S_{1\times3}^+$ and $S_{1\times3}^-$, of equal amplitude, one sideband with frequency $v$ and phase $\vartheta_{1\times3}$ and a second sideband with frequency $F$ and phase $\Phi_{1\times3}$.

In a next step, the sidebands $S_{1\times3}^+$ and $S_{1\times3}^-$, are separated by electronic processor **1093B** through high pass and low pass filtering or any of the like techniques for separating two signals that are separated in frequency. As noted in the discussion of electronic processor **1093A,** the frequency $F$ of the lower frequency sideband of superheterodyne signal $S_{1\times3}$ is chosen to be very much smaller than the frequency $v$ of the higher frequency sideband of superheterodyne signal $S_{1\times3}$, considerably simplifying the separating task of processor **1093B.** Electronic processor **109A** further comprises processor **1094F** and **1094G,** respectively, to determine the phases $\vartheta_{1\times3}$ and $\Phi_{1\times3}$ using time-based phase detection such as a digital Hilbert transform phase detector (see Best *ibid.*) or the like and the phases of the drivers **5** and **6.**

Subsequently, the phases $\vartheta_{1\times2}$ and $\vartheta_{1\times3}$ are added together and divided by 2 in electronic processor **1096C,** by an analog or digital process, preferably a digital process, and phases $\Phi_{1\times2}$ and $\Phi_{1\times3}$ are added together and divided by 2 in electronic processor **1096D,** by an analog or digital process, preferably a digital process, to create the phases $\vartheta$ and $\Phi$, respectively. Formally,

$$\vartheta = \frac{\left(\vartheta_{1\times2} + \vartheta_{1\times3}\right)}{2} = \left[\varphi_1 + \frac{\left(\varphi_2 + \varphi_3\right)}{2}\right] \quad , \tag{41}$$

$$\Phi = \frac{\left(\Phi_{1\times2} + \Phi_{1\times3}\right)}{2} = \left[\varphi_1 - \frac{\left(\varphi_2 + \varphi_3\right)}{2}\right] \quad . \tag{42}$$

Note from Eqs. (41) and (42) that $\vartheta$ and $\Phi$ are not sensitive to tilt and/or yaw of mirrors **91** and **92** of external mirror system **90,** except for instantaneous changing of tilt and/or yaw of mirrors **91** and **92** through the second order effect of the differences in the average time delay for light beams of differing wavelengths such as described in relation to Eqs. (5) and (6), and insensitive to thermal and mechanical disturbances that may occur in the interferometer beam splitting cubes and associated optical components as a consequence of the use of differential plane mirror interferometers.

Electronic processor **109A,** and shown in FIG. **1g,** comprises electronic processor **1094A** to determine phase $\varphi_1$ from heterodyne signal $s_1$ using time-based phase sensitive detection with reference signal **101** or the like, preferably a digital process. Phases $\varphi_1$, $\vartheta$, and $\Phi$ are transmitted, in digital or analog format, preferably a digital format, to computer **110** as signal **105** for the computation of $(n_1-1)$ and/or $L$.

The refractivity $(n_1-1)$ of the gas or changes in $L$ due to the gas in the measuring path can be expressed in terms of other quantities obtained in the second variant of the first embodiment by Eqs. (6), (11), (12), (13), (19), and (20) with

$$l_1 = p_1 \quad , \quad l_2 = p_2 \quad . \tag{43}$$

The remaining discussion of the second variant of the first embodiment is the same as corresponding portions of the descriptions given for the first embodiment.

The principal advantage of the second variant of the first embodiment is an option for the execution of critical electronic processing steps, such as the determination of phases $\Phi_{1\times2}$ and $\Phi_{1\times3}$ at substantially identical frequencies, the frequencies of heterodyne signals $s_1$, $s_2$, and $s_3$ being substantially identical in regard to $f_1$ being close to $f_2$ and to the Doppler shifts produced by the translation of mirror **92** of external mirror system **90** being substantially the same in $s_1$, $s_2$, and $s_3$, so as to substantially reduce the potential for generating differences in group delays experienced by heterodyne signals having significantly different frequencies. The discussion of the effects of group delay for the second variant of the first embodiment is the same as corresponding portions of the description given for the first embodiment.

A preferred second variant of the first embodiment of the invention having been disclosed in the previous paragraphs, the underlying advantages of the invention will be made more clear by the following discussion. It is evident from the calculation of the refractivity by Eq. (7) or the calculation of the effect of the refractivity of the gas in the optical path by Eq. (14), that the required accuracies to which the phases $\vartheta$ and $\Phi$ must be determined are related to the values of the wavenumbers $K$ and $\chi$. In that the frequency $F$ can be very much smaller than the frequency $v$, and since it is generally easier to calculate the phase with high resolution of an electronic signal of lower frequency, it is generally most advantageous to rely on a high-accuracy measurement of the superheterodyne sideband phase $\Phi$. This is readily achieved in the inventive apparatus when the wavenumbers $K$ and $\chi$ are related according to Eq. (16), the calculation of the refractivity by Eq. (7) or the calculation of the effect of the refractivity of the gas on the optical path by Eq. (14) substantially not involving the superheterodyne sideband phase $\vartheta$ at all. Further, the magnitude of the superheterodyne sideband phase $\Phi$ is less than the magnitude of the superheterodyne sideband phase $\vartheta$, less dependent by a factor of approximately $(n_2-n_1)/(n_2+n_1)$ as expressed by Eq. (17). This greatly improves the potential phase detection accuracy for moving objects, such as are commonly encountered in micro-lithography equipment. A corresponding analysis and summary also applies to the first embodiment and to the first variant of the first embodiment wherein there is an improvement in the phase detection accuracy for moving objects substantially proportional to the relative precision that the approximate ratio value $l_1/l_2$ can be expressed as the ratio of low order non-zero integers, all other factors being the same.

Eq. (18) also forms the basis for a conclusion that sources **1** and **2** need not be phase locked for the first variant of the first preferred embodiment. Eq. (18) is actually a weak condition when viewed in terms of a phase-locked requirement for sources **1** and **2**. Consider for an example a desired precision of $\varepsilon \cong 3 \times 10^{-6}$ for measuring the refractivity ($n_1$-1) of the gas or for the change in the optical path length of the measurement leg due to the gas, corresponding to a relative distance measuring precision of approximately $1 \times 10^{-9}$ in a distance measuring interferometer, $(n_1\text{-}1) \cong 3 \times 10^{-4}$, and $(n_2 - n_1) \cong 1 \times 10^{-5}$. For the example, the condition expressed by Eq. (18) written in terms of source frequencies $\nu_1$ and $\nu_2$ instead of wavelengths $\lambda_1$ and $\lambda_2$, respectively, is

$$\left| \nu_2 - \frac{p_1}{p_2} \nu_1 \right| \ll 3 \times 10^{-11} \nu_2 \quad . \tag{44}$$

For source wavelengths in the visible part of the spectrum and for low order integers for $p_1$ and $p_2$, Eq. (44) translates into a condition

$$\left| \nu_2 - \frac{p_1}{p_2} \nu_1 \right| \ll 30\,\text{kHz} \quad . \tag{45}$$

The result expressed in Eq. (45) is clearly a significantly less restrictive condition on the frequencies of sources **1** and **2** than a phase-locked condition.

The first embodiment and first and second variants thereof are each configured with differential plane mirror interferometers using an even number of passes of a beam through measurement path **98** of external mirror system **90.** With an even number of passes by a beam in a differential plane mirror interferometer, the direction of propagation of an exit beam from the measurement leg and the direction of propagation of the corresponding exit beam from the reference leg are independent of tilt or yaw of either mirror in the external mirror system **90,** in particular mirror **92,** although there will be certain lateral shear of one of the exit beams relative to the other of the exit beams. For a distance measuring interferometer wherein the element or elements serving the function of mirror **92** generates the equivalent of translations but does not produce the equivalent of tilts or yaws, the differential plane mirror interferometers of the first embodiment and variants thereof can be configured with $p_2$ either an even or odd integer, generally reducing the number of required passes by two, while retaining the features of the first embodiment and variants thereof. This reduction by a factor of two in the required number of passes can lead to a significant simplification of the optical system. For example, the differential plane mirror interferometers illustrated in FIGS. **1a-1e** can be replaced with differential plane mirror interferometers having $p_1 = 2$ and $p_2 = 1$, otherwise retaining the features of the first embodiment and variants thereof, similar to the differential plane mirror interferometers and accompanying signal processing more fully illustrated and described with respect to the second embodiment and variants thereof in United States Provisional Patent Application No. (Attorney Case No. 0189/US) entitled APPARATUS AND METHODS FOR MEASURING INTRINSIC OPTICAL PROPERTIES OF A GAS that is copending herewith and the contents of which are incorporated herein by reference.

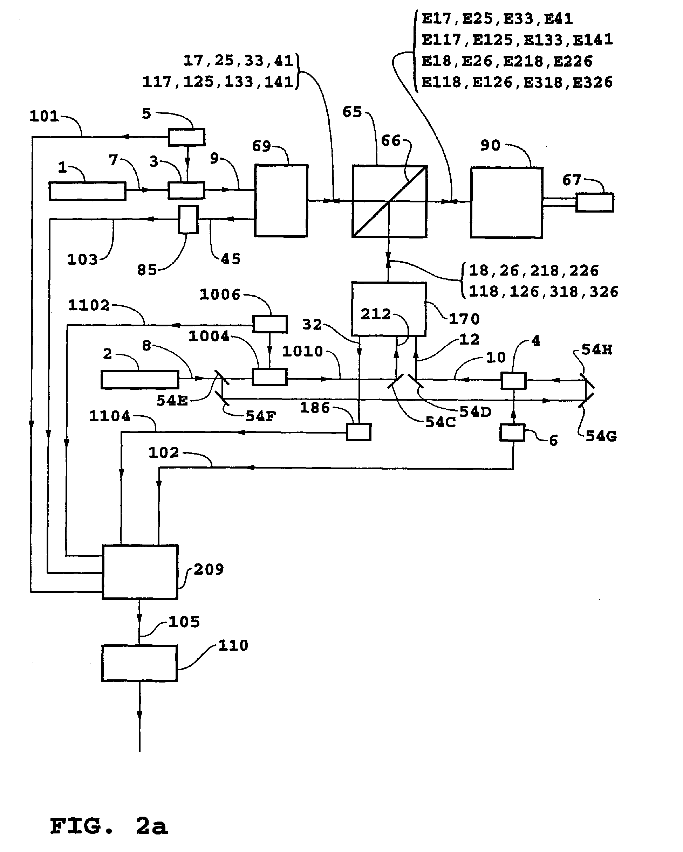

FIGS. **2a-2c** depict in schematic form a second preferred embodiment of the present invention for measuring and monitoring the refractivity of a gas in a measurement path and/or the change in the optical path length of the measurement path due to the gas wherein either or both the refractivity of the gas and the physical length of the measurement path may be changing and where the stability of the adopted light sources is sufficient and the ratio of the wavelengths of the light beams generated by the adopted light sources is matched to a known ratio value with a relative precision sufficient to meet the required precision imposed on the output data by the final end use application. The difference between the second embodiment and the first embodiment is in the manner in which the heterodyne signals of the second embodiment corresponding to signals $s_2$ and $s_3$ of the first embodiment are generated and subsequently processed.

The description of the sources of light beams **8** and **9** and of light beams **8** and **9** for the second embodiment is the same as the description of the sources of light beams **8** and **9** and of light beams **8** and **9** given for the first embodiment. With reference to FIG. **2a,** a first portion of light beam **8** is reflected by beam splitter **54E,** preferably a nonpolarizing beam splitter, reflected by mirrors **54F, 54H,** and **54G,** and passes through modulator **4** becoming light beam **10.** Modulator **4** is excited by driver **6,** modulator **4** and driver **6** being the same as modulator **4** and driver **6** of the first embodiment. A second portion of light beam **8** is transmitted by beamsplitter **54E** and passes through modulator **1004** becoming light beam **1010.** Modulator **1004** is excited by driver **1006,** modulator **1004** and driver **1006** being similar to modulator **4** and driver **6,** respectively, of the second embodiment. The $x$ polarized component of beam **10** has an oscillation frequency shifted an amount $f_2$ with respect to the $y$ polarized component of beam **10.** The $x$ polarized component of beam 1010 has an oscillation frequency shifted an amount $f_3$ with respect to the $y$ polarized component of beam **1010.** The oscillation frequency $f_3$ is determined by the driver **1006.** The frequencies $f_1, f_2,$ and $f_3$ are all different one from the other. In addition, the positive directions of the frequency shifts of the $x$ components of beams **9, 10,** and **1010** are chosen to be the same without departing from the scope and spirit of the invention.

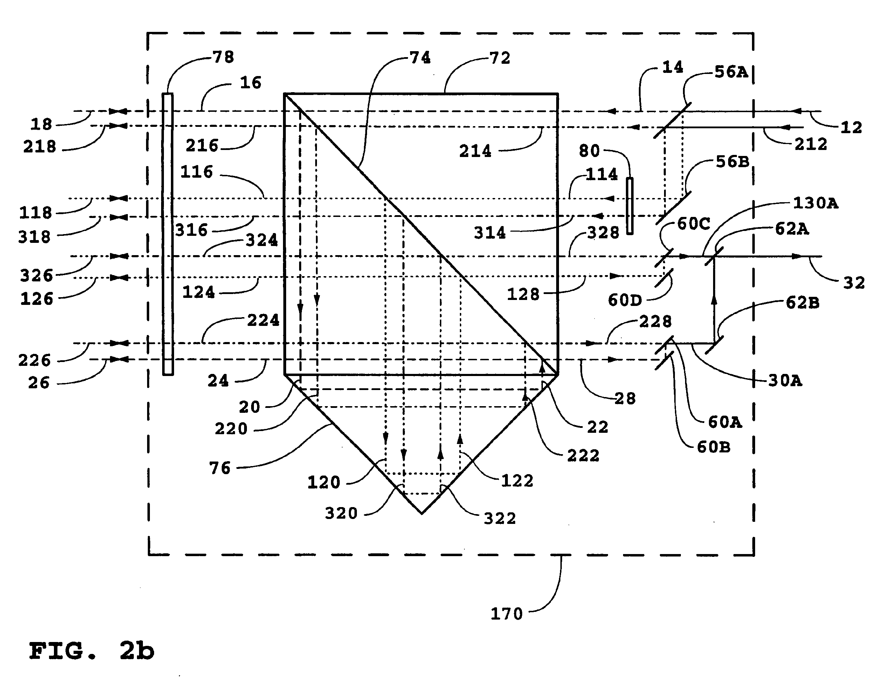

As illustrated in FIG. **2a,** beam **9** is incident on differential plane mirror interferometer **69.** Beam **10** is reflected by mirror **54D** becoming beam **12** and beam **1010** is reflected by mirror **54C** becoming beam **212.** Beams **12** and **212** are incident on differential plane mirror interferometer group **170** comprising two differential plane mirror interferometers. Beams for which the first frequency component of beam **12** is the sole progenitor are indicated in FIG. **2b** by dashed lines and beams for which the second frequency component of beam **12** is the sole progenitor are indicated in FIG. **2b** by dotted lines. Beams for which the first frequency component of beam **212** is the sole progenitor are indicated in FIG. **2b** by lines comprised of alternating dots and dashes and beams for which the second frequency component of beam **212** is the sole progenitor are indicated in FIG. **2b** by lines comprised of alternating dot pairs and dashes. Differential plane mirror interferometer **69** and differential plane mirror interferometer group **170** with beam splitter **65** and external mirrors furnished by external mirror system **90** comprise interferometric means for introducing a phase shift $\varphi_1$ between the $x$ and $y$ components of beam **9,** a phase shift $\varphi_4$ between the $x$ and $y$ components of beam **10,** and a phase shift $\varphi_5$ between the $x$ and $y$ components of beam **1010.**

Differential plane mirror interferometer **69** is the same as differential plane mirror interferometer **69** of the first preferred embodiment. The paths of the optical beams in differential plane mirror interferometer group **170** are the same as the paths of the optical beams in differential plane mirror interferometer group **70** of the first preferred embodiment up through and including the generation of beams **28, 228, 128,** and **328** as illustrated in FIG. **2b.** In the second embodiment, beams **28, 228, 128,** and **328** are combined optically to generate beam **32.** Beam **32** is a mixed beam detected by detector **186,** beam **32** being comprised of two components having the same polarizations but different frequencies.

Beam **32** is generated from beams **28, 228, 128,** and **328** by the following steps. Beam **28** is reflected by mirror **60B,** a portion subsequently reflected by mirror **60A,** preferably a 50/50 nonpolarizing beam splitter, to form one part of beam **30A.** A portion of beam **228** is transmitted by beam splitter **60A** to form a second part of beam **30A,** the first and second parts of beam **30A** having the same polarization and the same frequencies. To the extent that the amplitudes of beams **28** and **228** are the same, to the extent that beam splitter **60A** is a 50/50 beam splitter, and to the extent that the optical paths lengths for beams **28** and **228** are the same, substantially all of the beams **28** and **228** will be present in beam **30A** because of constructive interference.

Beam **128** is reflected by mirror **60D,** a portion subsequently reflected by mirror **60C,** preferably a 50/50 nonpolarizing beam splitter, to form one part of beam **130A.** A portion of beam **328** is transmitted by beam splitter **60C** to form a second part of beam **130A,** the first and second parts of beam **130A** having the same polarizations and the same frequencies. To the extent that the amplitudes of beams **128** and **328** are the same, to the extent that beam splitter **60C** is a 50/50 beam splitter, and to the extent that the optical paths lengths for beams **128** and **328** are the same, substantially all of the beams **128** and **328** will be present in beam **130A** because of constructive interference. Beams **30A** and **130A** also have the same polarizations but different frequencies. Beam **130A** and **30A** contain information at wavelength $\lambda_2$ about optical path lengths through the measurement leg including measurement path **98** and about optical path lengths through the reference leg, respectively.

In a next step, beam **30A** is reflected by mirror **62B** and then a portion of beam **30A** reflected by beam splitter **62A,** preferably a nonpolarizing beam splitter, to become a first component of beam **32.** A portion of beam **130A** is transmitted by beam splitter **62A** to become a second component of beam **32.** Beam **32** is a mixed beam, the first and second components of beam **32** having the same polarizations but different frequencies.

The magnitude of phase shifts $\varphi_1, \varphi_4,$ and $\varphi_5$ are related to the difference $L_i$ between the round-trip physical length of path $i$ of measurement path **98** and of reference paths shown in FIGS. **1d** and **1e** according to the formulae

$$\varphi_1(t) = \sum_{i=1}^{i=p_1} \varphi_{1,i}(t_i) = \sum_{i=1}^{i=p_1} L_i(t_i)k_1 n_{1i} + \zeta_1 \quad ,$$

$$\varphi_4(t) = \sum_{i=1}^{i=p_2} \varphi_{4,i}(t_i) = \sum_{i=1}^{i=p_2} L_i(t_i)k_2 n_{2i} + \zeta_4 \quad , \tag{46}$$

$$\varphi_5(t) = \sum_{i=p_2+1}^{i=p_1} \varphi_{5,i}(t_i) = \sum_{i=p_2+1}^{i=p_1} L_i(t_i)k_2 n_{2i} + \zeta_5 \quad ,$$

for the case of $p_1 = 2p_2$ where $n_{ji}$ are the refractive indices of gas in path $i$ of measurement path **98** corresponding to wavenumber $k_j = (2\pi)/\lambda_j$. The nominal value for $L_i$ corresponds to twice the spatial separation of mirror surfaces **95** and **96** in external mirror system **90** (*cf.* FIGS. **1d** and **1e**). The phase offsets $\zeta_\ell$ comprise all contributions to the phase shifts $\varphi_\ell$ that are not related to the measurement path **98** or reference paths. To those skilled in the art, the generalization to case when $p_1 \neq 2p_2$ is a straight forward procedure. In FIGS. **2a-2b,** differential plane mirror interferometer **69,** differential plane mirror interferometer group **70,** beam splitter **65,** and external mirror system **90** are configured so that $p_1 = 4$ and $p_2 = 2$, respectively, so as to illustrate in the simplest manner the function of the apparatus of the second preferred embodiment of the present invention.

In a next step as shown in FIG. **2a,** beams **45** and **32** impinge upon photodetectors **85** and **186,** respectively, resulting in electrical interference signal, heterodyne signals $s_1$ and $S_{4+5} = s_4 + s_5$, respectively, preferably by photoelectric detection. There are heterodyne signals other than $s_4$ and $s_5$ created by beam **32** impinging upon photodetector **186.** However, these other heterodyne signals are not detected in subsequent signal processing and thus not included in the description of the second embodiment without departing from the scope and spirit of the present invention. The signal $s_1$ corresponds to the wavelength signal $\lambda_1$ and the signal $S_{4+5}$ corresponds to the wavelength $\lambda_2$. The signals $s_\ell$ have the form

$$s_\ell = A_\ell \cos\left[\alpha_\ell(t)\right] \quad , \qquad \ell = 1,\ 4,\ \text{and}\ 5 \quad , \tag{47}$$

where the time-dependent arguments $\alpha_\ell(t)$ are given by

$$\alpha_1(t) = 2\pi f_1 t + \varphi_1 \quad ,$$
$$\alpha_4(t) = 2\pi f_2 t + \varphi_4 \quad , \tag{48}$$
$$\alpha_5(t) = 2\pi f_3 t + \varphi_5 \quad .$$

Heterodyne signals $s_1$ and $S_{4+5}$ are transmitted as electronic signals **103** and **1104,** respectively, to electronic processor **209** for analysis in either digital or analog format, preferably in digital format.

A preferred method for electronically processing the heterodyne signals $s_1$, $s_4$, and $s_5$ is presented herewithin for the case when $l_1$ and/or $l_2$ are not low order integers. For the case when $l_1$ and $l_2$ are both low order integers and the ratio of the wavelengths matched to the ratio $(l_1/l_2)$ with a relative precision sufficient to meet the required precision imposed on the output data by the end use application, the preferred procedure for electronically processing the heterodyne signals $s_1$, $s_4$, and $s_5$ is the same as the one subsequently set down for the second variant of the second preferred embodiment.

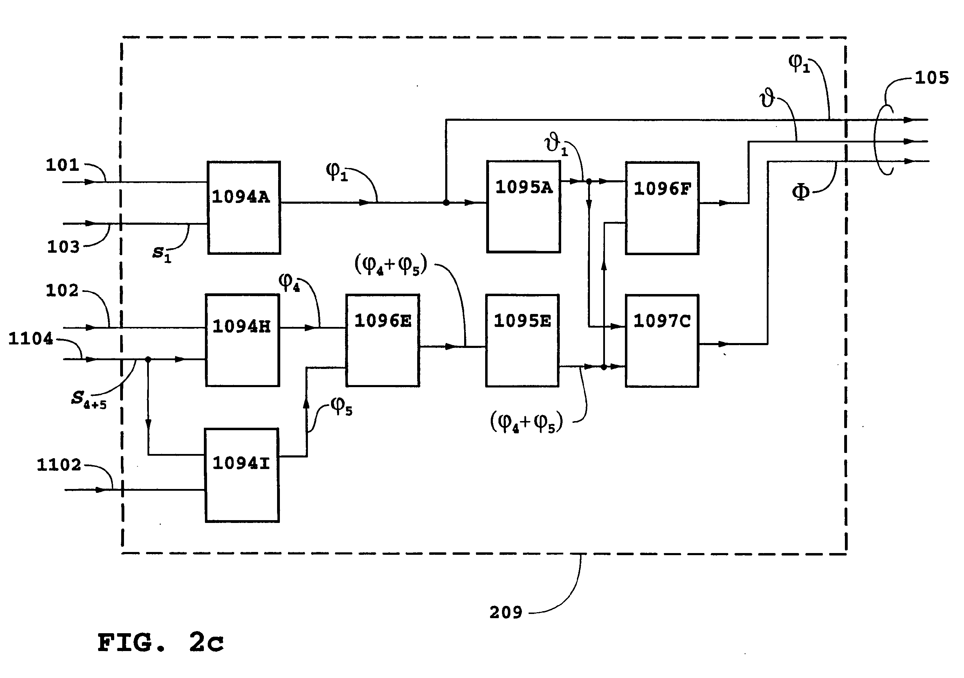

Referring now to FIG. **2c,** electronic processor **209** preferably is comprised of alphameric numbered elements wherein the numeric component of the alphameric numbers indicate the function of an element, the same numeric component/function association as described for the electronic processing elements of the first embodiment depicted in FIG. **1f.** The description of the steps in processing of heterodyne signals $s_1$, $s_4$, and $s_5$ by electronic processor **209** is the same as corresponding portions, according to the numeric component of the alphameric numbers of elements, of the descriptions given for steps in the processing of the heterodyne signals $s_1$, $s_2$, and $s_3$ of the first embodiment by electronic processor **109**.

The processing of the heterodyne signals $s_1$, $s_4$, and $s_5$ by electronic processor **209** creates three phases $\varphi_1$, $\varphi_4$, and $\varphi_5$. Formally, the properties of phases $\varphi_1$, $\varphi_4$, and $\varphi_5$ have the same properties as $\varphi_1$, $\varphi_2$, and $\varphi_3$, respectively, created by electronic processor **109** of the first embodiment. The subsequent processing of $\varphi_4$ and $\varphi_5$ by electronic processor **209** creates two phases $\vartheta$ and $\Phi$ wherein the properties of phases $\vartheta$ and $\Phi$ are formally the same as properties of $\vartheta$ and $\Phi$, respectively, created by electronic processor **109** of the first embodiment.

In the second embodiment, the frequencies of the three drivers **5, 6,** and **1006** can be chosen such that

$$f_1 = (f_2 + f_3)/2 \qquad . \tag{49}$$

This feature of the second embodiment in conjunction with another feature of the second embodiment, the detection of the optical beams creating heterodyne signals $s_4$ and $s_5$ by a single detector, can substantially eliminate the first order effects of differences in group delays which may be present in the first embodiment resulting from $f_1 \neq f_2$. The remaining description of the second embodiment is the same as corresponding portions of the description given for the first embodiment.

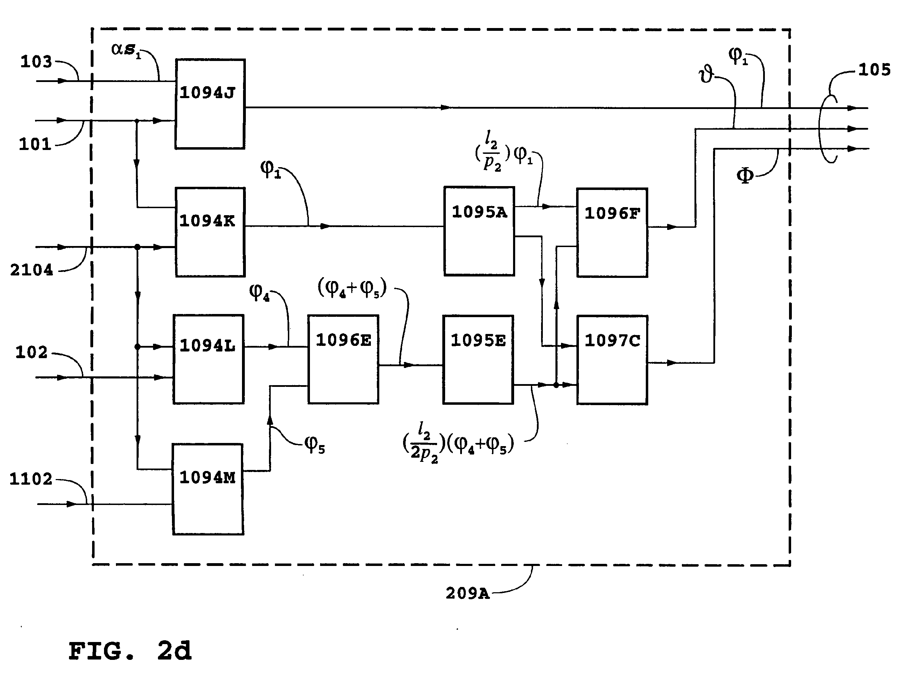

A first variant of the second preferred embodiment is disclosed wherein the description of the apparatus of the first variant of the second embodiment is the same as that given for the apparatus of the second embodiment except with regard to the detection of beams **45** and **32** of the second embodiment shown in FIG. **2a** and with $|f_2 - f_1| \neq |f_3 - f_1|$. In the first variant of the second embodiment, a first portion of beam **45** is detected by detector **85** creating signal proportional $s_1$, $as_1$ where $a$ is a constant, and beam **32** and a second portion of beam **45** are detected by a single detector (not shown in the figures) creating signal $S_{b1+4+5} = bs_1 + s_4 + s_5$ where $b$ is a constant. The description of $S_{b1+4+5}$ with regard to omitted heterodyne components is the same as the corresponding portion of the description given for $S_{4+5}$ of the second embodiment with regard of omitted heterodyne terms. Heterodyne signals $as_1$ and $S_{b1+4+5}$ are transmitted as electronic signals **103** and **2104,** respectively, in either digital or analog format, preferably in digital format, to electronic processor **209A** shown in diagrammatic form in FIG. **2d** for analysis.

Referring now to FIG. **2d,** electronic processor **209A** preferably is comprised of alphameric numbered elements wherein the numeric component of the alphameric numbers indicate the function of an element, the same numeric component/function association as described for the electronic processing elements of the first embodiment depicted in FIG. **1f** and the second embodiment depicted in FIG. **2c.** The description of the steps in processing of the heterodyne signals $bs_1$, $s_4$, and $s_5$ comprising $S_{b1+4+5}$ by electronic processor **209A** for phases $\vartheta$ and $\Phi$ is the same as corresponding portions, according to the numeric component of the alphameric numbers of elements, of the description of steps in the processing of the heterodyne signals $s_1$, $s_4$, and $s_5$ of the second embodiment by electronic processor **209.** The description of the steps in processing of the heterodyne signal $as_1$ by electronic processor **209A** for phase $\varphi_1$ is the same as corresponding portions, according to the numeric component of the alphameric numbers of elements, of the description of steps in the processing of the heterodyne signal $s_1$ of the second embodiment by electronic processor **209.**

The phases $\varphi_1$, $\vartheta$, and $\Phi$ created by electronic processor **209A** formally have the same properties as $\varphi_1$, $\vartheta$, and $\Phi$, respectively, created by electronic processor **209** of the second embodiment.

The feature of the first variant of the second embodiment which can be a significant feature is the detection the optical beams creating heterodyne signals $bs_1$, $s_4$, and $s_5$ by a single detector. It will be apparent to those skilled in the art that the single detector feature of the first variant of the second embodiment can be important in reducing or eliminating the effects of differences in certain group delays possible in the second embodiment. The remaining description of the first variant of the second embodiment is the same as corresponding portions of the description given for the second embodiment.

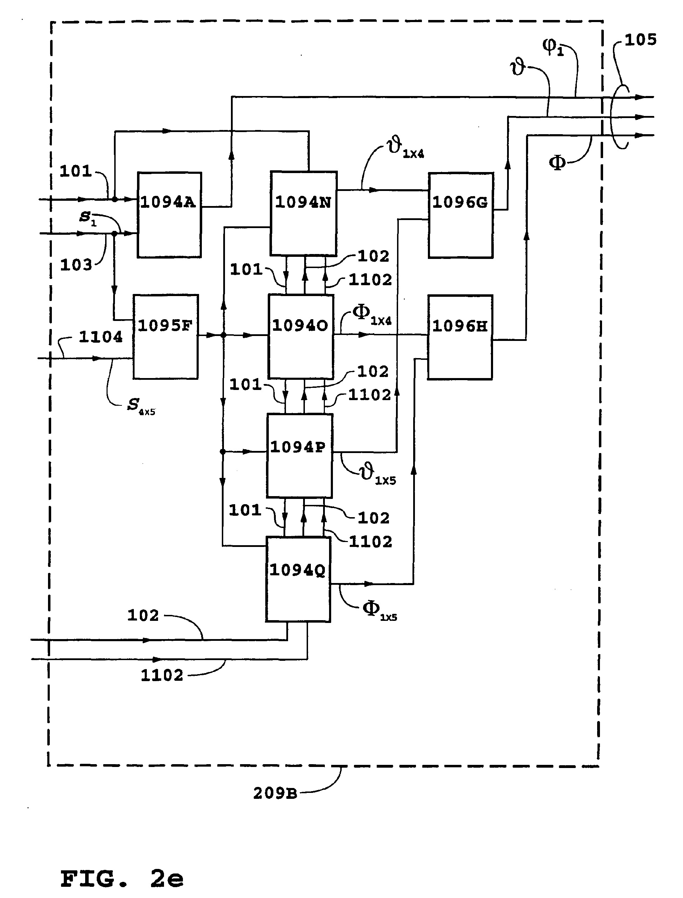

Reference is now made to FIGS. **2a, 2b,** and **2e** which taken together depict in diagrammatic form a second variant of the second preferred embodiment of the present invention for measuring and monitoring the refractivity of a gas in a measurement path and/or the change in the optical path length of the measurement path due to the gas wherein either or both the refractive index of the gas and the physical length of the measurement path may be changing and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the second embodiment in which the ratio $(l_1/l_2)$ is expressible as the ratio of low order non-zero integers $(p_1/p_2)$, the same as expressed by Eq. (26), which corresponds to the wavelengths $\lambda_1$ and $\lambda_2$ being approximately harmonically related.

The description of the sources of light beams **8** and **9** and of light beams **9, 10,** and **1010** for the second variant of the second embodiment is the same as that for description of the sources of light beams **8** and **9** and of light beams **9, 10,** and **1010** given for the second embodiment with an additional requirement, the additional requirement that the wavelengths be harmonically related to a relative precision sufficient to meet the required precision imposed on the output data by the final end use application. The description of the apparatus for the second variant of the second embodiment depicted in FIGS. **2a** and **2b** is the same as corresponding portions of the description given for the second embodiment for the case where $p_1 = 4$ and $p_2 = 2$.

Referring now to FIG. **2e,** electronic processor **209B** preferably is comprised of alphameric numbered elements wherein the numeric component of the alphameric numbers indicate the function of an element, the same numeric component/function association as described for the electronic processing elements of the first embodiment depicted in FIG. **1f** and the second embodiment depicted in FIG. **2c.** The description of the steps in processing of heterodyne signals $s_4$ and $s_5$ comprising $S_{4+5}$ and $s_1$ by electronic processor **209B** for phases $\vartheta$ and $\Phi$ is the same as corresponding portions, according to the numeric component of the alphameric numbers of elements, of the descriptions of steps in the processing of the heterodyne signals $s_1$, $s_2$, and $s_3$ of the second variant of the first embodiment by electronic processor **109A**. The description of the steps in processing of the heterodyne signal $s_1$ by electronic processor **209A** for phase $\varphi_1$ is the same as corresponding portions, according to the numeric component of the alphameric numbers of elements, of the description of steps in the processing of the heterodyne signals $s_1$ of the second variant of the first embodiment by electronic processor **109A** for phase $\varphi_1$.

The principal advantage of the second variant of the second embodiment in relation to the second embodiment is substantially the same as the principal advantage of the second variant of the first embodiment in relation to the first embodiment with the addition of the advantage of the second embodiment relative to the first embodiment regarding the use of a single detector to detect $s_4$ and $s_5$. The remaining description of the second variant of the second embodiment is the same as corresponding portions of the description given for the second embodiment.

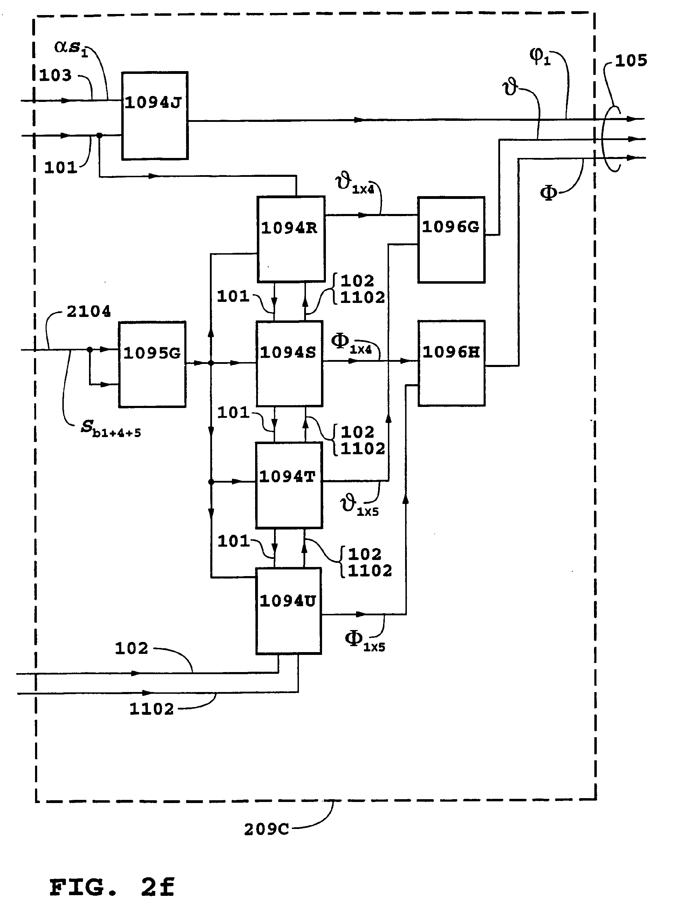

Reference is now made to FIGS. **2a, 2b,** and **2f** which taken together depict in diagrammatic form a third variant of the second preferred embodiment of the present invention for measuring and monitoring the refractivity of a gas in a measurement path and/or the change in the optical path length of the measurement path due to the gas wherein either or both the refractive index of the gas and the physical length of the measurement path may be changing and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the second embodiment in which the ratio $(l_1/l_2)$ is expressible as the ratio of low order non-zero integers $(p_1/p_2)$, the same as expressed by Eq. (26), which corresponds to the wavelengths $\lambda_1$ and $\lambda_2$ being approximately harmonically related.

The description of the sources of light beams **8** and **9** and of light beams **9, 10,** and **1010** for the third variant of the second embodiment is the same as that for description of the sources of light beams **8** and **9** and of light beams **9, 10,** and **1010** given for the second variant of the second embodiment. The description of the apparatus of the third variant of the second embodiment other than the description of the sources of light beams **8** and **9** is the same as that given for the corresponding apparatus of the first variant of the second embodiment. Heterodyne signals $as_1$ and $S_{b1+4+5}$ created by the detectors of the third variant of the second embodiment are transmitted as electronic signals **103** and **2104,** respectively, in either digital or analog format, preferably in digital format, to electronic processor **209C** shown in diagrammatic form in FIG. **2f** for analysis.

Referring now to FIG. **2f,** electronic processor **209C** preferably is comprised of alphameric numbered elements wherein the numeric component of the alphameric numbers indicate the function of an element, the same numeric component/function association as described for the electronic processing elements of the first embodiment depicted in FIG. **1f** and the second embodiment depicted in FIG. **2c.** The description of the steps in processing of the heterodyne signals $bs_1$, $s_4$, and $s_5$ comprising $S_{b1+4+5}$ by electronic processor **209C** for phases $\vartheta$ and $\Phi$ is the same as corresponding portions, according to the numeric component of the alphameric numbers of elements, of the description of steps in the processing of the heterodyne signals $s_1$, $s_4$, and $s_5$ of the second embodiment by electronic processor **209** and of the second variant of the second embodiment by electronic processor **209B**. The description of the steps in processing of the heterodyne signal $as_1$ by electronic processor **209C** for phase $\varphi_1$ is the same as corresponding portions, according to the numeric component of the alphameric numbers of elements, of the description of steps in the processing of the heterodyne signal $s_1$ of the second embodiment by electronic processor **209.**

The principal advantage of the third variant of the second embodiment in relation to the second embodiment is substantially the same as the principal advantage of the second variant of the first embodiment in relation to the first embodiment with the addition of the advantage of the first variant of the second embodiment relative to the first embodiment regarding the use of a single detector to detect $bs_1$, $s_4$, and $s_5$. The remaining description of the third variant of the second embodiment is the same as corresponding portions of the descriptions given for the second embodiment and the second variant of the second embodiment.

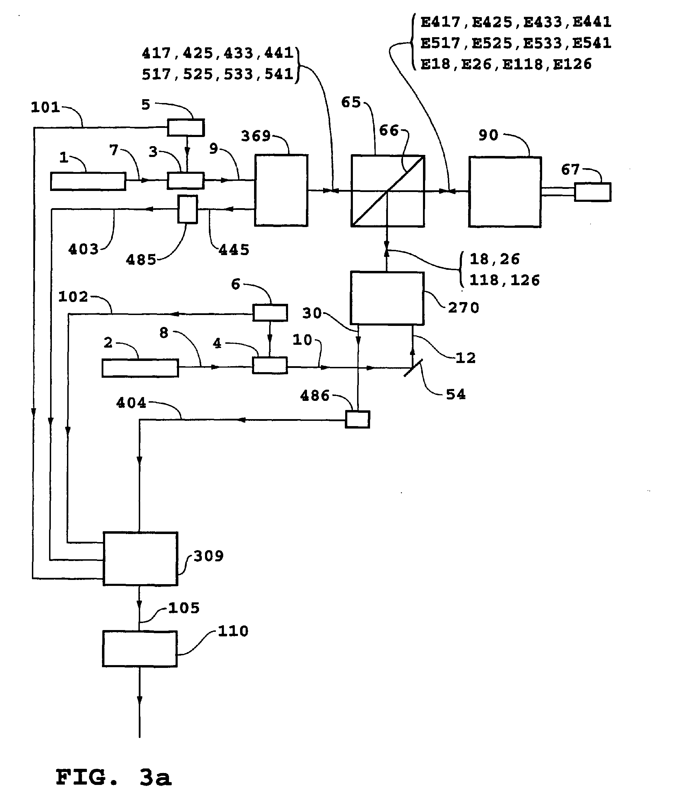

Reference is now made to FIGS. **3a-3g** which depict in diagrammatic form the third preferred embodiment of the present invention for measuring and monitoring the refractivity of a gas in a measurement path and/or the change in the optical path length of the measurement path due to the gas wherein either or both the refractivity of the gas and the physical length of the measurement path may be changing. The primary difference between the third embodiment and the first embodiment and variants thereof lies in the design and utilization of differential plane mirror interferometers. The description of the sources of light beams **9** and **10** and of light beams **9** and **10** for the third embodiment is the same as the description of the sources of light beams **9** and **10** and of light beams **9** and **10** given for the first preferred embodiment of the present invention.

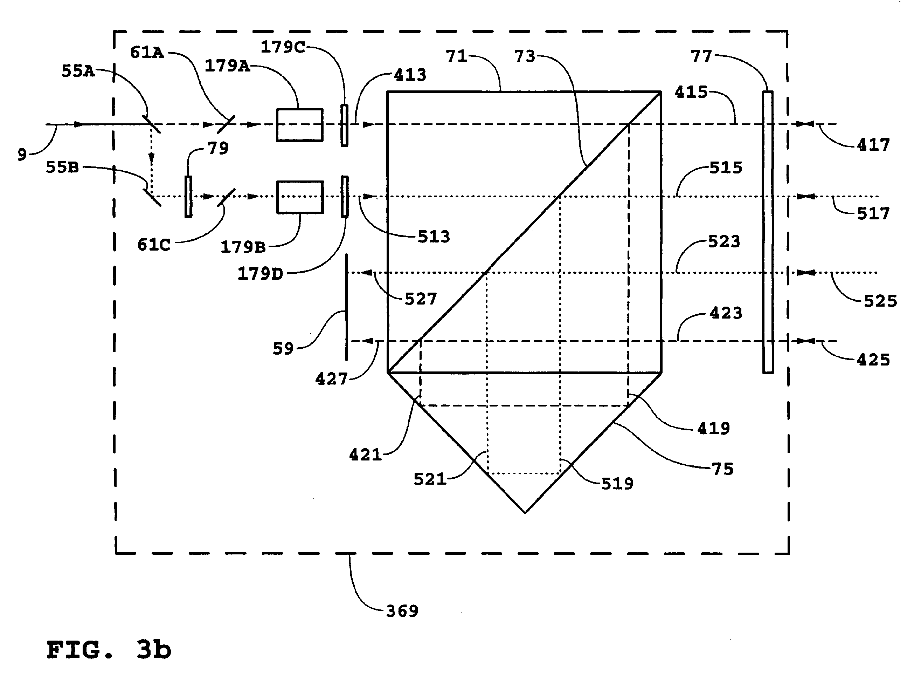

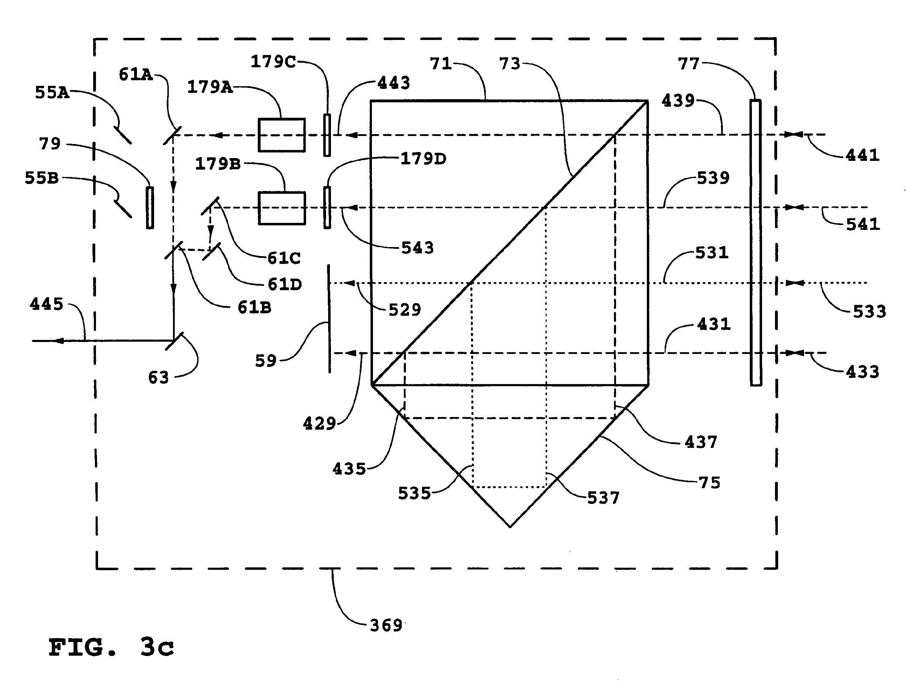

As illustrated in FIG. **3a,** beam **10** is reflected by mirror **54** becoming beam **12.** Beam **9** is incident on differential plane mirror interferometer **369** and beam **12** is incident on differential plane mirror interferometer **270.** Beams for which the first frequency component of beam **9** is the sole progenitor are indicated in FIGS. **3b** and **3c** by dashed lines and beams for which the second frequency component of beam **9** is the sole progenitor are indicated in FIGS. **3b** and **3c** by dotted lines. Differential plane mirror interferometers **369** and **270,** beam splitter **65,** and external mirrors furnished by external mirror system **90** comprise interferometric means for introducing a phase shift $\varphi_6$ between the $x$ and $y$ components of beam **9** and a phase shift $\varphi_7$ between the $x$ and $y$ components of beam **12.**

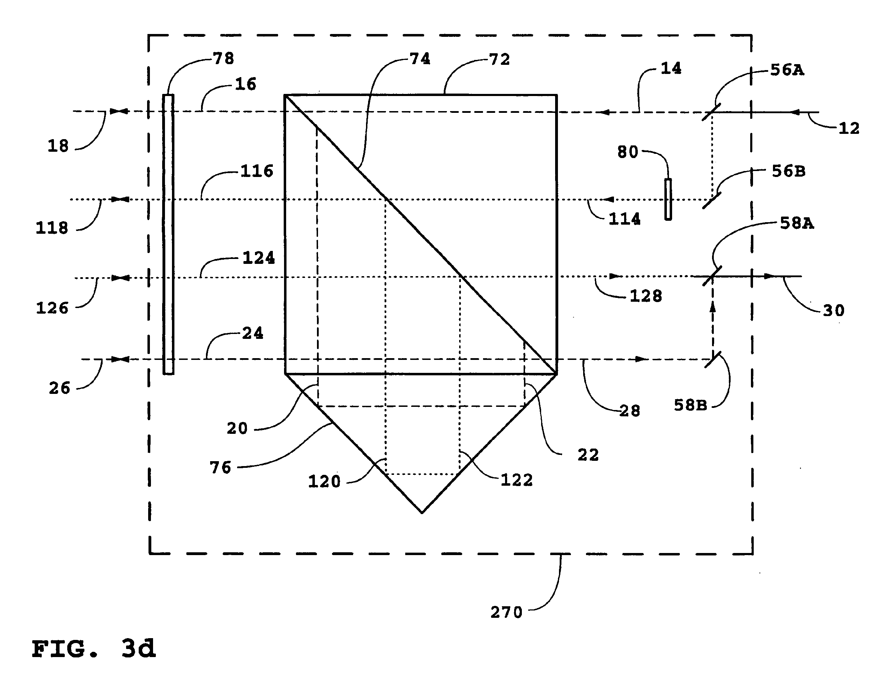

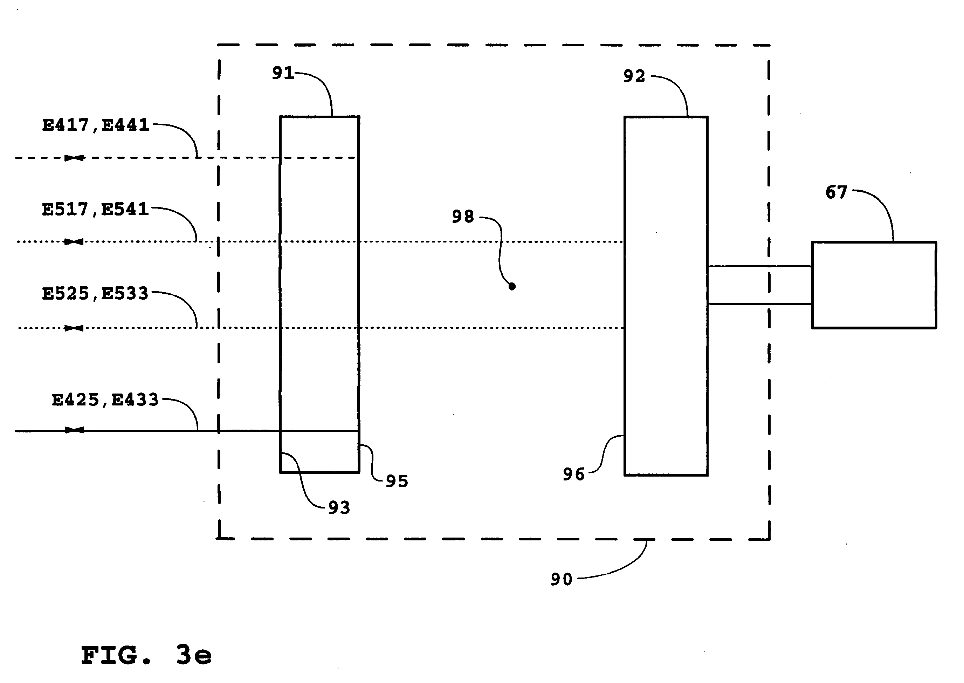

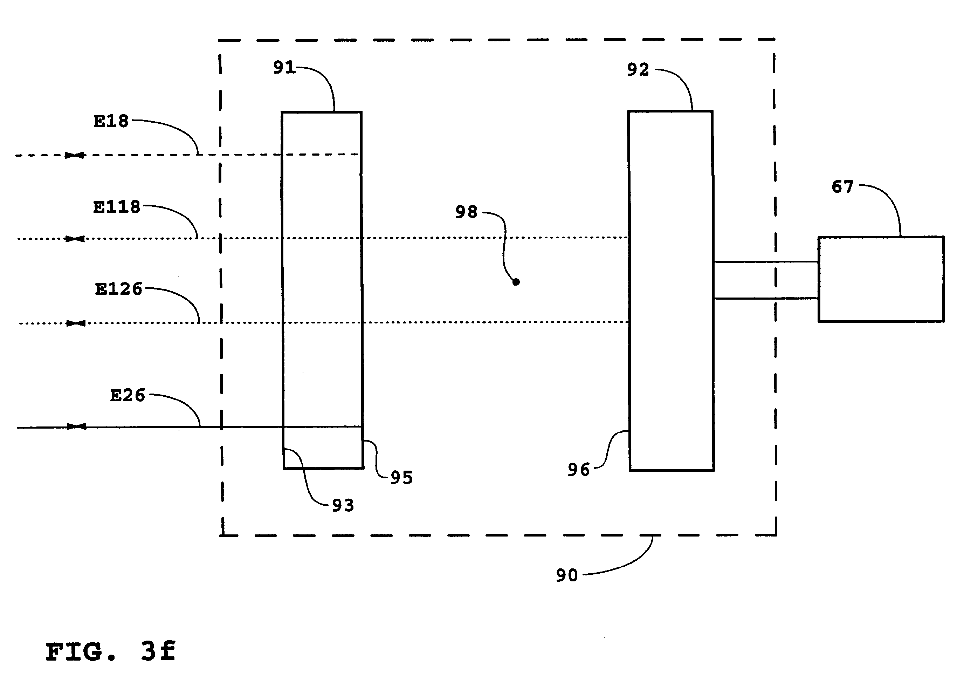

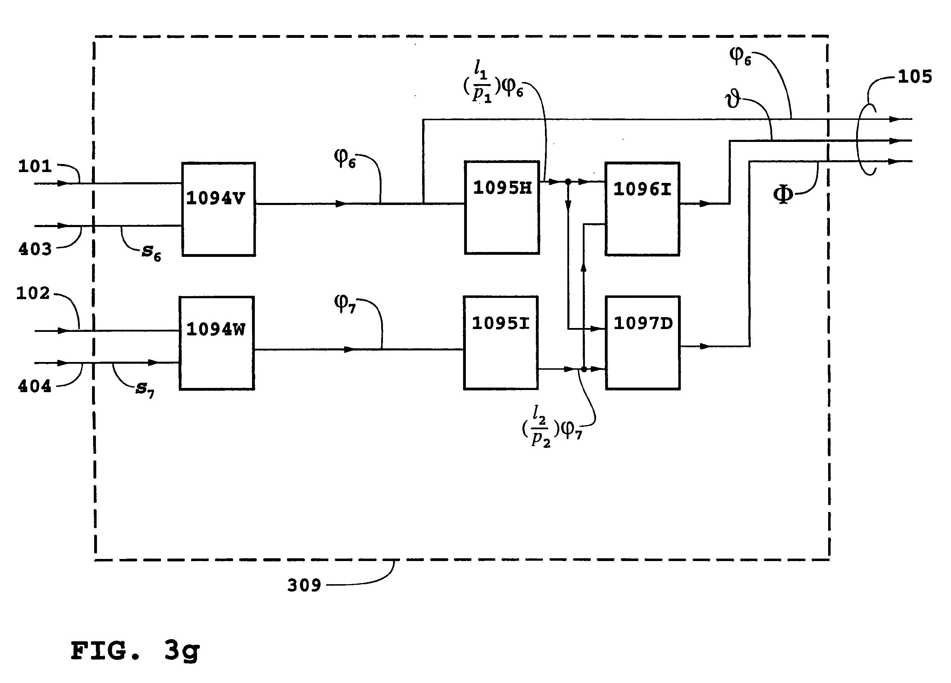

Differential plane mirror interferometer **369** has eight exit/return beams, four exit/return beams **417, 425, 517,** and **525** as shown in FIG. **3b** and four exit/return beams **433, 441, 533,** and **541** as shown in FIG. **3c.** Beams **417, 425, 433,** and **441** originating from one frequency component of beam **9** comprise a reference leg and beams **517, 525, 533,** and **541** originating from a second frequency component of beam **9** comprise a measurement leg. Beams **417, 425, 433, 441, 517, 525, 533,** and **541** are incident on beam splitter 65 and transmitted by coating **66,** preferably a dichroic coating, as beams **E417, E425, E433, E441, E517, E525, E533,** and E541, respectively. Beams **E417, E425, E433, E441, E517, E525, E533,** and **E541** are incident on external mirror system **90,** as illustrated in FIGS. **3e** and **3f,** which results in beams **443** and **543** (Fig. 3). Beam **543** and **443** contain information at wavelength $\lambda_1$ about optical path lengths through the gas in measurement path **98** wherein the effects of the refractivity of the gas is to be determined and about optical path lengths through the reference leg, respectively.

Differential plane mirror interferometer **270** has four exit/return beams **18, 26, 118,** and **126** as shown in FIG. **3a.** Beams **18** and **26** originating from one frequency component of beam **12** comprise a reference leg and beams **118** and **126** originating from a second frequency component of beam **12** comprise a measurement leg. Beams **18, 26, 118,** and **126** are incident on beam splitter **65** and reflected by dichroic coating **66** as beams **E18, E26, E118,** and **E126,** respectively. Beams **E18, E26, E118,** and **E126** are reflected back on themselves by external mirror system **90,** as illustrated in FIG. **3f,** reflected by coating **66** of beam splitter **65,** and are incident on differential plane mirror interferometer **270** resulting in beams **28** and **128** (Fig. 3d) Beams **128** and **28** contain information at wavelength $\lambda_2$ about optical path lengths through the measurement leg including the gas of measurement path **98** wherein the effects of the refractivity of the gas is to be determined and about optical path lengths through the reference leg, respectively.

The magnitude of phase shifts $\varphi_6$ and $\varphi_7$ are related to the difference $L_i$ between the round-trip physical length of path $i$ of measurement path **98** and of reference paths shown in FIGS. **3a-3f** according to the formulae

$$\varphi_6 = \sum_{i=1}^{i=p_1} \varphi_{6,i} = \sum_{i=1}^{i=p_1} L_i k_1 n_{1i} + \zeta_6 \quad,$$

$$\varphi_7 = \sum_{i=1}^{i=p_2} \varphi_{7,i} = \sum_{i=1}^{i=p_2} L_i k_2 n_{2i} + \zeta_7 \quad.$$

$$(50)$$

The illustration in FIGS. **3b-3f** is for $p_1 = 4$ and $p_2 = 2$ so as to illustrate in the simplest manner the function of the invention in the second preferred embodiment.

Beam **443,** as illustrated in FIG. **3c,** is transmitted by half-wave phase retardation plate **179C** and Faraday rotator **179A,** reflected by beam splitter **61A,** partially transmitted by beam splitter **61B,** and then reflected by mirror **63** to become a first component of phase-shifted beam **445.** Half-wave phase retardation plate 179C and Faraday rotator 179A each rotate the polarization of beam **443** by 45° so that the first component of phase-shifted beam **445** is orthogonally polarized to the polarization of beam **443.** Beam splitter **61A** is preferably a polarizing beam splitter and beam splitter **61B** is preferably a nonpolarizing beam splitter. Beam **543** is transmitted by half-wave phase retardation plate **179D** and Faraday rotator **179B,** reflected by beam splitter **61C,** reflected by mirror **61D,** partially reflected by beam splitter **61B,** and then reflected by mirror **63** to become a second component of phase-shifted beam **445.** Half-wave phase retardation plate **179D** and Faraday rotator **179B** each rotate the polarization of beam **543** by 45° so that the second component of phase-shifted beam **445** is orthogonally polarized to the polarization of beam **543.** Beam splitter **61C** is preferably a polarizing beam splitter. Phase-shifted beam **445** is a mixed beam, the first and second components of phase-shifted beam **445** having the same polarizations but different frequencies.

Beam **28** is reflected by mirror **58B** and then a portion reflected by beam splitter **58A,** preferably a nonpolarizing beam splitter, to become a first component of phase-shifted beam **30.** A portion of beam **128** is transmitted by beam splitter **58A** to become a second component of phase-shifted beam **30.** Phase-shifted beam **30** is a mixed beam, the first and second components of phase-shifted beam **30** having the same polarizations but different frequencies.

In a next step as shown in FIG. **3a,** phase-shifted beams **445** and **30** impinge upon photodetectors **485** and **486,** respectively, resulting in two electrical interference signals, heterodyne signals $s_6$ and $s_7$, respectively, preferably by photoelectric detection. The signal $s_6$ corresponds to wavelength $\lambda_1$ and signal $s_7$ corresponds to the wavelength $\lambda_2$. The signals $s_\ell$ have the form expressed by Eq. (3) with $\ell = 6$ and 7. The time-dependent arguments $\alpha_\ell(t)$ given by

$$\alpha_6(t) = 2\pi f_1 t + \varphi_6 \quad ,$$
$$\alpha_7(t) = 2\pi f_2 t + \varphi_7 \quad . \tag{51}$$

Heterodyne signals $s_6$ and $s_7$, are transmitted to electronic processor **309** for analysis as electronic signals **403** and **404,** respectively, in either digital or analog format, preferably in digital format.

Referring to FIG. **3g,** electronic processor **309** comprises electronic processors **1094V** and **1094W** to determine phases $\varphi_6$ and $\varphi_7$ from signals $s_6$ and $s_7$, respectively, in a manner the same as described for the determination of phases $\varphi_1$, $\varphi_2$, and $\varphi_3$ from signals $s_1$, $s_2$, and $s_3$, respectively, of the first embodiment. Next, phases $\varphi_6$ and $\varphi_7$ are multiplied by $(l_1/p_1)$ and $(l_2/p_2)$, respectively, in electronic processors **1095H** and **1095I,** respectively, preferably by digital processing, resulting in phases $(l_1/p_1)\varphi_6$ and $(l_2/p_2)\varphi_7$, respectively. The phases $(l_1/p_1)\varphi_6$ and $(l_2/p_2)\varphi_7$ are next added together in electronic processor **1096I** and subtracted one from the other in electronic processor **1097D,** preferably by digital processes, to create phases $\vartheta$ and $\Phi$, respectively.

Phases $\vartheta$ and $\Phi$ of the third embodiment are formally the same as corresponding phases $\vartheta$ and $\Phi$ of the first embodiment. Subsequent determinations in the third embodiment of the dispersion of a gas in the measuring path and/or the effects of the gas in the measuring path is the same as described for corresponding determinations in the first embodiment with $\varphi_6$ corresponding to $\varphi_1$.

The operation of differential plane mirror interferometer **369** is the same as the operation described for differential plane mirror interferometer **69** except for the means used to separate the two frequency components of input beam **9** and the means used to create the mixed output beam **445.** Referring to FIG. **3b,** a portion of beam **9** is reflected by beam splitter **55A,** preferably a polarizing beam splitter, reflected by mirror **55B,** transmitted by half-wave phase-retardation plate **79,** transmitted by beam splitter **61C,** preferably a polarizing beam splitter, transmitted by Faraday rotator **179B,** and subsequently transmitted by half-wave phase-retardation plate **179D** to become beam **513.** The Faraday rotator **179B** and the half-wave phase-retardation plate **179D** rotate the plane of polarization of transmitted beams by $\pm45°$ and $\mp45°$, respectively, producing no net rotation of the plane of polarization of transmitted beams. A portion of beam 9 is transmitted by beam splitter **55A,** transmitted by beam splitter **61A,** preferably a polarizing beam splitter, transmitted by Faraday rotator **179A,** and subsequently transmitted by half-wave phase-retardation plate **179C** to become beam **413.** The Faraday rotator **179A** and the half-wave phase-retardation plate **179C** rotate the plane of polarization of transmitted beams by $\pm45°$ and $\mp45°$, respectively, producing no net rotation of the plane of polarization of transmitted beams. Half-wave phase-retardation plate **79** rotates the plane of polarization of transmitted beam by $90°$ so that beams **413** and **513** have the same polarizations but have different frequencies. The purpose of the Faraday rotators **179A** and **179B** and the half-wave phase-retardation plates **179C** and **179D** is to have substantially no effect on the properties of beams **413** and **513** but to rotate the polarizations of beams **443** and **543,** illustrated in FIG. **3c,** by $90°$ as previously described so as to achieve an efficient spatial separation of beams **443** and **543** from the path of beam **9.**

The remaining description of the third embodiment is the same as the description given for corresponding portions of the first embodiment of the present invention.

Reference is again made to FIGS. **3a-3f** with electronic processor **309** being replaced by electronic processor **309A** (electronic processor **309A** is not depicted in a figure). These figures taken together with the noted alteration depict in diagrammatic form a first variant of the third preferred embodiment of the present invention for measuring and monitoring the refractivity of a gas in a measurement path and/or the change in the optical path length of the measurement path due to the gas wherein either or both the refractive index of the gas and the physical length of the measurement path may be changing and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the second embodiment in which the ratio

($l_1/l_2$) is expressible as the ratio of low order non-zero integers ($p_1/p_2$), the same as expressed by Eq. [(26)], which corresponds to the wavelengths $\lambda_1$ and $\lambda_2$ being approximately harmonically related.

The description of the sources of light beams **8** and **9** and of light beams **9, 10,** and **1010** for the first variant of the third embodiment is the same as that for description of the sources of light beams **8** and **9** and of light beams **9, 10,** and **1010** given for the third embodiment with an additional requirement, the additional requirement that the wavelengths be harmonically related to a relative precision sufficient to meet the required precision imposed on the output data by the final end use application. The description of the apparatus for the first variant of the third embodiment depicted in FIGS. **3a-3f** is the same as corresponding portions of the description given for the third embodiment except with respect to electronic processor **309A.**

Electronic processing means **309A** (not shown in a figure) preferably comprises means for electronically multiplying together the two heterodyne signals $s_6$ and $s_7$, (such as electronic processor **1095C** in Fig. **1g** for multiplying together signals $s_1$ and $s_2$ to create superheterodyne signal $S_{1x2}$) to create a superheterodyne signal $S_{6\times7}$ having the mathematical form

$$S_{6\times7} = s_6 s_7 \quad . \tag{52}$$

The superheterodyne signal $S_{6\times7}$ may be rewritten as

$$S_{6\times7} = S_{6\times7}^+ + S_{6\times7}^- \tag{53}$$

where

$$S_{6\times7}^+ = \frac{1}{2} A_6 A_7 \cos(2\pi\nu t + \vartheta) \quad , \tag{54}$$

$$S_{6\times7}^- = \frac{1}{2} A_6 A_7 \cos(2\pi F t + \Phi) \quad , \tag{55}$$

and

$$\nu = (f_1 + f_2) \quad , \tag{56}$$

$$\vartheta = (\varphi_6 + \varphi_7) \quad , \tag{57}$$

$$F = (f_1 - f_2) \quad , \tag{58}$$

$$\Phi = (\varphi_6 - \varphi_7) \quad . \tag{59}$$

Superheterodyne signal $S_{6\times7}$ is therefore comprised of two sidebands, $S_{6\times7}^{+}$ and $S_{6\times7}^{-}$, of equal amplitude, one sideband with frequency $\nu$ and phase $\vartheta$ and a second sideband with frequency $F$ and phase $\Phi$.

The remaining description of the first variant of the third embodiment is the same as the description given for corresponding steps of the first and third embodiments of the present invention.

It will be apparent to those skilled in the art that there are variants to the third embodiment corresponding to each of the variants of the first embodiment. The description of these variants of the third embodiment are the same as corresponding portions of the descriptions given for the corresponding variants of the first embodiment.

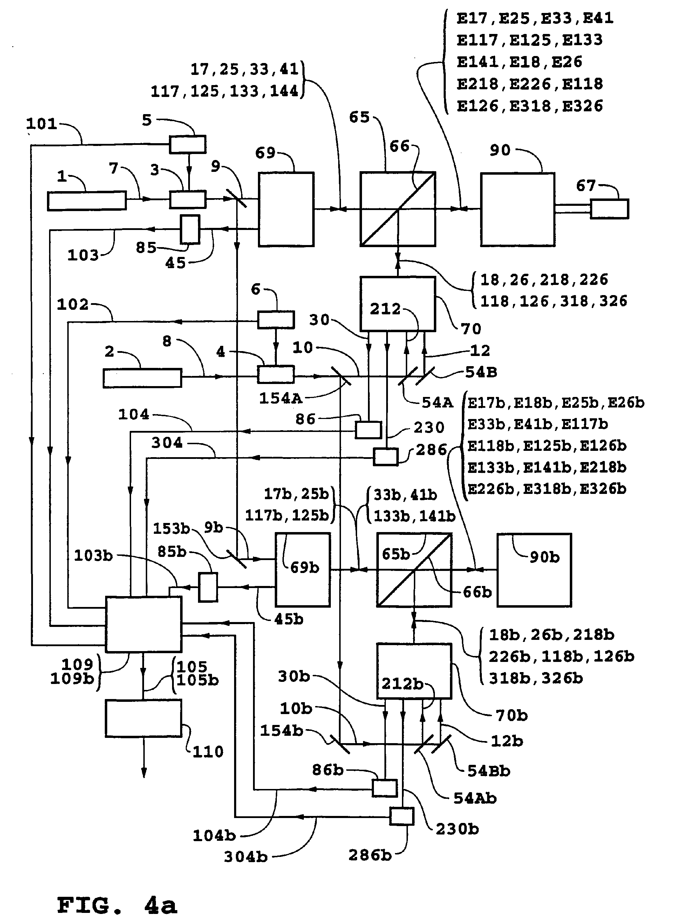

The fourth preferred embodiment of the second set of preferred embodiments of the present invention and variants thereof illustrated in FIGS. **4a-4d** are all embodiments to measure a refractivity of a gas and/or the change in the optical path length of a measurement path due to the gas when the condition set fourth in Eq. (18) for the first three preferred embodiments and variants thereof is not satisfied, *i.e.*,

$$\left| \frac{\lambda_1}{\lambda_2} - \frac{l_1}{l_2} \right| \not\ll \left( \frac{l_2}{l_1} \right)(n_2 - n_1)\varepsilon \quad . \tag{60}$$

Under the condition set fourth in Eq. (60), the approximate ratio, preferably the ratio $(K/\chi)$, must be either known or measured in accordance with Eqs. (7) and (14) for the second set of three preferred embodiments and variants thereof in addition to already described quantities in order to achieve the required accuracy in the determination of a refractivity of the gas and/or the change in the optical path of the measurement path due to the gas.

Each of the first set of three preferred embodiments and variants thereof can be converted from an apparatus and method for measuring a refractivity of the gas and/or the change in the optical path of the measurement path due to the gas to an apparatus and method for measuring $\chi$ and/or $(K/\chi)$. The conversions, as demonstrated in the following descriptions, are accomplished by changing the external mirror system of a given embodiment of the first set of three preferred embodiments and variants thereof so that the measuring path through a gas in measurement path **98** is replaced by a predetermined medium, preferably a vacuum, and the measurement leg has a fixed physical length. Accordingly, each of the second set of three embodiments and variants thereof are comprised of an unmodified and a modified apparatus and method from one of the first set of three embodiments and variants thereof, the modified apparatus and method being comprised of the unmodified apparatus and method with a modified external mirror system.

Reference is now made to FIGS. **4a-4d** which depict in diagrammatic form the fourth preferred embodiment of the present invention. The description of the source of light beams **9** and **9b** of the fourth embodiment is the same as that for light beam **9** of the first preferred embodiment and the description of the source of light beams **10** and **10b** of the fourth embodiment is the same as that for light beam **10** of the first embodiment except that the condition on wavelengths $\lambda_1$ and $\lambda_2$ expressed by Eq. (18) is replaced by the condition set fourth in Eq. (60). Light beams **9** and **9b** of the fourth embodiment are derived from a common light beam by beam splitter **153A,** preferably a nonpolarizing type, and mirror **153B** and light beams **10** and **10b** of the fourth embodiment are derived from a common light beam by beam splitter **154A,** preferably a nonpolarizing type, and mirror **154B** (*cf*. FIG. **4a**).

Because of the requirement in the fourth embodiment to measure $\chi$ and/or $(K/\chi)$, the fourth embodiment is comprised in part of the same apparatus and method as for the first embodiment and of additional means for determination of $\chi$ and/or $(K/\chi)$. The additional means for determination of $\chi$ and/or $(K/\chi)$ is the same as the apparatus and method of the first embodiment except for the external mirror system. Consequently, a number of elements of the apparatus shown in FIGS. **4a-4d** for determination of $\chi$ and/or $(K/\chi)$ perform analogous operations as apparatus of the first embodiment, apart from the suffix **"b"** when referring to apparatus for determination of $\chi$ and/or $(K/\chi)$.

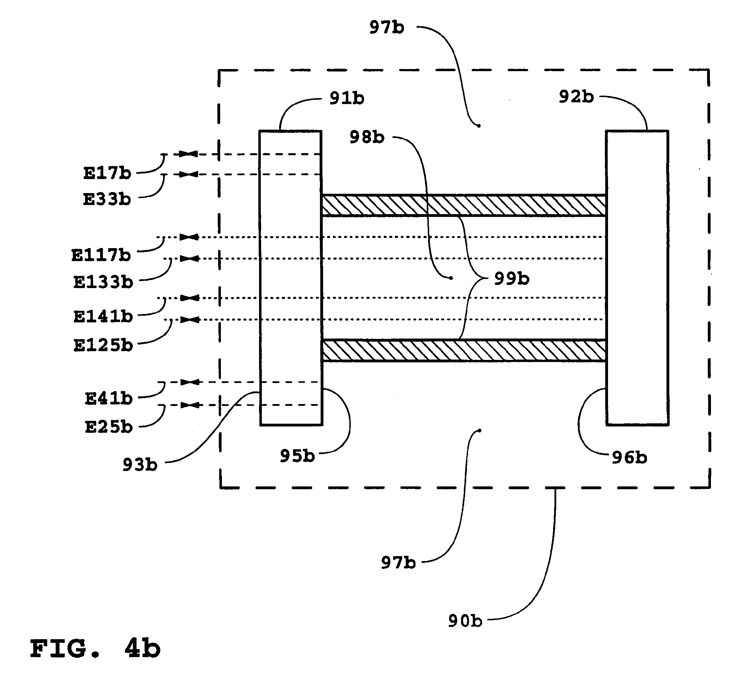

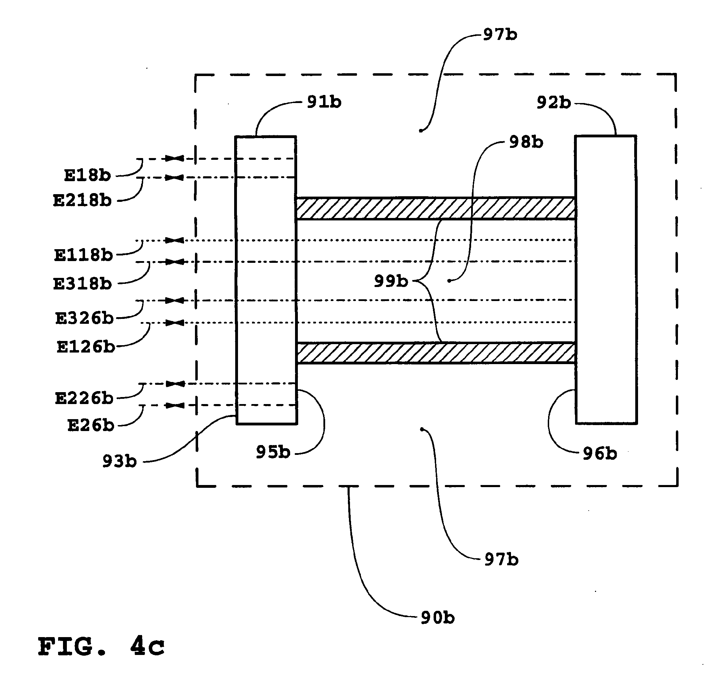

The external mirror system **90b** of the fourth embodiment is shown in FIGS. **4b** and **4c.** The description of external mirror system **90b** is the same as that for external mirror system **90** except with respect to the gas in the measurement path **98** and the round-trip physical length of the measurement path **98**. The measurement leg in the external mirror system **90b** of the fourth embodiment includes measurement path **98b** as illustrated in FIGS. **4b** and **4c,** measurement path **98b** preferably being an evacuated volume defined by mirrors **91b** and **92b** and a cylinder **99b** of fixed length $(L/2)$. Referring to FIGS. **4b** and **4c,** surface **95b** is coated so as to reflect with high efficiency beams **E17b, E25b, E33b, E41b, E18b, E26b, E218b,** and **E226b** and to transmit with high efficiency beams **E117b, E125b, E133b, E141b, E118b, E126b, E318b,** and **E326b.** Surface **96b** is coated to reflect with high efficiency beams **E117b, E125b, E133b, E141b, E118b, E126b, E318b,** and **E326b.**

The differences in the external mirror systems **90b** and **90** lead to equations for the phases $\varphi_{1b}$, $\varphi_{2b}$, and $\varphi_{3b}$ wherein the magnitude of phase shifts $\varphi_{1b}$, $\varphi_{2b}$, and $\varphi_{3b}$, counterparts to phase shifts $\varphi_1$, $\varphi_2$, and $\varphi_3$, respectively, are

related to the round-trip physical length $L_i$ of path $i$ of measurement path **98b** and to reference paths as shown in FIGS. **4b** and **4c** according to the formulae

$$\varphi_{1b} = \sum_{i=1}^{i=p_1} L_i k_1 + \zeta_{1b} \quad ,$$

$$\varphi_{2b} = \sum_{i=1}^{i=p_2} L_i k_2 + \zeta_{2b} \quad , \tag{61}$$

$$\varphi_{3b} = \sum_{i=p_2+1}^{i=p_1} L_i k_2 + \zeta_{3b} \quad .$$

The detected heterodyne signals $s_{1b}$, $s_{2b}$, and $s_{3b}$, the counterparts to heterodyne signals $s_1$, $s_2$, and $s_3$, respectively, of the first embodiment are transmitted to electronic processor **109b** as **103b**, **104b**, and **304b**, respectively, in analog or digital format, preferably in digital format.

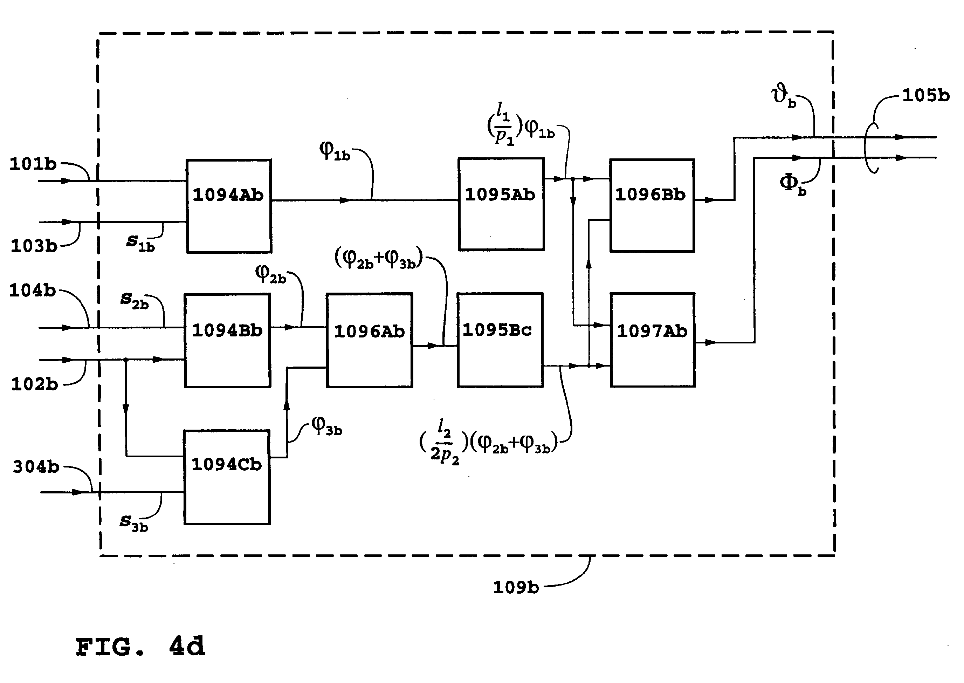

Referring now to FIG. **4d**, electronic processor **109b** preferably is comprised of alphameric numbered elements wherein the numeric component of the alphameric numbers indicate the function of an element, the same numeric component/function association as described for the electronic processing elements of the first embodiment depicted in FIG. **1f**. The description of the steps in processing of heterodyne signals $s_{1b}$, $s_{2b}$, and $s_{3b}$ by electronic processor **109b** is the same as corresponding portions, according to the numeric component of the alphameric numbers of elements, of the descriptions given for steps in the processing of the heterodyne signals $s_1$, $s_2$, and $s_3$ of the first embodiment by electronic processor **109**.

The processing of the heterodyne signals $s_{1b}$, $s_{2b}$, and $s_{3b}$ by electronic processor **109b** creates the three phases $\varphi_{1b}$, $\varphi_{2b}$, and $\varphi_{3b}$. The subsequent processing of $\varphi_{1b}$, $\varphi_{2b}$, and $\varphi_{3b}$ by electronic processor **109b** creates two phases $\vartheta_b$ and $\Phi_b$.

The ratio $(K/\chi)$ can be expressed by the formula

$$\frac{K}{\chi} = \frac{(\Phi_b - Z_b)}{(\vartheta_b - \xi_b)} \tag{62}$$

where $Z_b$ and $\xi_b$ correspond to $Z$ and $\xi$. Therefore $(K/\chi)$ is obtained by substantially dividing $\Phi_b$ by $\vartheta_b$ without the requirement for an accurate measurement of $L$ to the same precision as required for $(K/\chi)$. The phase redundancy of $\Phi_b$ can be determined as part of the same procedure used to remove the phase redundancy of $\Phi$ in the unmodified apparatus and method of the first preferred embodiment incorporated as part of the third preferred embodiment.

The refractivity of the gas and/or the change in the optical path length of a measurement path due to the gas is subsequently obtained using Eqs. (7) and/or (14), respectively. Because of the non-negligible effect of $\vartheta$ in Eqs. (7) and (14), the phase redundancy of $\vartheta$ must also be resolved in addition to the resolution of the phase redundancy of $\vartheta_b$. The remainder of the description of the fourth embodiment is the same as corresponding portions of the first embodiment except with respect to the description of the procedure for the resolution of the phase redundancies of $\vartheta$ and of $\vartheta_b$.

For those applications where changes in the measurement path can be measured interferometrically, a feature for example of an application based on a distance measuring interferometer employed for measuring changes in the measurement path, the phase redundancy in $\vartheta$ can be resolved by recording the change in $\vartheta$ as the movable mirror **92** of the external mirror system **90** is scanned in a controlled manner by translator **67** over a given length from a null position, the null position being the position where the physical lengths of the measurement and reference legs are the substantially the same. The required accuracy for the determination of the null position is typically less accurate than the accuracy required for other parameters as exemplified in the following example: for $\lambda_1 = 0.633$ $\mu$m, $(n_1 - 1) \cong 3 \times 10^{-4}$, $(n_2 - n_1) \cong 1 \times 10^{-5}$, $\varepsilon \cong 10^{-9}$, and the condition set fourth in Eq. (17), the required accuracy for the null position determination corresponds to an uncertainty in $\vartheta$ of the order of $\pm 3$.

For those applications where the determination of the refractivity and/or or the change in the optical path length due to the gas in a measurement leg is made and mirror **92** of the external mirror system does not have a scanning capability such as considered in the preceding paragraph, other procedures are available for the resolution of the phase

redundancies of $\vartheta$ and $\vartheta_b$. The effective wavelengths of $\vartheta$ and $\vartheta_b$ are substantially the same so that only procedures for the resolution of phase redundancy in either $\vartheta$ or $\vartheta_b$ need be described.

The second procedure described for the resolution of the phase redundancy of $\Phi$ can be adapted for resolution of the phase redundancies of $\vartheta$, the second procedure being based on the use of a series of external mirror systems **90** where the round-trip physical lengths $L$ for the measurement legs of the external mirror system **90** form a geometric progression. The smallest or first round-trip physical length in the series will be approximately $\lambda_1/(4p_1)$ divided by the relative precision that the initial value of $\vartheta$ is known. The physical length of the second external mirror system **90** in the series will be approximately the length of the first external mirror system **90** divided by the relative precision that $\vartheta$ is measured using the first external mirror system **90.** This is again a geometric progression procedure, the resulting physical lengths forming a geometric progression, which is continued until the length of the external mirror system **90** used to measure the refractivity or the change in optical path length due to the refractivity of the gas would be exceeded if the number of external mirror systems **90** in series were incremented by one. A typical round-trip physical length for the first external mirror system **90** in the series for the resolution of phase redundancy in $\vartheta$ is of the order of 0.1 mm, a typical round-trip physical length for the second external mirror system **90** in the series is of the order of 10 mm, and a typical round-trip physical length for a third external mirror system **90** in the series if required is of the order of 1000 mm. The physical lengths for the external mirror systems **90** in the series for the resolution of phase redundancy in $\Phi$ are typically orders of magnitude larger than the physical lengths for the external mirror systems **90** in the series for the resolution of phase redundancy in $\vartheta$.

A third procedure is based upon the use of a source (not shown in FIGS. **4a-4d)** of a series of known wavelengths and measuring $\vartheta$ for these wavelengths. The number of known wavelengths required for the resolution of the phase redundancy is generally comprised of a small set.

Another procedure to resolve the phase redundancy in $\vartheta_b$ is to observe the changes in $\vartheta_b$ as the measuring path **98b** is changed from gas to an evacuated state (the vacuum pump and requisite gas handling system are not shown in FIGS. **4a-4d)** to resolve the phase redundancy in $\vartheta_b$. The problems normally encountered in measuring absolute values for refractivity and changes in the optical path length due to the refractivity of the gas based in part on changing the gas pressure from a non-zero value to a vacuum are not present in the third preferred embodiment because of a relatively large uncertainty of the order of $\pm 3$ typically permitted in the determination of $\vartheta_b$.

The offset terms $\xi_b$ and $Z_b$ that are present in Eq. (62) are terms that require determination and may require monitoring if variable in time. One procedure for the determination of $\xi_b$ and $Z_b$ is based on replacement of mirror **91b** of the external mirror system **90b** with a mirror **Z91b** (not shown in FIGS. **4a-4c**) having a surface **Z93b** corresponding to surface **93b** of mirror **91b** coated so as be a reflecting surface for both wavelengths $\lambda_1$ and $\lambda_2$ and measuring the resulting $\vartheta_b$ and $\Phi_b$. Let the resulting values of $\vartheta_b$ and $\Phi_b$ be $\vartheta_{bR}$ and $\Phi_{bR}$, respectively. The quantities $\xi_b$ and $Z_b$ are related to $\vartheta_{bR}$ and $\Phi_{bR}$, respectively by the formulae

$$\xi_b = \vartheta_{bR} \quad , \tag{63}$$

$$Z_b = \Phi_{bR} \quad . \tag{64}$$

The non-electronic contributions to $\xi_b$ and $Z_b$ should be substantially constant in time because of the significant level of compensation that takes place in the differential plane mirror interferometer **69b,** the differential plane mirror interferometer group **70b,** beam splitter **65b,** and external mirror system **90b.** The electronic contributions to $\xi_b$ and $Z_b$ are monitored by purely electronic means (not shown).

The wavenumber $\chi$ is calculated by the computer using the measured values for $\vartheta_b$ and $\xi_b$ and the formula

$$\chi = (\vartheta_b - \xi_b)/(2L) \quad . \tag{65}$$

The ratio $K/\chi$ is calculated by the computer using Eq. (62).

It will be apparent to those skilled in the art that there are variants to the fourth embodiment corresponding to each of the variants of the first embodiment. The description of these variants of the fourth embodiment are the same as corresponding portions of the descriptions given for the corresponding variants of the first embodiment.

It will also be apparent to those skilled in the art how to construct embodiments and variants thereof which are analogs of the second embodiment and variants thereof and of the third embodiment and variants thereof in the same way that the fourth embodiment and variants thereof are analogs of the first embodiment and variants thereof.

It will be appreciated by those skilled in the art that alternative data processing may be considered for the preferred embodiments and variants thereof of the present invention without departing from the spirit and scope of the present invention.

It will also be appreciated by those skilled in the art that the differential plane mirror interferometers and the external mirror system of the additional means for the determination of $(K/\chi)$ and $\chi$ in the second set of preferred embodiments and variants thereof may be configured such that one of the light beams corresponding to one of the wavelengths may enter and exit from one end of the external mirror system and a second of the light beams corresponding to a differing second wavelength may enter and exit from an opposite end of the external mirror system in contrast to the same end as disclosed in the preferred embodiments and variants thereof without departing from the scope or spirit of the invention as defined in the claims. With the reconfiguring of the external mirror system, beam splitter **65b** may obviously be omitted, the light beams of differing wavelengths entering and exiting through the mirrors **91b** and **92b** with the reflecting and transmitting coatings on mirror surfaces **95b** and **96b** having been reconfigured accordingly.

It will be apparent to those skilled in the art that the embodiments and variants thereof of the present invention disclosed herein will typically generate a phase $\Phi$ with a reduced sensitivity to relative differences in group delays experienced by the heterodyne signals, the heterodyne signals for a given embodiment or variant thereof each having substantially the same frequency spectrum.

It will be further appreciated by those skilled in the art that both the $x$ and $y$ polarization components of beam **9** and/or of beam **10** of the preferred embodiments and variants thereof may be frequency shifted without departing from the scope and spirit of the invention, $f_1$ remaining the difference in frequencies of the $x$ and $y$ polarization components of beam **9** and $f_2$ remaining the difference in frequencies of the $x$ and $y$ polarization components of beam **10.** Improved isolation of an interferometer and a laser source is generally possible by frequency shifting both $x$ and $y$ polarization components of a beam, the degree of improved isolation depending on the means used for generating the frequency shifts.

It will be appreciated by those skilled in the art that the wavelength $\lambda_1$ of the light beam used for the determination of $\varphi_1$ in Eqs. (14) and (20) may be different from both of the two wavelengths used to determine the change in the optical path length of the measuring path due gas in the measuring path without departing from the scope and spirit of the present invention. The requisite reciprocal dispersive power $\Gamma_3$ would be defined in terms of the indices of refraction $n_1$, $n_2$, and $n_3$ of the gas at the three wavelengths $\lambda_1$, $\lambda_2$, and $\lambda_3$, respectively, according to the formula

$$\Gamma_3 = \frac{(n_1 - 1)}{(n_3 - n_2)} \tag{66}$$

for $\lambda_3 < \lambda_2$.

It will be further appreciated by those skilled in the art that the two frequency components of either or both beams **9** and **10** may be spatially separated at any point following the means for introducing the frequency shifts and prior to entering the respective interferometers of the described preferred embodiments without departing from the scope and spirit of the present invention. If the two frequency components of either of the two beams are spatially separated for any significant distance from the respective interferometer, it may be necessary to employ alternative reference beams such as described in the first embodiment.

The illustrations in the figures depict preferred embodiments and variants thereof of the present invention wherein all of the optical beams for an embodiment are in a single plane. Clearly, modifications using multiple planes can be made to one or more of the preferred embodiments and variants thereof without departing from the scope or spirit of the invention.

The preferred embodiments and variants thereof of the present invention have external mirror systems 90b and/or 90 wherein the measurement paths for $\lambda_1$ and $\lambda_2$ have the same round-trip physical length per pass through the system and the reference paths for $\lambda_1$ and $\lambda_2$ have the same round-trip physical length per pass. It will be appreciated by those skilled in the art that the measurement paths for $\lambda_1$ and $\lambda_2$ can have different physical lengths per pass and the reference paths for $\lambda_1$ and $\lambda_2$ can have different physical lengths per pass without departing from the scope and spirit of the present invention as defined in the claims. It will be further appreciated by those skilled in the art that the measurement paths for $\lambda_1$ and $\lambda_2$ can be physically displaced one from the other, and the reference paths for $\lambda_1$ and $\lambda_2$ can be physically displaced one from the other without departing from the scope and spirit of the present invention as defined in the claims although there may be some degradation in performance with regard frequency response of the embodiments and/or in accuracy of calculated quantities due to for example spatial gradients in the refractivity of a gas in a measurement path.

The preferred embodiments and variants thereof of the present invention are all configured for use of heterodyne detection. It will be appreciated by those skilled in the art that homodyne detection can be employed in each of the preferred embodiments and variants thereof without departing from the scope and spirit of the present invention as defined in the claims. Homodyne receivers would be employed such as disclosed in commonly owned U.S. Pat. No. 5,663,793 entitled "Homodyne Interferometric Receiver and Method," issued Sept. 2, 1997 in the name of P. de Groot. The computation of the refractivity of a gas and/or the change in the optical path length of a measurement path due to the gas would be obtained for example in the homodyne version of the first preferred embodiment directly from homodyne phases $\varphi_{1H}$ and $\varphi_{2H}$, the homodyne phases $\varphi_{1H}$ and $\varphi_{2H}$ being counterparts to phases $\varphi_1$ and $\varphi_2$ of the first preferred embodiment, and with homodyne versions of Eqs. (7) and (14).

The second set of preferred embodiments of the present invention and variants thereof measure the ratio ($K/\chi$) and $\chi$ and use the measured values of ($K/\chi$) and $\chi$ in the computation of the refractivity of a gas and/or the change in the optical path length of a measurement path due to the gas. It will be appreciated by those skilled in the art that the measured values of ($K/\chi$) and $\chi$ can be used as error signals in a feedback system such that either or both the condition expressed by Eq. (18) is satisfied and $\chi$ is constant without departing from the scope and spirit of the present invention as defined in the claims. The measured values of either or both ($K/\chi$) and $\chi$ in the feedback system are sent to either or both source **1** and source **2** and used to control the respective wavelengths of either or both source **1** and source **2,** for example by controlling either or both the injection current and temperature of a diode laser or the cavity frequency of an external cavity diode laser.

It will be appreciated by those skilled in the art that combinations of the means of the second group of preferred embodiments and variants thereof to measure the ratio ($K/\chi$) and $\chi$ and of the means of the first group of preferred embodiments and variants thereof may be used to determine the refractivity of a gas and/or the change in the optical path length of a measurement path due to the gas other than the combinations used in the second group of preferred embodiments and variants thereof without departing from the scope or spirit of the invention as defined in the claims.

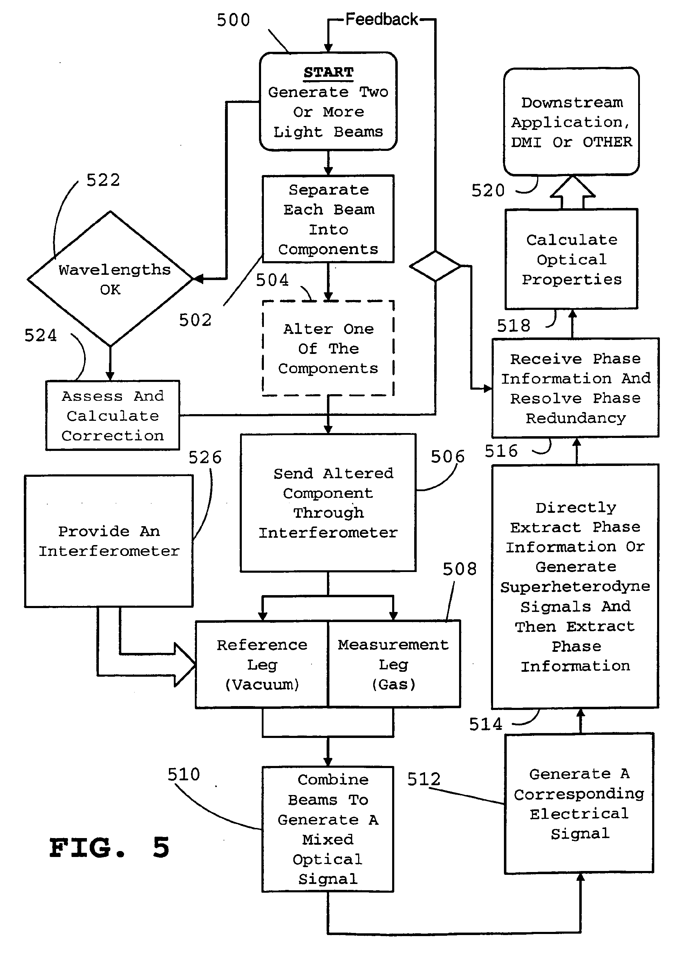

Reference is now made to FIG. **5** which is a generalized flowchart depicting via blocks **500-526** various steps for practicing an inventive method for measuring and monitoring the refractivity of a gas in a measurement path and/or the change in the optical path length of the measurement path due to the gas wherein the refractivity of the gas may be changing and/or the physical length of the measurement path may be changing. While it will be evident that the inventive method depicted in FIG. **5** may be carried out using the inventive apparatus disclosed hereinabove, it will also be apparent to those skilled in the art that it may also be implemented with apparatus other than that disclosed. For example, it will be apparent that one need not use differential plane mirror interferometers such as that used in the preferred embodiments, but rather may use other conventional interferometric arrangements so long as the required reference and measurement legs are present. In addition, it will be evident that one may use either a homodyne approach or one in which heterodyning techniques are advantageously employed. As will be further appreciated, many of the steps in FIG. **5** may be carried out via appropriate software run on a general purpose computer or a suitably programmed microprocessor either of which may be used to control other elements of the system as needed.

As seen in FIG. **5,** one starts in block **500** by providing two or more light beams having different wavelengths which preferably have an approximate harmonic relationship as previously described. In block **502,** the light beams are separated into components which in block **504** are preferably altered by either polarization or spatial encoding, or frequency shifting or both. Otherwise, the light beams may simply be left unaltered and passed through to block **506.**

As shown in blocks **522** and **524,** the relationship of the wavelengths of the light beams may be monitored and if their wavelengths are not within the limits previously discussed, one can adopt corrective measures to compensate from departures of the relationship of the wavelengths from the desired relationship of the wavelengths. Either the departures can be used to provide feedback to control the wavelengths of the light beam sources or corrections can be established and used in subsequent calculations which are influenced by departures or some combination of both approaches can be implemented.

In parallel or contemporaneously with generating the light beams in block **500,** one also provides as indicated in block **526** an interferometer having two legs, a reference leg and the other a measurement leg wherein a portion of the measurement path is in a gas whose refractivity and/or effect on the optical path length of the measurement path are to be measured.

As shown by blocks **506** and **508,** the previously generated light beam components are introduced into the interferometer legs so that each component has its phase shifted based on the optical path length it experiences in traveling through the physical length of its assigned leg.

After the beams emerge from block **508,** they are combined in block **510** to generate a mixed optical signal. These mixed optical signals are then sent to block **512** where by means of photodetection corresponding electrical signals, preferably heterodyne, are generated, and these electrical signals contain information about the relative phases between the light beam components. Preferably the electrical signals are heterodyne signals brought about by previously frequency shifting treatment.

In block **514,** the electrical signals may be directly analyzed to extract relative phase information which can then be passed on to blocks **516-520** or, superheterodyne signals are generated and subsequently analyzed for the relative phase information.

In block **516,** any phase ambiguities in homodyne, heterodyne, and/or superheterodyne signals are resolved, preferably by means and calculations previously elaborated in connection with describing the preferred embodiments.

In block **518,** the refractivity of the gas and/or the effect of the refractivity of the gas on the optical path length of the measurement path are calculated, corrections are applied as previously decided, and output signals are generated for subsequent downstream applications or data format requirements.

Those skilled in the art may make other changes to the inventive apparatus and methods without departing from the scope of the inventive teachings. Therefore, it is intended that the embodiments shown and described be considered as illustrative and not in a limiting sense.

The interferometry systems described above can be especially useful in lithography applications (as diagrammatically indicated at 67) used for fabricating large scale integrated circuits such as computer chips and the like. Lithography is the key technology driver for the semiconductor manufacturing industry. Overlay improvement is one of the five most difficult challenges down to and below 100 nm line widths (design rules), see for example the Semiconductor Industry Roadmap, p82 (1997). Overlay depends directly on the performance, *i.e.* accuracy and precision, of the distance measuring interferometers used to position the wafer and reticle (or mask) stages. Since a lithography tool may produce $50-100M/year of product, the economic value from improved performance distance measuring interferometers is substantial. Each 1% increase in yield of the lithography tool results in approximately $1M/year economic benefit to the integrated circuit manufacturer and substantial competitive advantage to the lithography tool vendor.

The function of a lithography tool is to direct spatially patterned radiation onto a photoresist-coated wafer. The process involves determining which location of the wafer is to receive the radiation (alignment) and applying the radiation to the photoresist at that location (exposure).

To properly position the wafer, the wafer includes alignment marks on the wafer that can be measured by dedicated sensors. The measured positions of the alignment marks define the location of the wafer within the tool. This information, along with a specification of the desired patterning of the wafer surface, guides the alignment of the wafer relative to the spatially patterned radiation. Based on such information, a translatable stage supporting the photoresist-coated wafer moves the wafer such that the radiation will expose the correct location of the wafer.

During exposure, a radiation source illuminates a patterned reticle, which scatters the radiation to produce the spatially patterned radiation. The reticle is also referred to as a mask, and these terms are used interchangeably below. In the case of reduction lithography, a reduction lens collects the scattered radiation and forms a reduced image of the reticle pattern. Alternatively, in the case of proximity printing, the scattered radiation propagates a small distance (typically on the order of microns) before contacting the wafer to produce a 1:1 image of the reticle pattern. The radiation initiates photo-chemical processes in the photoresist that convert the radiation pattern into a latent image within the photoresist.

The interferometry systems described above are important components of the positioning mechanisms that control the position of the wafer and reticle, and register the reticle image on the wafer.

In general, the lithography system, also referred to as an exposure system, typically includes an illumination system and a wafer positioning system. The illumination system includes a radiation source for providing radiation such as ultraviolet, visible, x-ray, electron, or ion radiation, and a reticle or mask for imparting the pattern to the radiation, thereby generating the spatially patterned radiation. In addition, for the case of reduction lithography, the illumination system can include a lens assembly for imaging the spatially patterned radiation onto the wafer. The imaged radiation exposes photoresist coated onto the wafer. The illumination system also includes a mask stage for supporting the mask and a positioning system for adjusting the position of the mask stage relative to the radiation directed through the mask. The wafer positioning system includes a wafer stage for supporting the wafer and a positioning system for adjusting the position of the wafer stage relative to the imaged radiation. Fabrication of integrated circuits can include multiple exposing steps. For a general reference on lithography, see, for example, J. R. Sheats and B. W. Smith, in Microlithography: Science and Technology (Marcel Dekker, Inc., New York, 1998), the contents of which are incorporated herein by reference.

The interferometry systems described above can be used to precisely measure the positions of each of the wafer stage and mask stage relative to other components of the exposure system, such as the lens assembly, radiation source, or support structure. In such cases, the interferometry system can be attached to a stationary structure and the measurement object attached to a movable element such as one of the mask and wafer stages. Alternatively, the situation can be reversed, with the interferometry system attached to a movable object and the measurement object attached to a stationary object.

More generally, the interferometry systems can be used to measure the position of any one component of the exposure system relative to any other component of the exposure system in which the interferometry system is attached, or supported by one of the components and the measurement object is attached, or is supported by the other of the components.

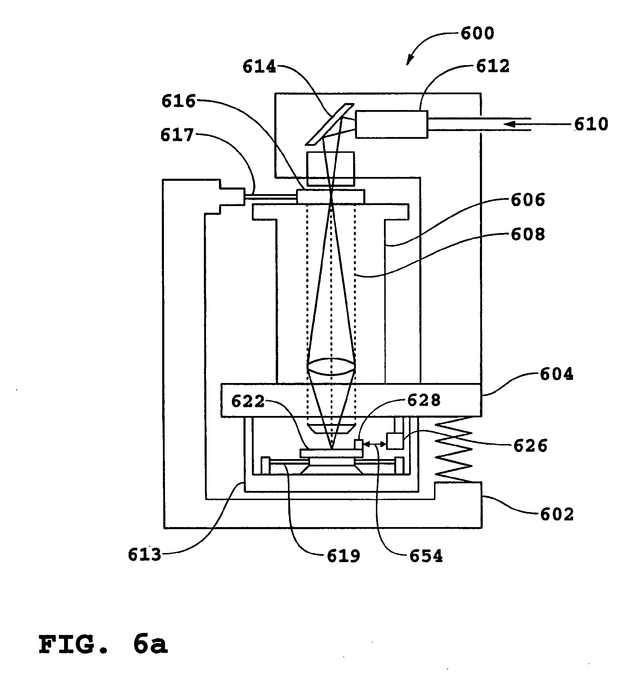

An example of a lithography scanner **600** using an interferometry system **626** is shown in Fig. **6a.** The interferometry system is used to precisely measure the position of a wafer within an exposure system. Here, stage **622** is used to position the wafer relative to an exposure station. Scanner **600** comprises a frame **602,** which carries other support structures and various components carried on those structures. An exposure base **604** has mounted on top of it a lens housing **606** atop of which is mounted a reticle or mask stage **616** used to support a reticle or mask. A positioning system for positioning the mask relative to the exposure station is indicated schematically by element **617.** Positioning system **617** can include, *e.g*., piezoelectric transducer elements and corresponding control electronics. Although, it is not included in this described embodiment, one or more of the interferometry systems described above can also be used to precisely measure the position of the mask stage as well as other moveable elements whose position must be accurately monitored in processes for fabricating lithographic structures (see *supra* Sheats and Smith *Microlithography: Science and Technology*).

Suspended below exposure base **604** is a support base **613** that carries wafer stage **622**. Stage **622** includes a plane mirror for reflecting a measurement beam **654** directed to the stage by interferometry system **626**. A positioning system for positioning stage **622** relative to interferometry system **626** is indicated schematically by element **619.** Positioning system **619** can include, *e.g*., piezoelectric transducer elements and corresponding control electronics. The measurement beam reflects back to the interferometry system, which is mounted on exposure base **604.** The interferometry system can be any of the embodiments described previously.

During operation, a radiation beam **610,** *e.g*., an ultraviolet (UV) beam from a UV laser (not shown), passes through a beam shaping optics assembly **612** and travels downward after reflecting from mirror **614.** Thereafter, the radiation beam passes through a mask (not shown) carried by mask stage **616.** The mask (not shown) is imaged onto a wafer (not shown) on wafer stage **622** via a lens assembly **608** carried in a lens housing **606.** Base **604** and the various components supported by it are isolated from environmental vibrations by a damping system depicted by spring **620.**

In other embodiments of the lithographic scanner, one or more of the interferometry systems described previously can be used to measure distance along multiple axes and angles associated for example with, but not limited to, the wafer and reticle (or mask) stages. Also, rather than a UV laser beam, other beams can be used to expose the wafer including, *e.g*., x-ray beams, electron beams, ion beams, and visible optical beams.

In addition, the lithographic scanner can include a column reference in which interferometry system **626** directs the reference beam to lens housing **606** or some other structure that directs the radiation beam rather than a reference path internal to the interferometry system. The interference signal produced by interferometry system **626** when combining measurement beam **654** reflected from stage **622** and the reference beam reflected from lens housing **606** indicates changes in the position of the stage relative to the radiation beam. Furthermore, in other embodiments the interferometry system **626** can be positioned to measure changes in the position of reticle (or mask) stage **616** or other movable components of the scanner system. Finally, the interferometry systems can be used in a similar fashion with lithography systems involving steppers, in addition to, or rather than, scanners.

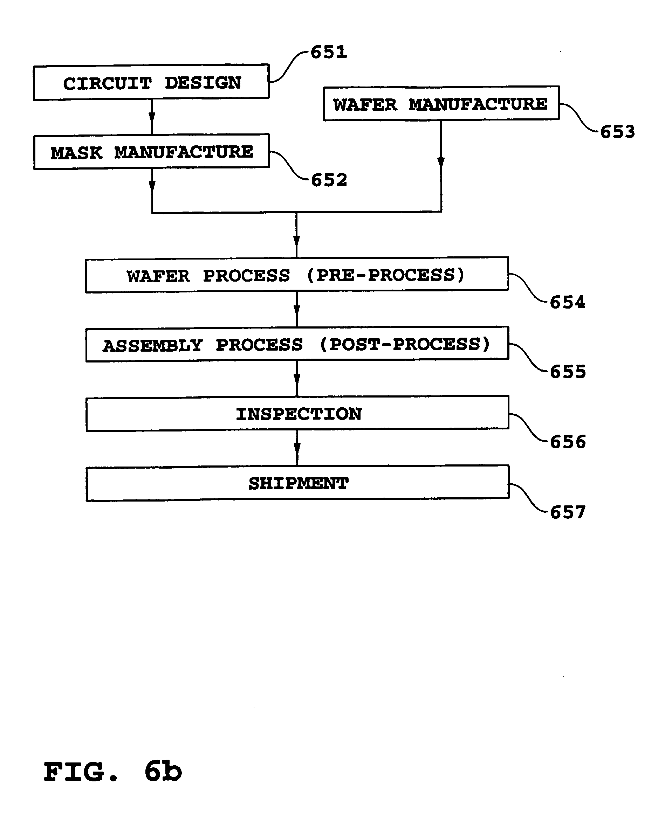

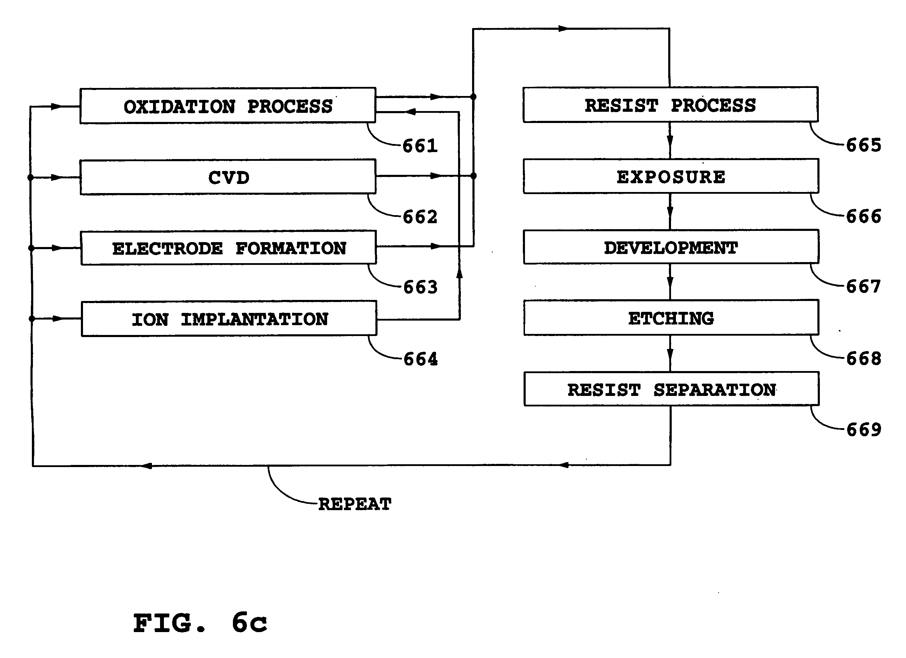

As is well known in the art, lithography is a critical part of manufacturing methods for making semiconducting devices. For example, U.S. Patent 5,483,343 outlines steps for such manufacturing methods. These steps are described below with reference to FIGS. **6b** and **6c.** FIG. **6b** is a flow chart of the sequence of manufacturing a semiconductor device such as a semiconductor chip (*e.g.* IC or LSI), a liquid crystal panel or a CCD. Step **651** is a design process for designing the circuit of a semiconductor device. Step **652** is a process for manufacturing a mask on the basis of the circuit pattern design. Step **653** is a process for manufacturing a wafer by using a material such as silicon.

Step **654** is a wafer process which is called a pre-process wherein, by using the so prepared mask and wafer, circuits are formed on the wafer through lithography. Step **655** is an assembling step, which is called a post-process wherein the wafer processed by step **654** is formed into semiconductor chips. This step includes assembling (dicing and bonding) and packaging (chip sealing). Step **656** is an inspection step wherein operability check, durability check, and so on of the semiconductor devices produced by step **655** are carried out. With these processes, semiconductor devices are finished and they are shipped (step **657**).

FIG. **6c** is a flow chart showing details of the wafer process. Step **661** is an oxidation process for oxidizing the surface of a wafer. Step **662** is a CVD process for forming an insulating film on the wafer surface. Step **663** is an electrode forming process for forming electrodes on the wafer by vapor deposition. Step **664** is an ion implanting process for implanting ions to the wafer. Step **665** is a photoresist process for applying a photoresist (photosensitive material) to the wafer. Step **666** is an exposure process for printing, by exposure, the circuit pattern of the mask on the wafer through the exposure apparatus described above. Step **667** is a developing process for developing the exposed wafer. Step **668** is an etching process for removing portions other than the developed photoresist image. Step **669** is a photoresist separation process for separating the photoresist material remaining on the wafer after being subjected to the etching process. By repeating these processes, circuit patterns are formed and superimposed on the wafer.

The interferometry systems described above can also be used in other applications in which the relative position of an object needs to be measured precisely. For example, in applications in which a write beam such as a laser, x-ray, ion, or electron beam, marks a pattern onto a substrate as either the substrate or beam moves, the interferometry systems can be used to measure the relative movement between the substrate and write beam.

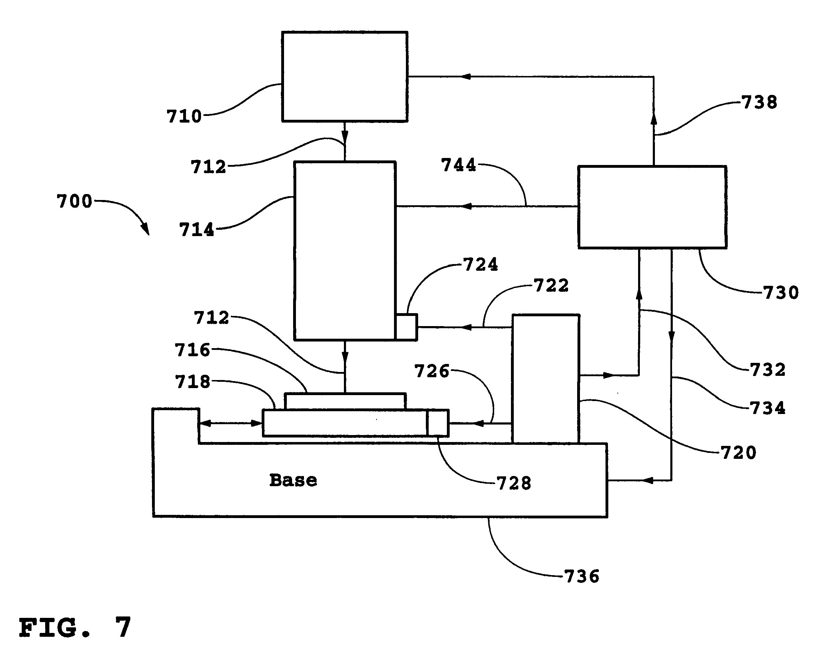

As an example, a schematic of a beam writing system **700** is shown in FIG. **7.** A source **710** generates a write beam **712,** and a beam focusing assembly **714** directs the radiation beam to a substrate **716** supported by a movable stage **718.** To determine the relative position of the stage, an interferometry system **720** directs a reference beam **722** to a mirror **724** mounted on beam focusing assembly **714** and a measurement beam **726** to a mirror **728** mounted on stage **718.** Interferometry system **720** can be any of the interferometry systems described previously. Changes in the position measured by the interferometry system correspond to changes in the relative position of write beam **712** on substrate **716.** Interferometry system **720** sends a measurement signal **732** to controller **730** that is indicative of the relative position of write beam **712** on substrate **716.** Controller **730** sends an output signal **734** to a base **736** that supports and positions stage **718.** In addition, controller **730** sends a signal **738** to source **710** to vary the intensity of, or block, write beam **712** so that the write beam contacts the substrate with an intensity sufficient to cause photophysical or photochemical change only at selected positions of the substrate. Furthermore, in some embodiments, controller **730** can cause beam focusing assembly **714** to scan the write beam over a region of the substrate, *e.g.*, using signal **744.** As a result, controller **730** directs the other components of the system to pattern the substrate. The patterning is typically based on an electronic design pattern stored in the controller. In some applications the write beam patterns a photoresist coated on the susbstrate and in other applications the write beam directly patterns, *e.g.*, etches, the substrate.

An important application of such a system is the fabrication of masks and reticles used in the lithography methods described previously. For example, to fabricate a lithography mask an electron beam can be used to pattern a chromium-coated glass substrate. In such cases where the write beam is an electron beam, the beam writing system encloses the electron beam path in a vacuum. Also, in cases where the write beam is, *e.g.*, an electron or ion beam, the beam focusing assembly includes electric field generators such as quadrapole lenses for focusing and directing the charged particles onto the substrate under vacuum. In other cases where the write beam is a radiation beam, *e.g.*, x-ray, UV, or visible radiation, the beam focusing assembly includes corresponding optics for focusing and directing the radiation to the substrate.

Yet other changes may be made to the invention. For example, it may be desirable in certain applications to monitor the refractive index of the gas contained on both the reference and in the measurement legs of the interferometer. Examples include the well-known column reference style of interferometer, in which the reference leg comprises a target optic placed at one position within a mechanical system, and the measurement leg comprises a target optic placed at a different position within the same mechanical system. Another example application relates to the measurement of small angles, for which both the measurement and reference beams impinge upon the same target optic but at a small physical offset, thereby providing a sensitive measure of the angular orientation of the target optic. These applications and configurations are well known to those skilled in the art and the necessary modifications are intended to be within the scope of the invention.

Additional alternative means of achieving substantial insensitivity to Doppler shifting in a heterodyne interferometer is to track the Doppler shift and compensate by either (1) adjusting the frequency difference between the reference and measurement beams, (2) adjusting the clock frequency of one or both of the electronic A/D modules or (3) any similar means of continuously matching the apparent heterodyne beat frequency of the two wavelengths by active adjustment of the drive or detection electronics.

## Claims

**1.** An interferometric apparatus for measuring the effects of the refractive index of a gas in a measurement path (98), the apparatus comprising:

a source (1, 2) of at least two light beams (7, 8) having different wavelengths;
an interferometer (69, 70, 90) having first and second measurement legs having optical paths structured and arranged such that at least one leg has a variable physical length and at least one leg is at least in part occupied by the gas, and one leg may at least in part be occupied by a predetermined medium, the optical path length difference between the first and second measurement legs varying in accordance with the difference between the respective physical length of their optical paths and the properties of the gas and the predetermined medium;
introduction means for introducing first and second predetermined portions of each of the light beams (7, 8) into the first and second measurement legs respectively, said first and second predetermined portions emerging from the interferometer (69, 70, 90) as exit beams (30, 45, 230) containing information about the respective optical path lengths through the first and second measurement legs at the wavelengths of the original beams (7, 8);
mixing means (85, 86, 286) for combining the exit beams (30, 45, 230) to produce mixed optical signals (103, 104, 304) containing information corresponding to the phase differences between the exit beams (30, 45, 230),

the apparatus being **characterized in that** beams at one of the wavelengths of the first and second predetermined portions travel through at least one of the first and second measurement legs along predetermined optical paths a different number of passes than beams of the other of the wavelengths of the first and second predetermined portions to compensate for the relative rates at which the physical path lengths of the first and second measurement legs are changing,

the apparatus also being **characterized by** detecting means (1094A, 1094B, 1094C) for detecting the mixed optical signals (103, 104, 304) and generating electrical interference signals (105) containing information corresponding to the effects of the indices of refraction of the gas and the predetermined medium at the differing beam wavelengths and the relative physical path lengths of the first and second measurement legs and their relative rates of change; and

electronic means (109) for analyzing the electrical interference signals to determine the effects of the gas in the measurement legs.

2. An interferometric apparatus according to claim 1 **characterized in that** the wavelengths of the light beams (7, 8) have an approximate harmonic relationship to each other, this approximate harmonic relationship being expressed as a sequence of ratios, each ratio being comprised of a ratio of low order, non-zero integers.

3. An interferometric apparatus according to claim 1 or 2 **characterized in that** the interferometer (69, 70, 90) comprises means for generating multiple passes of the light beams along at least one of the measurement legs where the number of passes are harmonically related in a relationship which is substantially the same as the substantially harmonic relationship between the wavelengths.

4. An interferometric apparatus according to any one of the preceding claims **characterized in that** the light source (1,2) comprises means (3, 4) for generating orthogonally polarized components of each of the light beams (7, 8).

5. An interferometric apparatus according to claim 4 **characterized by** means for separating the light beams (7, 8) into pairs of orthogonally polarized components of common wavelength.

6. An interferometric apparatus according to claim 5 **characterized by** means for spatially separating the orthogonally polarized pairs of components for subsequent downstream use in the interferometer (69, 70).

7. An interferometric apparatus according to claim 2 **characterized in that** the relative precision of the approximate harmonic relationship of the wavelengths, expressed as the sequence of ratios, is an order of magnitude or more less than the dispersion of the refractive index of the gas, $(n_2 - n_1)$ where $n_1$ and $n_2$ are, respectively, the indices of refraction of the gas at the different wavelengths, times the relative precision, $\varepsilon$, desired for the measurement of the refractivity $(n_1 - 1)$ of the gas or of the change in the difference in optical path lengths of the measurement legs due to the gas.

8. An interferometric apparatus according to any one of the preceding claims **characterized in that characterized in that** the electronic means (109) is:

   (a) adapted to determine the difference in physical lengths , $L$, of the measurement legs occupied by the gas; and/or
   (b) configured to receive the intrinsic optical property, the reciprocal dispersive power, $\Gamma$, of the gas to calculate the difference in physical lengths, $L$, as:

$$\Gamma = \frac{[n_1(\lambda_1)-1]}{[n_3(\lambda_3)-n_2(\lambda_2)]}$$

where $\lambda_1$, $\lambda_2$ and $\lambda_3$ are wavelengths and $n_1$, $n_2$, and $n_3$ are indices of refraction, and wherein the denominator may be replaced by

$$[n_3(\lambda_3)-n_1(\lambda_1)] \quad \text{or} \quad [n_2(\lambda_2)-n_1(\lambda_1)]$$

9. An interferometric apparatus according to any one of the preceding claims **characterized by** a microlithographic apparatus (600) operatively associated therewith such that the difference in physical lengths, $L$, may be used to determine the change in relative distance between predetermined elements of the lithographic apparatus (600).

10. An interferometric apparatus according to any one of the preceding claims **characterized in that** the interferometer (69, 70, 90) comprises a differential plane mirror interferometer (69, 70).

11. An interferometric apparatus according to any one of claims 2 to 7 **characterized by** means (3, 4) for introducing a frequency difference between first and second portions of each of the light beams (7, 8) to generate a set of frequency-shifted light beams such that no two frequency-shifted light beams have the same frequency difference.

12. An interferometric apparatus according to claims 3 and 12 **characterized by** optical means (54E) for dividing each beam of the frequency-shifted light beams (8) into one or more beams to provide an expanded set of at least three frequency-shifted light beams (9, 10, 1010) from the set of frequency-shifted light beams such that the number of frequency-shifted light beams for each wavelength in the expanded set of frequency-shifted light beams is inversely related in accordance with the approximate harmonic relationship and such that each beam of the expanded set contains two frequency components.

13. An interferometric apparatus according to claim 12 **characterized in that** the interferometer (69, 170, 90) introduces phase shifts between the different frequency components of each beam of the expanded set to produce the exit beams as a set of phase-shifted, frequency-shifted light beams and aligns and directs the beams of the expanded set so that the combined paths through at least one of the measurement legs traversed by each subset of phase-shifted, frequency-shifted light beams are substantially the same where a subset of the phase-shifted, frequency-shifted light beams comprises beams of the phase-shifted, frequency-shifted light beams having the same wavelength, the measurement paths traversed by any two beams of a subset of phase-shifted, frequency-shifted light beams being substantially non-overlapping.

14. An interferometric apparatus according to claim 13 **characterized in that** the magnitude of the phase shifts introduced into each beam of the expanded set is the difference in phase shifts experienced by the beams in traveling along the first and second measurement legs and varies in accordance with the number of passes over respective ones of the first and second measurement legs, the physical lengths of respective ones of the first and second measurement legs, and the respective refractivity of the gas in the at least one of the measurement legs and respective refractivity of the gas and the predetermined medium, the refractivity of the gas in the at least one of the measurement legs for each subset of phase shifted, frequency-shifted light beams being different, one with respect to another, the refractivity of the gas being a function of wavelength.

15. An interferometric apparatus according to claim 13 or 14 **characterized in that** the mixing means (85, 186) mixes the two different frequency components of each beam of the set of phase-shifted, frequency-shifted light beams to produce the mixed optical signals as a set of mixed output beams comprised of at least three mixed output beams, each beam of the set of mixed output beams being derived from one beam of the set of phase-shifted, frequency-shifted light beams.

16. A interferometric apparatus according to claim 15 **characterized in that** the detecting means comprises a photodetector (85, 86, 286) for generating the electrical interference signals as a set of at least three heterodyne signals (103, 104, 304) from the intensities of the set of mixed output beams (30, 45, 230), the set of at least three heterodyne signals (103, 104, 304) being **characterized by** oscillations at heterodyne frequencies related to the frequency differences between the different frequency components of the beams of the expanded set, the set of at least three heterodyne signals (103, 104, 304) being further **characterized by** a set of heterodyne phases, the set of at least three heterodyne signals also being comprised of a set of subsets of heterodyne signals, a subset of heterodyne signals being the heterodyne signals generated from a subset of the phase-shifted, frequency-shifted light beams.

17. A interferometric apparatus according to claim 16 **characterized by** adding means (1095C, 1095D) for adding the heterodyne signals of each subset of heterodyne signals to produce a set of sum heterodyne signals, each sum heterodyne signal having a sum heterodyne frequency equal to the heterodyne frequency of the subset of heterodyne signals added to produce it and a sum heterodyne phase equal to the average of the heterodyne phases of the subset of heterodyne signals added to produce it.

18. A interferometric apparatus according to claim 17 **characterized in that** electronic means further comprise means for mixing two of the set of sum heterodyne signals to produce a superheterodyne signal ($s_{1x2}$, $s_{1x3}$) comprised of a lower frequency sideband having a sideband frequency equal to half the difference between the sum heterodyne frequencies mixed to produce the superheterodyne signal and a sideband phase equal to half the difference between the sum heterodyne phases of the sum heterodyne signals mixed to produce the superheterodyne signal, the sideband phase of the lower frequency sideband being substantially null except for differences due to the dispersion of the refractivity of the gas and the dispersion of the predetermined medium in the measurement legs.

19. A interferometric apparatus according to any of claims 2 to 7 and 11 to 18 **characterized by** monitoring means (522) for monitoring the relative precision of the approximate harmonic relationship expressed as the sequence of ratios.

20. A interferometric apparatus according to claim 19 **characterized by** feedback means (524) responsive to the monitoring means (522) for providing a feedback signal to control the source (1, 2) of the two light beams (7,8) so that the relative precision of the relationship expressed as the approximate harmonic relationship is of an order of magnitude less than the dispersive power of the gas times the relative precision required for the measurement of the refractivity of the gas or of the change in the differences in the optical path lengths of the measurement legs due to the gas.

21. A interferometric apparatus according to any of claims 15 to 18 **characterized in that** the combining means is configured and arranged to produce the mixed optical signals as a set of mixed output beams comprised of at least two mixed output beams, each mixed output beam being generated from one subset of phase-shifted, frequency-shifted light beams.

22. A interferometric apparatus according to any one of the preceding claims **characterized in that** the source (1, 2) of the two light beams (7,8) comprises a coherent source of radiation, preferably a laser.

23. An interferometric apparatus according to any one of the preceding claims **characterized by** means for directly receiving the electrical interference signals from the detecting means and generating the electrical interference signals and for converting the electrical interference signals to digital form to reduce phase errors in further downstream calculations.

24. An interferometric apparatus according to any one of the preceding claims **characterized in that** the two light beams (7, 8) each have orthogonal polarization states.

25. An interferometric apparatus according to claim 24 **characterized by** means for introducing a frequency difference between the orthogonal polarization states of the light beams (7, 8).

26. An interferometric apparatus according to claim 24 or 25 **characterized in that** the mixing means is adapted to mix the polarization states of the light beams.

27. An interferometric apparatus according to claim 26 **characterized in that** the information corresponding to the phase differences in the mixed optical signals is phase shifts related to the differences in round-trip physical length $L$ of the measurement legs occupied by the gas according to the formulae:

$$\varphi_1 = \sum_{i=1}^{i=p_1} \varphi_{1,i} = \sum_{i=1}^{i=p_1} L_i k_1 n_{1i} + \zeta_1$$

$$\varphi_2 = \sum_{i=1}^{i=p_2} \varphi_{2,i} = \sum_{i=1}^{i=p_2} L_i k_2 n_{2i} + \zeta_2$$

$$\varphi_3 = \sum_{i=p_2+1}^{i=p_1} \varphi_{3,i} = \sum_{i=p_2+1}^{i=p_1} L_i k_2 n_{2i} + \zeta_3$$

for the case of $p_1 = 2p_2$ where $k_j = 2\pi/\lambda$, $j = 1$ and 2, and $n_{ji}$ are the refractive indices of gas in path $i$ of the measurement leg corresponding to wavenumber $k_j$, and:

$$p_1 \lambda_1 \cong p_2 \lambda_2 \ ; \ p_1, p_2 = 1, 2, 3 \ldots, p_1 \neq p_2,$$

and
the phase offsets $\zeta_\ell$ comprise all contributions to the phase shifts $\varphi\ell$ that are not related to the first and second measurement legs.

28. An interferometric apparatus according to claim 27 **characterized in that** the electrical interference signals comprise heterodyne signals of the form:

$$s_\ell = A_\ell \cos [\alpha_\ell (t)] \ , \ell = 1, 2, \text{ and } 3$$

where the time-dependent arguments $\alpha_\ell(t)$ are given by:

$$\alpha_1 (t) = 2\pi f_1 t + \varphi_1$$

$$\alpha_2 (t) = 2\pi f_2 t + \varphi_2$$

$$\alpha_3 (t) = 2\pi f_3 t + \varphi_3$$

29. An interferometric apparatus according to claim 27 **characterized in that** the electronic means is adapted to receive the heterodyne signals and the determine the phase shifts $\varphi_1$, $\varphi_2$, and $\varphi_3$.

30. An interferometric apparatus any one of the preceding claims **characterized by** means for resolving phase redundancy errors in the offsets $\zeta_\ell$ and/or in the information.

31. An interferometric apparatus according to any one of the preceding claims **characterized in that** there is operatively associated therewith a microlithographic apparatus (600) for fabricating wafers, the microlithographic apparatus (600) comprising:

at least one stage (622) for supporting a wafer;
an illumination system (606, 616) for imaging spatially patterned radiation onto the wafer; and
a positioning system (617) for adjusting the position of the stage(s) (622) relative to the imaged radiation;
the interferometric apparatus being adapted to measure the position of the wafer relative to the imaged radiation.

32. An interferometric apparatus according to any one of claims 1 to 31 **characterized in that** there is operatively associated therewith a microlithographic apparatus (600) for use in fabricating integrated circuits on a wafer, the microlithographic apparatus (600) comprising:

at least one stage (622) for supporting a wafer;

an illumination system including a radiation source, a mask, a positioning system (617), a lens assembly (608), and predetermined portions of the interferometric apparatus;

the microlithographic apparatus (600) operating such that the source directs radiation through the mask to provide spatially patterned radiation, the positioning system (617) adjusts the position of the mask relative to radiation from the source, the lens assembly (608) images the spatially patterned radiation on to the wafer, and the interferometric apparatus measures the position of the mask relative to the radiation from the source.

33. An interferometric apparatus according to any one of claims 1 to 31 **characterized by characterized in that** there is operatively associated therewith a microlithographic apparatus (600) for fabricating integrated circuits comprising first and second components moveable relative to one another, the first and second components being connected with the first and second measurement legs and moving in concert therewith, such that the interferometric apparatus measures the position of the first component relative to the second component.

34. An interferometric apparatus according to any one of claims 1 to 31 **characterized by** a beam writing system (700) operatively associated therewith for use in fabricating a lithography mask, the beam writing system (700) comprising:

a source (710) for providing a write beam (712) to pattern a substrate (716);
at least one stage (718) for supporting the substrate (716);
a beam directing assembly (714) for delivering the write beam (712) to the substrate (716); and
a positioning system for positioning the stage(s) (718) and the beam directing assembly (714) relative to one another,
the interferometric apparatus being adapted to measure the position of the stage(s) (718) relative to the beam directing assembly (714).

35. An interferometric apparatus according to any one of the preceding claims **characterized in that** the electronic means (109) further comprises phase analyzing means for receiving the electrical interference signals and generating initial electrical phase signals containing information corresponding to the effects of the indices of refraction of the gas and the predetermined medium at the different beam wavelengths and the difference in the physical path lengths of the measurement legs occupied by the gas and its rate of change.

36. An interferometric apparatus according to claim 35 **characterized in that** the electronic means (109) further comprises multiplying means for multiplying the initial phase signals by factors corresponding to the beam wavelengths and the number of round trip passes experienced by the beams in traveling through the interferometer (69, 70) to generate modified phase signals.

37. An interferometric apparatus according to claim 36 **characterized in that** the electronic means (109) further comprises means for receiving the modified phase signals and selectively adding and subtracting them to generate sum and difference phase signals containing information corresponding to the effects of the index of refraction of the gas at the different beam wavelengths and the difference in physical path lengths of the measurement legs occupied by the gas and its rate of change.

38. An interferometric apparatus according to claim 37 **characterized in that** the electronic means (109) further comprises means for receiving the sum and difference phase signals and at least one of the initial phase signals to determine the difference in physical lengths, $L,$ of the measurement leg(s) occupied by the gas.

39. An interferometric apparatus according to any one of claims 34 to 37 **characterized by** resolving means for resolving redundancies among any of the phase signals.

40. An interferometric apparatus according to any one of claims 1, 4 to 6, 8 to 11, 19, 20 and 22 to 39 **characterized in that** the beam wavelengths are non-harmonically related.

41. An interferometric apparatus according to any one of claims 24 to 29 **characterized by** means for introducing frequency differences between the orthogonal polarization states of the light beams (7, 8) such that at least two of the light beams (7, 8) have different frequencies between their respective polarization states, the apparatus comprising a single photodetector for generating phase signals from at least two of the exit beams,

42. An interferometric apparatus according to any one of claims 1 to 39 **characterized in that** the relative precision of the wavelengths expressed as the sequence of ratios is of the order of or greater than approximately one-tenth of the dispersion of the refractive index of the gas, $(n_2 - n_1)$, where $n_1$ and $n_2$ are, respectively, the indices of refraction of the gas at the different wavelengths, times the relative precision, $\varepsilon$, required for the measurement of the refractivity $(n_2 - 1)$ of the gas or of the change in the differences in optical path lengths of the measurement legs due to the gas.

43. An interferometric method for measuring the effects of the refractive index of a gas in a measurement path, the method comprising:

generating light beams (7, 8) having differing wavelengths;

providing an interferometer (69, 70) having first and second measurement legs having optical paths structured and arranged such that at least one leg has a variable physical length and at least one leg is at least in part occupied by the gas and the other leg may at least in part be occupied by a predetermined medium, the optical path length difference between the first and second measurement legs varying in accordance with the respective physical lengths of their optical paths and the properties of the gas and the predetermined medium;

introducing first and second predetermined portions of each of the light beams (7, 8) into the first and second measurement legs so that the first and second predetermined portions emerge from the interferometer (69, 70) as exit beams (30, 45, 230) containing information about the respective optical path lengths through the first and second measurements legs at the wavelengths of the original beams (7, 8);

combining the exit beams (30, 45, 230) to produce mixed optical signals containing information corresponding to the phase differences between the exit beams (30, 45, 230),

the method being **characterized in that** beams at one of the wavelengths of the first and second predetermined portions travel through at least one of the first and second measurement legs along predetermined optical paths a different number of passes than beams of the other of the wavelengths of the first and second predetermined portions to compensate for the relative rates at which the physical path lengths of the first and second measurement legs are changing,

the method also being **characterized by** detecting the mixed optical signals and generating electrical interference signals containing .information corresponding to the effects of the indices of refraction of the gas and the predetermined medium at the differing wavelengths and the relative physical path lengths of the first and second measurement legs and their relative rates of change, and

electronically analyzing the electrical interference signals to determine the effects of the gas in the measurement legs.

44. An interferometric method according to claim 43 **characterized in that** it is carried out by means of an apparatus according to any one of claims 1 to 42.

**Patentansprüche**

1. Eine interferometrische Vorrichtung zur Messung der Auswirkungen auf den Brechungsindex eines Gases in einem Messpfad (98), wobei die Vorrichtung Folgendes umfasst:

eine Quelle (1, 2) mit mindestens zwei Lichtstrahlen (7, 8), welche verschiedene Wellenlängen haben;

ein Interferometer (69, 70, 90) mit ersten und zweiten Messbeinen, welche über optische Pfade verfügen, die so gegliedert und angeordnet sind, dass mindestens ein Bein eine variable Länge hat und mindestens ein Bein mindestens teilweise mit dem Gas besetzt ist, und ein Bein mindestens teilweise mit einem vorgegebenen Medium versehen sein kam, wobei der Unterschied der optischen Pfadlänge zwischen den ersten und zweiten Messbeinen in Einklang mit dem Unterschied zwischen der jeweiligen physischen Länge ihrer optischen Pfade sowie auch der Eigenschaften des Gases und des vorgegebenen Mediums variiert;

ein Einführungsmittel zur Einführung der ersten und zweiten vorgegebenen Lichtstrahlmenge der jeweiligen Lichtstrahlen (7, 8) in jeweils die ersten und zweiten Messbeine, wobei besagte ersten und zweiten vorgegebenen, aus dem Inferometer auftretenden Mengen (69, 70, 90) als Ausgangsstrahlen (30, 45, 230) Informationen über die jeweilige optische Pfadlänge durch die ersten und zweiten Messbeine der Wellenlängen der ursprünglichen Strahlen (7, 8) enthalten;

Mischmittel (85, 86, 286) zur Bündelung der Ausgangsstrahlen (30, 45, 230) zur Erzeugung gemischter optischer Signale (103, 104, 304), die Informationen enthalten, welche den Phasenunterschieden zwischen den Ausgangsstrahlen (30, 45, 230) entsprechen,

die Vorrichtung ist **dadurch gekennzeichnet, dass** sich die Strahlen an einer der Wellenlängen der ersten und zweiten vorgegebenen Mengen durch mindestens einen der ersten und zweiten Messbeine entlang eines vorgegebenen optischen Pfads einer anderen Anzahl an Durchläufen im Vergleich zu den Strahlen der anderen Wellenlängen der ersten und zweiten vorgegebenen Mengen fortpflanzen, um die relativen Proportionen auszugleichen, zu denen sich die physischen Pfadlängen der ersten und zweiten Messbeine verändern,
des Weiteren ist die Vorrichtung auch **dadurch gekennzeichnet, dass** durch Erkennungsmittel (1094A, 1094B, 1094C) zur Erfassung der gemischten optischen Signale (103, 104, 304) und zur Erzeugung der elektrischen Störsignale (105), welche Informationen enthalten, die den Auswirkungen des Brechungsindizes des Gases und dem vorgegebenen Medium bei den unterschiedlichen Wellenlängen der Strahlen und den relativen physischen Pfadlängen der ersten und zweiten Messbeine und ihren relativen Veränderungsraten entsprechen; und elektronische Mittel (109) zur Analyse der elektrischen Störsignale zur Ermittlung der Auswirkungen des Gases in den Messbeinen.

2.  Eine interferometrische Vorrichtung gemäß Anspruch 1, **dadurch gekennzeichnet, dass** die Wellenlängen der Lichtstrahlen (7, 8) eine ungefähre harmonische Beziehung zueinander haben, wobei diese ungefähre harmonische Beziehung als eine Sequenz von Kennzahlen zum Ausdruck gebracht wird, wobei jede Kennzahl aus der Kennzahl einer niederwertigen, nicht Null Ganzzahl besteht.

3.  Eine interferometrische Vorrichtung gemäß Anspruch 1 oder 2, **dadurch gekennzeichnet, dass** das Interferometer (69, 70, 90) ein Mittel zur Erzeugung mehrfacher Durchläufe der Lichtstrahlen entlang mindestens eines der Messbeine umfasst, wobei die Anzahl der Durchläufe harmonisch in einer Beziehung stehen, die im Wesentlichen die Gleiche wie die harmonische Beziehung zwischen den Wellenlängen ist.

4.  Eine interferometrische Vorrichtung gemäß einer der vorangehenden Ansprüche, **dadurch gekennzeichnet, dass** die Lichtquelle (1, 2) Mittel (3, 4) zur Erzeugung von orthogonal polarisierten Komponenten eines jeden Lichtstrahls (7, 8) umfasst.

5.  Eine interferometrische Vorrichtung gemäß Anspruch 4, die durch ein Mittel zur Trennung der Lichtstrahlen (7, 8) in Paare orthogonaler polarisierter Komponenten einer gemeinsamen Wellenlänge **gekennzeichnet** ist.

6.  Eine interferometrische Vorrichtung gemäß Anspruch 5, die durch ein Mittel zur räumlichen Trennung der orthogonal polarisierten Komponentenpaare für einen anschließenden nachgeschalteten Einsatz des Interferometers (69,70) **gekennzeichnet** ist.

7.  Eine interferometrische Vorrichtung gemäß Anspruch 2, **dadurch gekennzeichnet, dass** die relative Genauigkeit der ungefähren harmonischen Beziehung der Wellenlängen, die als eine Sequenz der Kennzahlen ausgedrückt wird, eine Größenordnung oder eher weniger als die Dispersion des Brechungsindizes des Gases ist, $(n_2 - n_1)$, wobei $n_1$ und $n_2$ jeweils die Brechungsindizes des Gases bei verschiedenen Wellenlängen mal der relativen Präzision $\varepsilon$ sind, welche für die Messung des Brechungsfaktors $(n_1 - 1)$ des Gases oder der Änderung des Unterschieds der optischen Pfadlängen der Messbeine auf Grund des Gases gewünscht sind.

8.  Eine interferometrische Vorrichtung gemäß einem der vorangehenden Ansprüche, **dadurch gekennzeichnet, dass** das elektronische Mittel (109).

    (a) zur Ermittlung des Unterschieds der physischen Längen $L$ der von dem Gas belegten Messbeine eingerichtet ist; und/oder
    (b) zum Empfang des intrinsischen optischen Merkmals der Abbeschen Zahl $\Gamma$, des Gases zur Errechnung des Unterschieds der physischen Längen $L$ als:

$$\Gamma = \frac{[n_1(\lambda_1) - 1]}{[n_3(\lambda_3) - n_2(\lambda_2)]}$$

    konfiguriert ist, wobei $\lambda_1$, $\lambda_2$ und $\lambda_3$ Wellenlängen und $n_1$, $n_2$, und $n_3$ Brechungsindizes sind, und wobei der Nenner durch

$$[n_3(\lambda_3) - n_1(\lambda_1)] \quad \text{oder} \quad [n_2(\lambda_2) - n_1(\lambda_1)]$$

    ersetzt werden kann.

**9.** Eine interferometrische Vorrichtung gemäß einer der vorangehenden Ansprüche, **dadurch gekennzeichnet, dass** durch eine mikrolitographische Vorrichtung (600), die operativ so damit verbunden ist, dass der Unterschied der physischen Längen *L* zur Bestimmung der Veränderung des relativen Abstands zwischen den vorgegebenen Elementen der lithographischen Vorrichtung (600) verwendet werden kann.

**10.** Eine interferometrische Vorrichtung gemäß einer der vorangehenden Ansprüche, **dadurch gekennzeichnet, dass** das Interferometer (69, 70, 90) ein differentielles Planspiegel-Interferometer (69, 70) umfasst.

**11.** Eine interferometrische Vorrichtung gemäß einer der Ansprüche 2 bis 7 durch Mittel (3, 4) zur Einbringung eines Frequenzunterschieds zwischen den ersten und zweiten Mengen der jeweiligen Lichtstrahlen (7, 8) zur Erzeugung eines Satzes an derartig frequenzverschobenen Lichtstrahlen **gekennzeichnet**, das keine der beiden frequenzverschobenen Lichtstrahlen denselben Frequenzunterschied haben.

**12.** Eine interferometrische Vorrichtung gemäß Ansprüchen 3 und 12 durch optische Mittel (54E) zur Teilung des jeweiligen Strahls der frequenzverschobenen Lichtstrahlen (8) in einen oder mehr Strahlen **gekennzeichnet**, um einen erweiterten Satz an mindestens drei frequenzverschobenen Lichtstrahlen (9, 10, 1010) vom Satz der frequenzverschobenen Lichtstrahlen so vorzusehen, dass die Anzahl der frequenzverschobenen Lichtstrahlen für jede Wellenlänge in dem erweiterten Satz an frequenzverschobenen Lichtstrahlen umgekehrt in Einklang mit der ungefähren harmonischen Beziehung verbunden ist und zwar auf eine solche Art und Weise, dass jeder Strahl des erweiterten Satzes zwei Frequenz Komponenten enthält.

**13.** Eine interferometrische Vorrichtung gemäß Anspruch 12, **dadurch gekennzeichnet, dass** das Interferometer (69, 170, 90) Phasenverschiebungen zwischen den verschiedenen Frequenzkomponenten des jeweiligen Strahls des erweiterten Satzes einführt, um die Ausgangsstrahlen als einen Satz an phasenverschobenen, frequenzverschobenen Lichtstrahlen zu erzeugen, und sie die Strahlen des erweiterten Satzes so ausrichtet und leitet, dass die zusammengelegten Pfade durch mindestens eines der Messbeine, welches von jedem Teilsatz der phasenverschobenen, frequenzverschobenen Lichtstrahlen durchquert wird, im Wesentlichen die selben wie diejenigen sind, bei denen ein Teilsatz der phasenverschobenen, frequenzverschobenen Lichtstrahlen Strahlen der phasenverschobenen, frequenzverschobenen Lichtstrahlen mit derselben Wellenlänge umfasst, und die Messpfade von beliebigen zwei Strahlen eines Teilsatzes phasenverschobener, frequenzverschobener Lichtstrahlen durchquert werden, die sich im Wesentlichen nicht überlappen.

**14.** Eine interferometrische Vorrichtung gemäß Anspruch 13, **dadurch gekennzeichnet, dass** das Ausmaß der Phasenverschiebungen, die in jeden Strahl des erweiterten Satzes eingeführt wurden, den Unterschied an Phasenverschiebungen darstellt, den die Strahlen während der Fortpflanzung entlang der ersten und zweiten Messbeine erfuhren und der sich entsprechend der Anzahl der jeweiligen Durchläufe über die ersten und zweiten Messbeine, die physischen Längen der Zugehörenden der ersten und zweiten Messbeine und der jeweiligen Brechung des Gases in mindestens einem der Messbeine und die jeweilige Brechung des Gases und des vorgegebenen Mediums, der Brechung des Gases in mindestens einem der Messbeine bei jeden Teilsatz der phasenversehobenen, frequenzverschobenen Lichtstrahlen, die in Bezug auf einander unterschiedlich sind, ändert, wobei die Brechung des Gases eine Funktion der Wellenlänge ist.

**15.** Eine interferometrische Vorrichtung gemäß Anspruch 13 oder 14, **dadurch gekennzeichnet, dass** das Mischmittel (85, 186) die beiden verschiedenen FrequenzKomponenten jedes Strahls des Satzes an phasenverschobenen, frequenzverschobenen Lichtstrahlen mischt, um die gemischten optischen Signale als einen aus mindestens drei gemischten Ausgabestrahlen bestehenden Satz an gemischten Ausgabestrahlen zu erzeugen, wobei jeder Strahl des Satzes an gemischten Ausgabestrahlen von einem Strahl des Satzes phasenverschobener, frequenzverschobener Lichtstrahlen abstammt.

**16.** Eine interferometrische Vorrichtung gemäß Anspruch 15, **dadurch gekennzeichnet, dass** das Erkennungsmittel einen Fotodetektor (85, 86, 286) zur Erzeugung der elektrischen Störsignale als einen aus mindestens drei von den Stärken der gemischten Ausgabestrahlen (30, 45, 230) überlagerten Signalen (103, 104, 304) bestehenden Satz umfasst, wobei ein Satz von mindestens drei überlagerten Signalen (103, 104, 304), der durch Oszillationen bei überlagerten Frequenzen **gekennzeichnet** ist, welche mit den Frequenzunterschieden zwischen den verschiedenen Frequenzkomponenten der Strahlen des erweiterten Satzes in Beziehung stehen, wobei ein Satz von mindestens drei überlagerten Signalen (103, 104, 304) weiterhin durch einen Satz an überlagerten Phasen **gekennzeichnet** ist, und der Satz von mindestens drei überlagerten Signalen ebenfalls aus einem Satz an Teilsätzen überlagerter Signale besteht, wobei ein Teilsatz von überlagerten Signalen die überlagerten Signale sind, welche von dem Teilsatz der phasenverschobenen, frequenzverschobenen Lichtstrahlen erzeugt wurden.

**17.** Eine interferometrische Vorrichtung gemäß Anspruch 16, durch Hinzufügung von Mitteln (1095C, 1095D) zum Hinzufügen der überlagerten Signale jedes Teilsatzes überlagerter Signale zur Erzeugung eines Satzes an summierten überlagerten Signalen **gekennzeichnet**, wobei jedes summierte überlagerte Signal über eine summierte überlagerte Frequenz verfügt, welche gleich der überlagerten Frequenz des Teilsatzes der überlagerten Signale ist, die hinzugefügt wurden, um sie zu erzeugen und eine summierte überlagerte Phase, welche gleich des Durchschnitts der überlagerten Phasen des Teilsatzes an überlagerten Signalen ist, die zwecks dessen Erzeugung hinzugefügt wurden.

**18.** Eine interferometrische Vorrichtung gemäß Anspruch 17, **dadurch gekennzeichnet, dass** das elektronische Mittel weiterhin ein Mittel zur Mischung von zwei Sätzen des Satzes an summierten überlagerten Signalen zur Erzeugung eines doppelt-überlagerten Signals ($S_{1x2}$, $S_{1x3}$) umfasst, welches aus einem Seitenband mit einer geringeren Frequenz besteht, das über eine Seitenband-Frequenz verfügt, welche gleich der Hälfte des Unterschieds zwischen den summierten überlagerten Frequenzen ist, die zur Erzeugung des doppelt-überlagerten Signals gemischt wurden sowie auch über eine Seitenbandphase, die gleich der Hälfte des Unterschieds zwischen den summierten überlagerten Phasen der summierten überlagerten Signale ist, die zur Erzeugung eines doppelt-überlagerten Signals gemischt wurden, wobei die Seitenbandphase des Seitenbands mit geringerer Frequenz im Wesentlichen Null ist, jedoch ausgenommen der Unterschiede auf Grund der Dispersion der Brechung des Gases und der Dispersion des vorgegebenen Mediums in den Messbeinen.

**19.** Eine interferometrische Vorrichtung gemäß einer der Ansprüche 2 bis 7 und 11 bis 18, durch Überwachungsmittel (522) zur Überwachung der relativen Präzision der ungefähren harmonischen Beziehung **gekennzeichnet**, die als eine Sequenz von Kennzahlen ausgedrückt wird.

**20.** Eine interferometrische Vorrichtung gemäß Anspruch 19, die durch ein Rückmeldungsmittel (524) **gekennzeichnet** ist, das auf ein Überwachungsmittel (522) zur Lieferung von Rückmeldungssignalen zur Steuerung der Quelle (1, 2) der beiden Lichtstrahlen (7,8) reagiert, sodass die relative Präzision der Beziehung, die als eine ungefähre harmonische Beziehung ausgedrückt wird, einer Größenordnung entspricht, die geringer als das Dispersionsvermögen des Gases mal der relativen Präzision ist, die zur Messung der Brechung des Gases oder der Veränderung der Unterschiede der optischen Pfadlängen der Messbeine auf Grund des Gases erforderlich ist.

**21.** Eine interferometrische Vorrichtung gemäß einem der Ansprüche 15 bis 18, **dadurch gekennzeichnet, dass** das Vereinigungsmittel so konfiguriert und angeordnet ist, um die gemischten optischen Signale als einen Satz gemischter Ausgabestrahlen zu erzeugen, die aus mindestens zwei gemischten Ausgabestrahlen bestehen, wobei jeder gemischte Ausgabestrahl von einem Teilsatz der phasenverschobenen, frequenzverschobenen Lichtstrahlen erzeugt wird.

**22.** Eine interferometrische Vorrichtung gemäß einer der vorangehenden Ansprüche, **dadurch gekennzeichnet, dass** die Quelle (1, 2) der beiden Lichtstrahlen (7,8) eine kohärente Strahlenquelle umfasst, die vorzugsweise ein Laser ist.

**23.** Eine interferometrische Vorrichtung gemäß einem der vorangehenden Ansprüche, die durch ein Mittel zum direkten Empfang der elektrischen Störsignale von dem Erkennungsmittel **gekennzeichnet** ist sowie auch zur Erzeugung der elektrischen Störsignale und zur Umwandlung der elektrischen Störsignale in eine digitale Form zur Verringerung der Phasenfehler bei weiteren nachfolgenden Berechnungen.

**24.** Eine interferometrische Vorrichtung gemäß einer der vorangehenden Ansprüche, **dadurch gekennzeichnet, dass** die beiden Lichtstrahlen (7, 8) jeweils orthogonale Polarisationszustände haben.

**25.** Eine interferometrische Vorrichtung gemäß Anspruch 24, die durch ein Mittel zur Einleitung des Frequenzunterschieds zwischen den orthogonalen Polarisationszuständen der Lichtstrahlen (7, 8) **gekennzeichnet** ist.

**26.** Eine interferometrische Vorrichtung gemäß Anspruch 24 oder 25, **dadurch gekennzeichnet, dass** das Mischmittel zur Mischung der Polarisationszustände der Lichtstrahlen eingestellt wurde.

**27.** Eine interferometrische Vorrichtung gemäß Anspruch 26, **dadurch gekennzeichnet, dass** es sich bei den Informationen, die den Phasenunterschieden in den gemischten optischen Signalen entsprechen, um Phasenverschiebungen handelt, die mit den Unterschieden der physischen Hin- und Rücklauflänge $L$ der Messbeine in Beziehung steht, die von dem Gas gemäß der Formel:

$$\varphi_1 = \sum_{i=1}^{i=p_1} \varphi_{1,i} = \sum_{i=1}^{i=p_1} L_i k_1 n_{1i} + \zeta_1$$

$$\varphi_2 = \sum_{i=1}^{i=p_2} \varphi_{2,i} = \sum_{i=1}^{i=p_2} L_i k_2 n_{2i} + \zeta_2$$

$$\varphi_3 = \sum_{i=p_2+1}^{i=p_1} \varphi_{3,i} = \sum_{i=p_2+1}^{i=p_1} L_i k_2 n_{2i} + \zeta_3$$

für den Fall $p_1 = 2p_2$ besetzt sind, wobei $k_j = 2\pi/\lambda_j$, $j = 1$ und 2, und $n_{ji}$ die Brechungsindizes des Gases in Pfad $i$ des Messbeins sind, die der Wellennummer $k_j$ entsprechen und:

$$p_1\lambda_1 \cong p_2\lambda_2 \; ; \; p_1, p_2 = 1, 2, 3 \ldots, p_1 \mp p_2,$$

und
die Phasenversätze $\zeta_\ell$ sämtliche Einbringungen zu den Phasenverschiebungen $\varphi_e$ umfassen, die nicht mit den ersten und zweiten Messbeinen in Beziehung stehen.

**28.** Eine interferometrische Vorrichtung gemäß Anspruch 27, **dadurch gekennzeichnet, dass** die elektrischen Störsignale überlagerte Signale der Form:

$$s_\ell = A_\ell \cos [\alpha_\ell (t)] \quad , \ell = 1, 2, \text{und } 3$$

umfassen, wobei die zeitabhängigen Argumente $\alpha_\ell(t)$ durch:

$$\alpha_1 (t) = 2\pi f_1 t + \varphi_1$$

$$\alpha_2 (t) = 2\pi f_2 t + \varphi_2$$

$$\alpha_3 (t) = 2\pi f_3 t + \varphi_3$$

gegeben werden.

**29.** Eine interferometrische Vorrichtung gemäß Anspruch 27, **dadurch gekennzeichnet, dass** das elektronische Mittel für den Empfang der überlagerten Signale und zur Bestimmung der Phasenverschiebungen $\varphi_1$, $\varphi_2$, und $\varphi_3$ eingestellt wurde.

**30.** Eine interferometrische Vorrichtung einer der vorangehenden Ansprüche, die durch ein Mittel zur Lösung von Phasen-Redundanzfehlern in den Versätzen $\zeta_\ell$ und/oder in den Informationen **gekennzeichnet** ist.

**31.** Eine interferometrische Vorrichtung gemäß einer der vorangehenden Ansprüche, **dadurch gekennzeichnet, dass** eine mikrolitographische Vorrichtung (600) zur Herstellung von Halbleiterscheiben operativ damit in Verbindung gebracht wurde, wobei die mikrolitographische Vorrichtung Folgendes umfasst:

mindestens einen Ständer (622) zum Tragen der Halbleiterscheibe;
eine Beleuchtungsanlage (606, 616) zur Abbildung einer räumlich gemusterten Strahlung auf die Halbleiterscheibe; und

ein Positioniersystem (617) zur Einstellung der Position des Ständers (622) bezüglich der abgebildeten Strahlung;

wobei die interferometrische Vorrichtung zur Messung der Position der Halbleiterscheibe bezüglich der abgebildeten Strahlung eingerichtet wurde.

32. Eine interferometrische Vorrichtung gemäß einer der Ansprüche 1 bis 31, **dadurch gekennzeichnet, dass** eine mikrolitographische Vorrichtung (600) zum Einsatz bei der Herstellung von integrierten Halbleiterschaltungen einer Halbleiterscheibe operativ damit in Verbindung gebracht wurde, wobei die mikrolitographische Vorrichtung (600) Folgendes umfasst:

mindestens einen Ständer (622) zum Tragen der Halbleiterscheibe;

eine Beleuchtungsanlage einschließlich einer Strahlungsquelle, eine Maske, ein Positioniersystem (617), eine Linsenmontage (608), und vorgegebene Teile der interferometrischen Vorrichtung;

wobei die mikrolitographische Vorrichtung (600) so betrieben wird, dass die Quelle die Strahlung durch die Maske leitet, um eine räumlich gemusterte Strahlung zu liefern, das Positioniersystem (617) die Position der Maske bezüglich der Strahlung von der Quelle einstellt, die Linsenmontage (608) die räumlich gemusterte Strahlung auf der Halbleiterscheibe abbildet, und die interferometrische Vorrichtung die Position der Maske bezüglich der Strahlung von der Quelle misst.

33. Eine interferometrische Vorrichtung gemäß einer der Ansprüche 1 bis 31, **dadurch gekennzeichnet, dass** damit operativ eine mikrolitographische Vorrichtung (600) zur Herstellung von integrierten Halbleiterschaltungen verbunden ist, welche eine erste und zweite Komponente umfassen, und die in Bezug aufeinander einstellbar sind, wobei die ersten und zweiten Komponenten mit den ersten und zweiten Messbeinen verbunden sind und sich gemeinsam mit ihnen so bewegen, dass die interferometrische Vorrichtung die Position der ersten Komponente in Bezug auf die zweite Komponente misst.

34. Eine interferometrische Vorrichtung gemäß einer der Ansprüche 1 bis 31, die durch ein Strahlschreibsystem (700) **gekennzeichnet** ist, welche operativ in Verbindung damit zum Einsatz bei der Herstellung einer Lithographiemaske kommt, wobei das Strahlschreibsystem (700) Folgendes umfasst:

eine Quelle (710) zur Bereitstellung eines Schreibstrahls (712) zur Gestaltung eines Schichtträgers (716); mindestens einen Ständer (718) zum Tragen des Schichtträgers (716);

eine Strahlleitanordnung (714) zur Lieferung des Schreibstrahls (712) an den Schichtträger (716); und

ein Positioniersystem zur Positionierung des/der Ständer (718) und der Strahlleitanordnung (714) in Bezug auf einander,

wobei die interferometrische Vorrichtung zur Messung der Position des der Ständer (718) in Bezug auf die Strahlleitanordnung (714) eingestellt wurde.

35. Eine interferometrische Vorrichtung gemäß einer der vorangehenden Ansprüche, **dadurch gekennzeichnet, dass** das elektronische Mittel (109) weiterhin ein Phasenauswertungsmittel zum Empfangen der elektrischen Störsignale und zum Erzeugen der ersten elektrischen Phasensignale umfasst, welche Informationen enthalten, die den Auswirkungen des Brechungsindizes des Gases und dem vorgegebenen Medium bei den verschiedenen Wellenlängen des Strahls und dem Unterschied der physischen Pfadlängen der Messbeine entsprechen, die das Gas besetzt sowie auch ihrer Änderungsrate.

36. Eine interferometrische Vorrichtung gemäß Anspruch 35, **dadurch gekennzeichnet, dass** das elektronische Mittel (109) weiterhin Multipliziermittel zur Multiplizierung der Anfangsphasensignale mit Tellern umfasst, die den Wellenlängen des Strahls entsprechen sowie auch der Anzahl der Hin- und Rückläufe, die die Strahlen bei der Fortpflanzung durch das Inferometer (69, 70) erfuhren, um modifizierte Phasensignale zu erzeugen.

37. Eine interferometrische Vorrichtung gemäß Anspruch 36, **dadurch gekennzeichnet, dass** das elektronische Mittel (109) weiterhin Mittel zum Empfangen der modifizierten Phasensignale und zu deren wahlweisen Hinzufügen und Abziehen zur Erzeugung summierter und Unterschiedsphasensignale umfasst, die Informationen enthalten, die den Auswirkungen des Brechungsindizes des Gases bei den verschiedenen Wellenlängen des Strahls und dem Unterschied der physischen Pfadlängen der Messbeine entsprechen, die von dem Gas besetzt sind sowie auch ihrer Änderungsrate.

38. Eine interferometrische Vorrichtung gemäß Anspruch 37, **dadurch gekennzeichnet, dass** das elektronische Mittel (109) weiterhin ein Mittel zum Empfang der summierten und Unterschiedsphasensignale und mindestens eines der Anfangsphasensignale zur Ermittlung des Unterschieds der physischen Länge *L* des Messbeins/der Messbeine umfasst, das/die von dem Gas besetzt ist/sind.

**39.** Eine interferometrische Vorrichtung gemäß einer der Ansprüche 34 bis 37, die durch ein Lösungsmittel zur Lösung von Redundanzen unter den Phasensignalen **gekennzeichnet** ist.

**40.** Eine interferometrische Vorrichtung gemäß einer der Ansprüche 1, 4 bis 6, 8 bis 11, 19, 20 und 22 bis 39, **dadurch gekennzeichnet, dass** die Wellenlängen des Strahles nicht harmonisch in Beziehung stehen.

**41.** Eine interferometrische Vorrichtung gemäß einer der Ansprüche 24 bis 29, die durch ein Mittel zur Einführung des Frequenzunterschieds zwischen den orthogonalen Polarisierungszuständen der Lichtstrahles (7, 8) so **gekennzeichnet** ist, dass mindestens zwei der Lichtstrahlen (7, 8) über verschiedene Frequenzen zwischen ihren jeweiligen Polarisierungszuständen verfügen, wobei die Vorrichtung einen einzelnen Fotodetektor zur Erzeugung der Phasensignale von mindestens zwei der Ausgangsstrahlen umfasst.

**42.** Eine interferometrische Vorrichtung gemäß einer der Ansprüche 1 bis 39, **dadurch gekennzeichnet, dass** die relative Präzision der Wellenlängen, die als die Sequenz von Kennzahlen ausgedrückt wird, der Größenordnung angehört oder größer als ungefähr ein Zehntel der Dispersion des Brechungsindizes des Gases $(n_2 - n_1)$ ist, wobei $n_1$ und $n_2$ jeweils die Brechungsindizes des Gases bei den verschiedenen Wellenlängen mal der relativen Präzision $\varepsilon$ sind, die zur Messung der Brechung $(n_2 - 1)$ des Gases oder der Veränderung der Unterschiede der optischen Pfadlängen der Messbeine auf Grund des Gases erforderlich sind.

**43.** Eine interferometrische Methode zur Messung der Auswirkungen des Brechungsindizes eines Gases in einem Messpfad, wobei die Methode Folgendes umfasst:

Erzeugung von Lichtstrahlen (7, 8), welche unterschiedliche Wellenlängen haben;
Vorsehen eines Interferometers (69, 70) mit ersten und zweiten Messbeinen mit optischen Pfaden, die so gegliedert und angeordnet sind, dass mindestens ein Bein über eine verstellbare physische Länge verfügt und mindestens ein Bein mindestens teilweise von dem Gas besetzt ist und das andere Bein mindestens teilweise von einem vorgegebenen Medium besetzt ist, wobei der optische Pfadlängenunterschied zwischen den ersten und zweiten Messbeinen in Einklang mit den jeweiligen physischen Längen ihrer optischen Pfade und den Gaseigenschaften und dem vorgegebenen Medium variiert;
Einführen der ersten und zweiten vorgegebenen Mengen der jeweiligen Lichtstrahlen (7, 8) in die ersten und zweiten Messbeine, sodass sich die ersten und zweiten vorgegebenen Mengen aus dem Interferometer (69, 70) als Ausgangsstrahlen (30, 45, 230) herausbilden, die Informationen über die jeweiligen optischen Pfadlängen durch die ersten und zweiten Messbeine zu den Wellenlängen der originalen Strahlen (7, 8) enthalten;
Zusammenlegen der Ausgangsstrahlen (30, 45, 230) zur Erzeugung gemischter optischer Signale, welche Informationen enthalten, die den Phasenunterschieden zwischen den Ausgangsstrahlen (30, 45, 230) entsprechen,
wobei die Methode **dadurch gekennzeichnet ist, dass** die Strahlen bei einer der Wellenlängen der ersten und zweiten vorgegebenen Mengen durch mindestens eins der ersten und zweiten Messbeine entlang des vorgegebenen optischen Pfads eine andere Anzahl an Durchläufen durchgehen im Vergleich zu den Strahlen der anderen Wellenlängen der ersten und zweiten vorgegebenen Mengen, um somit die relativen Sätze auszugleichen, zu denen die physischen Pfadlängen der ersten und zweiten Messbeine sich verändern,
des Weiteren ist die Methode durch eine Erkennung der gemischten optischen Signale und Erzeugung der elektrischen, Informationen enthaltenden Störsignale **gekennzeichnet**, die den Auswirkungen des Brechungsindizes des Gases und dem vorgegebenen Medium bei unterschiedlichen Wellenlängen und den relativen physischen Pfadlängen der ersten und zweiten Messbeine und ihren relativen Änderungsraten entspricht, und elektronische Auswertung der elektrischen Störsignale zur Ermittlung der Auswirkungen des Gases in den Messbeinen.

**44.** Eine interferometrische Methode gemäß Anspruch 43, **dadurch gekennzeichnet, dass** sie mittels einer Vorrichtung gemäß einer der Ansprüche 1 bis 42 ausgeführt wird.

**Revendications**

1. Un appareil interférométrique pour mesurer les effets de l'indice de réfraction d'un gaz dans un chemin de mesure (98), l'appareil étant composé :

   d'une source (1, 2) d'au moins deux faisceaux lumineux (7, 8) de longueurs d'onde différentes ;
   d'un interféromètre (69, 70, 90) ayant la première et la seconde branches de mesure présentant des chemins optiques structurées et disposées de manière à ce qu'au moins une branche ait une longueur physique variable et qu'au moins une branche soit au moins partiellement occupée par le gaz, et qu'une branche puisse au moins partiellement être occupée par un medium prédéterminé, la différence de longueur de chemin optique entre la première et la deuxième branches de mesure variant conformément à la différence entre la longueur physique respective de leurs chemins optiques et les propriétés du gaz et du médium prédéterminé ;
   de moyen d'introduction pour introduire la première et la deuxième partie prédéterminées de chacun des faisceaux lumineux (7, 8) dans les première et deuxième branches de mesure respectivement, lesdites première et deuxième partie prédéterminées émergeant de l'interféromètre (69, 70, 90) comme faisceaux de sortie (30, 45, 230) contenant de l'information sur les longueurs de chemin optique respectif par les première et deuxième branches de mesure aux longueurs d'onde des faisceaux originaux (7, 8) ;
   de moyen de mélange (85, 86, 286) pour combiner les faisceaux de sortie (30, 45, 230) pour produire des signaux optiques mélangés (103, 104, 304) contenant de l'information correspondant aux différences de phase entre les faisceaux de sortie (30, 45, 230),
   l'appareil étant **caractérisé en ce que** les faisceaux à une des longueurs d'onde de la première et de la deuxième partie prédéterminée se propagent dans au moins une des première et deuxième branches de mesure le long de chemins optiques prédéterminés un nombre différent de fois que les faisceaux de l'autre des longueurs d'onde de la première et deuxième parties prédéterminées pour compenser les vitesses relatives de variations des longueurs de chemin physique de la première et de la deuxième branches de mesure,
   l'appareil étant aussi **caractérisé par** des moyens de détection (1094A, 1094B, 1094C) pour détecter les signaux optiques mélangés (103, 104, 304) et générer des signaux d'interférence électrique (105) contenant de l'information correspondant aux effets des indices de réfraction du gaz et au médium prédéterminé aux différentes longueurs d'onde de faisceau et aux longueurs relatives de chemin physique de la première et de la deuxième branches de mesure et leurs vitesses relatives de variation ; et
   de moyen électronique (109) pour analyser les signaux d'interférence électrique pour déterminer les effets du gaz dans les branches de mesure.

2. Un appareil interférométrique conformément à la revendication 1 **caractérisé en ce que** les longueurs d'onde des faisceaux lumineux (7, 8) ont une relation approximativement harmonique entre eux, cette relation approximativement harmonique étant exprimée comme une séquence de rapports, chaque rapport étant composé d'entiers différents de zéro, d'ordre faible.

3. Un appareil interférométrique conformément à la revendication 1 ou 2 **caractérisé en ce que** l'interféromètre (69, 70, 90) est composé de moyens de générer des passages multiples des faisceaux lumineux le long d'au moins une des branches de mesure pour lesquels le nombre de passages est en relation harmonique dans une relation qui est essentiellement la même que la relation substantiellement harmonique entre les longueurs d'onde.

4. Un appareil interférométrique conformément à l'une quelconque des revendications précédentes **caractérisé en ce que** la source lumineuse (1, 2) comprend des moyens (3, 4) de générer des composantes polarisées orthogonalement de chacun des faisceaux lumineux (7, 8).

5. Un appareil interférométrique conformément à la revendication 4 **caractérisée par** des moyens pour séparer les faisceaux lumineux (7, 8) en paires de composantes polarisées orthogonalement de longueur d'onde commune.

6. Un appareil interférométrique conformément à la revendication 5 **caractérisé par** des moyens de séparer spatialement les paires polarisées orthogonalement des composantes pour un usage ultérieur dans l'interféromètre (69, 70).

7. Un appareil interférométrique conformément à la revendication 2 **caractérisé en ce que** la précision relative de la relation approximativement harmonique des longueurs d'onde, exprimée comme la séquence de rapports, est d'un ordre de grandeur ou plus inférieure à la dispersion de l'indice de réfraction du gaz, $(n_2 - n_1)$ où $n_1$ et $n_2$ sont, respectivement, les indices de réfraction du gaz aux différentes longueurs d'onde, multiplié par la précision relative,

$\varepsilon$, désirée pour la mesure de la réfractivité ($n_1$ - 1) du gaz ou de la variation de différence de longueurs de chemin optique des branches de mesure en raison du gaz.

8. Un appareil interférométrique conformément à l'une quelconque des revendications précédentes **caractérisé en ce que** le moyen électronique (109) est :

(a) adapté pour déterminer la différence de longueurs physiques, *L,* des branches de mesure occupées par le gaz; et / ou
(b) configuré pour recevoir la propriété optique intrinsèque, le pouvoir dispersif réciproque, $\Gamma$, du gaz pour calculer la différence de longueurs physiques, *L,* de la manière suivante :

$$\Gamma = \frac{[n_1(\lambda_1) - 1]}{[n_3(\lambda_3) - n_2(\lambda_2)]}$$

où $\lambda_1$, $\lambda_2$ et $\lambda_3$ sont des longueurs d'onde et $n_1$, $n_2$, et $n_3$ des indices de réfraction, et où le dénominateur peut être remplacé par

$$[n_3(\lambda_3) - n_1(\lambda_1)] \quad \text{ou} \quad [n_2(\lambda_2) - n_1(\lambda_1)]$$

9. Un appareil interférométrique conformément à l'une quelconque des revendications précédentes **caractérisé par** un appareil microlithographique (600) opérationnellement associé avec celui-ci de manière à ce que la différence des longueurs physiques, *L,* puisse être utilisée pour déterminer la variation de distance relative entre les éléments prédéterminés de l'appareil lithographique (600).

10. Un appareil interférométrique conformément à l'une quelconque des revendications précédentes **caractérisé en ce que** l'interféromètre (69, 70, 90) se compose d'un interféromètre à miroir plan différentiel (69, 70).

11. Un appareil interférométrique conformément à l'une quelconque des revendications 2 à 7 **caractérisé par** des moyens (3, 4) d'introduire une différence de fréquence entre la première et la deuxième partie de chacun des faisceaux lumineux (7, 8) pour générer un ensemble de faisceaux lumineux à décalage de fréquence tel qu'aucune paire de faisceaux lumineux à fréquence décalée ne présente la même différence de fréquence.

12. Un appareil interférométrique conformément aux revendications 3 et 12 **caractérisé par** des moyens optiques (54E) pour diviser chaque faisceau des faisceaux lumineux à fréquence décalée (8) en un ou plusieurs faisceaux pour fournir un ensemble élargi d'au moins trois faisceaux lumineux à fréquence décalée (9, 10, 1010) de l'ensemble de faisceaux lumineux à fréquence décalée tel que le nombre de faisceaux lumineux à fréquence décalée pour chaque longueur d'onde dans l'ensemble élargi est inversement associé à la relation approximativement harmonique et tel que chaque faisceau de l'ensemble élargi comprend deux composantes de fréquence.

13. Un appareil interférométrique conformément à la revendication 12 **caractérisé en ce que** l'interféromètre (69, 170, 90) introduit des déphasages entre les différentes composantes de fréquence de chaque faisceau de l'ensemble élargi pour produire les faisceaux de sortie comme un ensemble de faisceaux de lumière à fréquence décalée, déphasés et aligne et dirige les faisceaux de l'ensemble élargi pour que les chemins combinés au travers d'au moins une des branches de mesure traversées par chaque sous-ensemble de faisceaux lumineux à fréquence décalée et déphasés sont essentiellement les mêmes et où un sous-ensemble des faisceaux lumineux à fréquence décalée, déphasés, est composé de faisceaux lumineux à fréquence décalée, déphasés ayant la même longueur d'onde, les chemins de mesure traversés par n'importe quelle paire de faisceaux d'un sous-ensemble de faisceaux lumineux à fréquence décalée, déphasés ne se chevauchant généralement pas.

14. Un appareil interférométrique conformément à la revendication 13 **caractérisé en ce que** l'amplitude des déphasages introduits dans chaque faisceau de l'ensemble élargi est la différence de déphasages à laquelle les faisceaux ont été soumis pendant leur propagation le long de la première et de la deuxième branches de mesure et varie conformément au nombre de passages sur les première et deuxième branches de mesure respectives, aux longueurs physiques des première et deuxième branches de mesure respectives, et à la réfractivité respective du gaz dans au moins une des branches de mesure et la réfractivité respective du gaz et du médium prédéterminé, la réfractivité du gaz dans l'une au moins des branches de mesure pour chaque sous-ensemble de faisceaux lumineux à fréquence décalée, déphasés, étant différent l'un par rapport à l'autre, la réfractivité du gaz étant une fonction de la longueur d'onde.

15. Un appareil interférométrique conformément à la revendication 13 ou 14 **caractérisé en ce que** les moyens de mélange (85,186) mélangent les deux composantes de fréquences différentes de chaque faisceau de l'ensemble de faisceaux lumineux à fréquence décalée, déphasés pour produire les signaux optiques mélangés comme un ensemble de faisceaux de sortie mélangés composés d'au moins trois faisceaux de sortie mélangés, chaque faisceau de l'ensemble de faisceaux de sortie mélangés étant dérivé d'un faisceau de ensemble de faisceaux lumineux à fréquence décalée, déphasés.

16. Un appareil interférométrique conformément à la revendication 15 **caractérisé en ce que** le moyen de détection comprend un photodétecteur (85, 86, 286) pour générer les signaux d'interférence électrique comme un ensemble d'au moins trois signaux hétérodynes (103, 104, 304) des intensités de l'ensemble de faisceaux de sortie mélangés (30, 45, 230), l'ensemble d'au moins trois signaux hétérodynes (103, 104, 304) étant **caractérisé par** des oscillations à des fréquences hétérodynes associées aux différences de fréquence entre les différentes composantes de fréquence des faisceaux de l'ensemble élargi, l'ensemble d'au moins trois signaux hétérodynes (103, 104, 304) étant davantage **caractérisé par** un ensemble de phases hétérodynes, l'ensemble d'au moins trois signaux hétérodynes étant aussi composé d'un ensemble de sous-ensembles de signaux hétérodynes, un sous-ensemble de signaux hétérodynes étant les signaux hétérodynes générés d'un sous-ensemble de faisceaux lumineux à fréquence décalée, déphasés.

17. Un appareil interférométrique conformément à la revendication 16 **caractérisé par** l'ajout de moyens (1095C, 1095D) pour ajouter les signaux hétérodynes de chaque sous-ensemble de signaux hétérodynes pour produire un ensemble de sommes de signaux hétérodynes, chaque somme de signaux hétérodynes ayant une fréquence hétérodyne de somme égale à la fréquence hétérodyne du sous-ensemble de signaux hétérodynes additionnés pour la produire et une somme de phases hétérodynes égale à la moyenne des phases hétérodynes du sous-ensemble des signaux hétérodynes additionnés pour le produire.

18. Un appareil interférométrique conformément à la revendication 17 **caractérisé en ce que** le moyen électronique comprend également des moyens de mélanger deux de l'ensemble de sommes de signaux hétérodynes pour produire un signal superhétérodyne ($s_{1x2}$, $s_{1x3}$) composé d'une bande latérale de fréquence inférieure ayant une fréquence de bande latérale égale à la moitié de la différence entre la somme des fréquences hétérodynes mélangées pour produire le signal superhétérodyne et une phase de bande latérale égale à la moitié de la différence entre la somme des phases hétérodynes des signaux hétérodynes de la somme mélangés pour produire le signal superhétérodyne, la phase de bande latérale de la bande latérale de fréquence inférieure étant pratiquement nulle sauf pour les différences dues à la dispersion de la réfractivité du gaz et à la dispersion du médium prédéterminé dans les branches de mesure.

19. Un appareil interférométrique conformément à l'une quelconque des revendications 2 à 7 et 11 à 18 **caractérisé par** des moyens de surveillance (522) pour surveiller la précision relative de la relation approximativement harmonique exprimée comme la séquence de rapports.

20. Un appareil interférométrique conformément à la revendication 19 **caractérisé par** des moyens de rétroaction (524) réagissant aux moyens de surveillance (522) pour fournir un signal de rétroaction pour contrôler la source (1, 2) des deux faisceaux lumineux (7, 8) pour que la précision relative de la relation exprimée comme la relation approximativement harmonique soit d'un ordre de grandeur inférieur au pouvoir de dispersion du gaz multiplié par la précision relative requise pour la mesure de la réfractivité du gaz ou du changement des différences des longueurs de chemin optique des branches de mesure en raison du gaz.

21. Un appareil interférométrique conformément à l'une quelconque des revendications 15 à 18 **caractérisé en ce que** le moyen de combinaison est configuré et disposé pour produire les signaux optiques mélangés comme un ensemble de faisceaux de sortie mélangés composés d'au moins deux faisceaux de sortie mélangés, chaque faisceau de sortie mélangé étant généré depuis un sous-ensemble de faisceaux lumineux à fréquence décalée, déphasés.

22. Un appareil interférométrique conformément à l'une quelconque des revendications précédentes **caractérisé en ce que** la source (1, 2) des deux faisceaux lumineux (7, 8) comprend une source cohérente de rayonnement, de préférence un laser

**23.** Un appareil interférométrique conformément à l'une quelconque des revendications précédentes **caractérisé par** des moyens de recevoir directement les signaux d'interférence électrique des moyens de détection et de générer les signaux d'interférence électrique et de convertir les signaux d'interférence électrique en format numérique pour réduire les erreurs de phase dans les calculs ultérieurs.

**24.** Un appareil interférométrique conformément à l'une quelconque des revendications précédentes **caractérisé en ce que** les deux faisceaux lumineux (7, 8) ont chacun des états de polarisation orthogonaux.

**25.** Un appareil interférométrique conformément à la revendication 24 **caractérisé par** des moyens d'introduire une différence de fréquence entre les états de polarisation orthogonale des faisceaux lumineux (7, 8).

**26.** Un appareil interférométrique conformément aux revendications 24 ou 25 **caractérisé en ce que** les moyens de mélange sont adaptés pour mélanger les états de polarisation des faisceaux lumineux.

**27.** Un appareil interférométrique conformément à la revendication 26 **caractérisé en ce que** l'information correspondant aux différences de phase dans les signaux optiques mélangés sont des décalages de phases associés aux différences de longueur physique $L$ aller-retour des branches de mesure occupées par le gaz conformément aux formules :

$$\varphi_1 = \sum_{i=1}^{i=p_1} \varphi_{1,i} = \sum_{i=1}^{i=p_1} L_i k_1 n_{1i} + \zeta_1$$

$$\varphi_2 = \sum_{i=1}^{i=p_2} \varphi_{2,i} = \sum_{i=1}^{i=p_2} L_i k_2 n_{2i} + \zeta_2$$

$$\varphi_3 = \sum_{i=p_2+1}^{i=p_1} \varphi_{3,i} = \sum_{i=p_2+1}^{i=p_1} L_i k_2 n_{2i} + \zeta_3$$

pour le cas de $p_1$ - $2p_2$ où $k_j = 2\pi/\lambda_j$, $j$ = 1 et 2, et $n_{ji}$ sont les indices de réfraction du gaz dans le chemin $i$ de la branche de mesure correspondant au numéro d'onde $k_j$, et :

$$p_1\lambda_1 \cong p_2\lambda_2 \; ; \; p_1, p_2 = 1, 2, 3 \ldots, p_1 \neq p_2,$$

et
les décalages de phase $\zeta_\ell$ comprennent toutes les contributions aux décalages de phase $\varphi\ell$ qui ne sont pas associées à la première et à la deuxième branches de mesure.

**28.** Un appareil interférométrique conformément à la revendication 27 **caractérisé en ce que** les signaux d'interférence électrique comprennent des signaux hétérodynes de la forme :

$$s_\ell = A_\ell \, cos \, [\alpha_\ell \, (t)] \;\;, \; \ell = 1, 2, \text{et } 3$$

où les arguments fonction du temps $\alpha_\ell(t)$ sont donnés par :

$$\alpha_1 \, (t) = 2\pi f_1 \, t + \varphi_1$$

$$\alpha_2 \, (t) = 2\pi f_2 \, t + \varphi_2$$

$$\alpha_3 \, (t) = 2\pi f_3 \, t + \varphi_3$$

**29.** Un appareil interférométrique conformément à la revendication 27 **caractérisé en ce que** le moyen électronique est adapté pour recevoir les signaux hétérodynes et déterminer les décalages de phase $\varphi_1$, $\varphi_2$, et $\varphi_3$.

**30.** Un appareil interférométrique conformément à l'une quelconque des revendications précédentes **caractérisé par** des moyens de résoudre des erreurs de redondance de phase dans les décalages $\zeta_\ell$ et/ou dans l'information.

**31.** Un appareil interférométrique conformément à l'une quelconque des revendications précédentes **caractérisé par** un appareil microlithographique (600) opérationnellement associé avec celui-ci pour fabriquer des galettes, l'appareil microlithographique (600) étant composé :

d'au moins un étage (622) pour supporter une galette ;
d'un système d'éclairage (606, 616) pour l'imagerie de rayonnement à motif spatial sur la galette ; et
un système de positionnement (617) pour régler la position du ou des étages (622) par rapport au rayonnement imagé ;
l'appareil interférométrique étant adapté pour mesurer la position de la galette par rapport au rayonnement imagé.

**32.** Un appareil interférométrique conformément à l'une quelconque des revendications 1 à 31 **caractérisé par** un appareil microlithographique (600) opérationnellement associé avec celui-ci pour fabriquer des circuits intégrés sur une galette, l'appareil microlithographique (600) étant composé :

d'au moins un étage (622) pour supporter une galette ;
d'un système d'éclairage y compris une source de rayonnement, un masque, un système de positionnement (617), une lentille (608), et des parties prédéterminées de l'appareil interférométrique ;
l'appareil microlithographique (600) fonctionnant de manière à ce que la source dirige le rayonnement au travers du masque pour fournir un rayonnement à motif spatial, le système de positionnement (617) règle la position du masque par rapport au rayonnement de la source, la lentille (608) donne une image du rayonnement à motif spatial sur la galette, et l'appareil interférométrique mesure la position du masque par rapport au rayonnement de la source.

**33.** Un appareil interférométrique conformément à l'une quelconque des revendications 1 à 31 **caractérisé par** un appareil microlithographique (600) opérationnellement associé avec celui-ci pour fabriquer des circuits intégrés composés de premier et second composant mobiles l'un par rapport à l'autre, le premier et le second composant étant connectés avec la première et la deuxième branches de mesure et se déplaçant de concert avec celle-ci, de manière à ce que l'appareil interférométrique mesure la position du premier composant par rapport au second.

**34.** Un appareil interférométrique conformément à l'une quelconque des revendications 1 à 31 **caractérisé par** un système d'écriture de faisceau (700) opérationnellement associé avec celui-ci pour l'emploi dans la fabrication d'un masque lithographique, le système d'écriture de faisceau (700) comprenant :

une source (710) pour fournir un faisceau d'écriture (712) pour former un motif sur un substrat (716) ;
au moins un étage (718) pour supporter le substrat (716) ;
un ensemble de direction de faisceau (714) pour fournir le faisceau d'écriture (712) au substrat (716) et
un système de positionnement pour positionner les étages (718) et l'ensemble de direction de faisceau (714) l'un par rapport à l'autre,
l'appareil interférométrique étant adapté pour mesurer la position du ou des étages (718) par rapport à l'ensemble de direction de faisceau (714).

**35.** Un appareil interférométrique conformément à l'une quelconque des revendications précédentes **caractérisé en ce que** le moyen électronique (109) comprend également des moyens d'analyse de phase pour recevoir les signaux d'interférence électrique et générer des signaux de phase électrique initiaux contenant l'information correspondant aux effets des indices de réfraction du gaz et du médium prédéterminé aux différentes longueurs d'onde de faisceau et la différence de longueurs de chemin physique des branches de mesure occupées par le gaz et sa vitesse de variation.

**36.** Un appareil interférométrique conformément à la revendication 35 **caractérisé en ce que** le moyen électronique (109) comprend également des moyens de multiplication des signaux de phase initiale par des facteurs correspondants aux longueurs d'onde de faisceau et au nombre d'allers-retours des faisceaux au travers de l'interféromètre (69, 70) pour générer des signaux de phase modifiée.

37. Un appareil interférométrique conformément à la revendication 36 **caractérisé en ce que** le moyen électronique (109) comprend également le moyen de recevoir les signaux de phase modifiée et pour les ajouter et soustraire sélectivement pour générer la somme et la différence des signaux de phase contenant l'information correspondant aux effets de l'indice de réfraction du gaz aux différentes longueurs d'onde de faisceau et la différence de longueurs de chemin physique des branches de mesure occupées par le gaz et sa vitesse de variation.

38. Un appareil interférométrique conformément à la revendication 37 **caractérisé en ce que** le moyen électronique (109) comprend également le moyen de recevoir la somme et la différence des signaux de phase et au moins un des signaux de phase initiale pour déterminer la différence de longueurs physiques, L, des branches de mesure occupées par le gaz.

39. Un appareil interférométrique conformément à l'une quelconque des revendications 34 à 37 **caractérisé par** un moyen de résolution de redondance entre les signaux de phase.

40. Un appareil interférométrique conformément à l'une quelconque des revendications 1, 4 à 6, 8 à 11, 19, 20 et 22 à 39 **caractérisé en ce que** les longueurs d'onde de faisceau ne sont pas harmoniquement associées.

41. Un appareil interférométrique conformément à l'une quelconque des revendications 24 à 29 **caractérisé par** le moyen d'introduire les différences de fréquence entre les états de polarisation orthogonale des faisceaux lumineux (7, 8) de manière à ce qu'au moins deux des faisceaux lumineux (7, 8) présentent des fréquences différentes entre leurs états de polarisation respectifs, l'appareil comprenant un simple photodétecteur pour générer des signaux de phase d'au moins deux des faisceaux de sortie,

42. Un appareil interférométrique conformément à l'une quelconque des revendications 1 à 39 **caractérisée en ce que** la précision relative des longueurs d'onde exprimées comme la séquence de rapports est de l'ordre de grandeur ou supérieur à approximativement un dixième de la dispersion de l'indice de réfraction du gaz ($n_2 - n_1$) où $n_1$ et $n_2$ sont, respectivement les indices de réfraction du gaz à différentes longueurs d'onde, multiplié par la précision relative, $\varepsilon$, désirée pour la mesure de la réfractivité ($n_1 - 1$) du gaz ou de la variation de différence de longueurs de chemin optique des branches de mesure en raison du gaz.

43. Une méthode interférométrique pour mesurer les effets de l'indice de réfraction d'un gaz dans un chemin de mesure, la méthode comprenant :

la génération de faisceaux lumineux (7, 8) ayant des longueurs d'onde différentes,
fournissant un interféromètre (69, 70) dont la première et la deuxième branches de mesure présentent des chemins optiques structurés et disposés de manière à ce qu'au moins une branche ait une longueur physique variable et au moins une branche soit partiellement occupée par le gaz, et l'autre branche pouvant au moins partiellement être occupée par un medium prédéterminé, la différence de longueur de chemin optique entre la première et la deuxième branches de mesure variant conformément aux longueurs physiques respectives de leurs chemins optiques et les propriétés du gaz et du médium prédéterminé ;
introduisant la première et la deuxième partie prédéterminées de chacun des faisceaux lumineux (7, 8) dans les première et deuxième branches de mesure pour que les première et deuxième partie prédéterminées émergeant de l'interféromètre (69, 70) comme faisceaux de sortie (30, 45, 230) contenant de l'information sur les longueurs de chemins optiques respectifs par les première et deuxième branches de mesure aux longueurs d'onde des faisceaux originaux (7, 8);
combinant les moyens de sortie (30, 45, 230) pour produire des signaux optiques mélangés contenant de l'information correspondant aux différences de phase entre les faisceaux de sortie (30, 45, 230),
la méthode étant **caractérisée en ce que** les faisceaux à une des longueurs d'onde de la première et de la deuxième partie prédéterminée se propagent dans au moins une des première et deuxième branches de mesure le long de chemins optique prédéterminés un nombre différent de fois que les faisceaux de l'autre des longueurs d'onde de la première et deuxième partie prédéterminée pour compenser les vitesses relatives de variation des longueurs de chemin physiques des première et deuxième branches de mesure,
la méthode étant aussi **caractérisée en** détectant les signaux optiques mélangés et en générant des signaux d'interférence électrique contenant de l'information correspondant aux effets des indices de réfraction du gaz et du médium prédéterminé aux différentes longueurs d'onde et les longueurs de chemins physiques relatifs des première et deuxième branches de mesure et leurs vitesses relatives de variation ; et

en analysant électroniquement les signaux d'interférence électrique pour déterminer les effets du gaz dans les branches de mesure.

44. Une méthode interférométrique conformément à la revendication 43 **caractérisée en ce qu'**elle est effectuée au moyen d'un appareil conformément à l'une quelconque des revendications 1 à 42.

E17,E25,E33,E41
E117,E125,E133,E141
E18,E26,E218,E226
E118,E126,E318,E326

17,25,33,41
117,125,133,144

101

5

1    7    3    9

69    65    66    90

67

103    85    45

18,26,218,226
118,126,318,326

212    70

6

102

30    12

2    8    4    10    54B

54A

86    230

104

304    286

109

105

110

FIG. 1a

FIG. 1b

FIG. 1c

61

EP 1 066 495 B1

FIG. 1d

EP 1 066 495 B1

FIG. 1e

FIG. 1f

EP 1 066 495 B1

FIG. 1g

EP 1 066 495 B1

65

EP 1 066 495 B1

FIG. 2a

66

FIG. 2b

FIG. 2c

EP 1 066 495 B1

FIG. 2d

EP 1 066 495 B1

FIG. 2e

FIG. 2f

FIG. 3a

FIG. 3b

FIG. 3c

FIG. 3d

EP 1 066 495 B1

FIG. 3e

91

92

67

E18

E118

E126

98

E26

95

93

96

90

FIG. 3f

EP 1 066 495 B1

FIG. 3g

EP 1 066 495 B1

FIG. 4a

FIG. 4b

FIG. 4c

EP 1 066 495 B1

FIG. 4d

EP 1 066 495 B1

FIG. 5

500 — START Generate Two Or More Light Beams

—Feedback—

502 — Separate Each Beam Into Components

522 — Wavelengths OK

524 → Assess And Calculate Correction

504 — Alter One Of The Components

526 — Provide An Interferometer

506 — Send Altered Component Through Interferometer

Reference Leg (Vacuum) | Measurement Leg (Gas) — 508

510 — Combine Beams To Generate A Mixed Optical Signal

512 — Generate A Corresponding Electrical Signal

514 — Directly Extract Phase Information Or Generate Superheterodyne Signals And Then Extract Phase Information

516 — Receive Phase Information And Resolve Phase Redundancy

518 — Calculate Optical Properties

520 — Downstream Application, DMI Or OTHER

FIG. 6a

FIG. 6b

EP 1 066 495 B1

| | |
|---|---|
| OXIDATION PROCESS | RESIST PROCESS |
| 661 | 665 |
| CVD | EXPOSURE |
| 662 | 666 |
| ELECTRODE FORMATION | DEVELOPMENT |
| 663 | 667 |
| ION IMPLANTATION | ETCHING |
| 664 | 668 |
| | RESIST SEPARATION |
| | 669 |

REPEAT

# FIG. 6c

**FIG. 7**

EP 1 066 495 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4688940 A, G. E. Sommargren and M. Schaham
- US 1987 A
- US 4005936 A
- US 4907886 A
- US 3647302 A
- US 1972 A, R. B. Zipin and J. T. Zalusky
- US 4948254 A, A. Ishida
- US 1990 A
- US 5404222 A
- US 5537209 A
- US 4802764 A
- WO 9918424 A
- US 3889207 A, Burgwald
- US 3662279 A, Sandstrom
- US 3458259 A, Bagley
- US 3656853 A, Bagley
- US 5485272 A, P. Dirksen
- US 4684828 A
- US 4687958 A
- US 5663793 A
- US 5483343 A

### Non-patent literature cited in the description

- **J. Terrien.** An air refractometer for interference length metrology. *Metrologia,* 1965, vol. 1 (3), 80-83
- **H. Matsumoto ; K. Tsukahara.** Effects of the atmospheric phase fluctuation on long-distance measurement. *Appl. Opt.,* 1984, vol. 23 (19), 3388-3394
- **G. N. Gibson et al.** Optical path length fluctuation in the atmosphere. *Appl. Opt.,* 1984, vol. 23 (23), 4383-4389
- **N. Bobroff.** Residual errors in laser interferometry from air turbulence and non-linearity. *Appl. Opt.,* 1987, vol. 26 (13), 2676-2682
- **N. Bobroff.** Recent advances in displacement measuring interferometry. *Measurement Science & Tech.,* 1993, vol. 4 (9), 907-926
- **R. Dändliker ; R. Thalmann ; D. Prongué.** Two-Wavelength Laser Interferometry Using Superheterodyne Detection. *Opt. Let.,* 1988, vol. 13 (5), 339-341
- **Z. Sodnik ; E. Fischer ; T. Ittner ; H. J. Tiziani.** Two-wavelength double heterodyne interferometry using a matched grating technique. *Appl. Opt.,* 1991, vol. 30 (22), 3139-3144
- **S. Manhart ; R. Maurer.** Diode laser and fiber optics for dual-wavelength heterodyne interferometry. *SPIE,* 1990, vol. 1319, 214-216
- **F. E. Jones.** The Refractivity Of Air. *J. Res. NBS,* 1981, vol. 86 (1), 27-32
- **W. T. Estler.** High-Accuracy Displacement Interferometry In Air. *Appl. Opt.,* 1985, vol. 24 (6), 808-815
- **K. E. Erickson.** Long-Path Interferometry Through An Uncontrolled Atmosphere. *JOSA,* 1962, vol. 52 (7), 781-787
- **P. L. Bender ; J. C. Owens.** Correction Of Optical Distance Measurements For The Fluctuating Atmospheric Index Of Refraction. *J. Geo. Res.,* 1965, vol. 70 (10), 2461-2462
- **K. B. Earnshaw ; E. N. Hernandez.** Two-Laser Optical Distance-Measuring Instrument That Corrects For The Atmospheric Index Of Refraction. *Appl. Opt.,* 1972, vol. 11 (4), 749-754
- **E. N. Hernandez ; K. B. Earnshaw.** Field Tests Of A Two-Laser (4416A and 6328A) Optical Distance-Measuring Instrument Correcting For The Atmospheric Index Of Refraction. *J. Geo. Res.,* 1972, vol. 77 (35), 6994-6998
- **E. Berg ; J. A. Carter.** Distance Corrections For Single- And Dual-Color Lasers By Ray Tracing. *J. Geo. Res.,* 1980, vol. 85 (B11), 6513-6520
- **L. E. Slater ; G. R. Huggett.** A Multi-Wavelength Distance-Measuring Instrument For Geophysical Experiments. *J. Geo. Res.,* 1976, vol. 81 (35), 6299-6306
- **Y. Zhu ; H. Matsumoto ; T. O'ishi.** *SPIE 1319, Optics in Complex Systems,* 1990, 538-539
- **Zhu et al.** Measurement Of Atmospheric Phase And Intensity Turbulence For Long-Path Distance Interferometer. *Proc. 3rd Meeting On Lightwave Sensing Technology, Appl. Phys. Soc. of Japan,* 1989, 39
- **Ishida.** Two Wavelength Displacement-Measuring Interferometer Using Second-Harmonic Light To Eliminate Air-Turbulence-Induced Errors. *Jpn. J. Appl. Phys.,* 1989, vol. 28 (3), L473-475

- **Lis.** An Air Turbulence Compensated Interferometer For IC Manufacturing. *SPIE 2440*
- **P. Hariharan ; D. Sen.** Double-passed two-beam interferometers. *J. Opt. Soc. Am.,* 1960, vol. 50, 357-361
- **T. Baer et al.** Frequency Stabilization of a 0.633 $\mu$m He-Ne-longitudinal Zeeman Laser. *Applied Optics,* 1980, vol. 19, 3173-3177
- **T. Okoshi ; K. Kikuchi.** Frequency Stabilization of Semiconductor Lasers for Heterodyne-type Optical Communication Systems. *Electronic Letters,* 1980, vol. 16, 179-181
- **S. Yamaqguchi ; M. Suzuki.** Simultaneous Stabilization of the Frequency and Power of an AlGaAs Semiconductor Laser by Use of the Optogalvanic Effect of Krypton. *IEEE J. Quantum Electronics,* 1983, vol. QE-19, 1514-1519
- **G. Bouwhuis.** Interferometrie Mit Gaslasers. *Ned. T. Natuurk,* August 1968, vol. 34, 225-232
- **H. Matsumoto.** Recent interferometric measurements using stabilized lasers. *Precision Engineering,* 1984, vol. 6 (2), 87-94
- **Y. Ohtsuka ; K. Itoh.** Two-frequency Laser Interferometer for Small Displacement Measurements in a Low Frequency Range. *Applied Optics,* 1979, vol. 18 (2), 219-224
- **N. Massie et al.** Measuring Laser Flow Fields With a 64-Channel Heterodyne Interferometer. *Applied Optics,* 1983, vol. 22 (14), 2141-2151
- **Y. Ohtsuka ; M. Tsubokawa.** Dynamic Two-frequency Interferometry for Small Displacement Measurements. *Optics and Laser Technology,* 1984, vol. 16, 25-29
- **N. A. Riza ; M. M. K. Howlader.** Acousto-optic system for the generation and control of tunable low-frequency signals. *Opt. Eng.,* 1996, vol. 35 (4), 920-925
- **J. B. Ferguson ; R. H. Morris.** Single Mode Collapse in 6328 A HeNe Lasers. *Applied Optics,* 1978, vol. 17 (18), 2924-2929
- **V. Evtuhov ; A. E. Siegman.** A 'Twisted-Mode' Technique for Obtaining Axially Uniform Energy Density in a Laser Cavity. *Applied Optics,* 1965, vol. 4 (1), 142-143
- **M. Tanaka ; T. Yamagami ; K. Nakayama.** Linear Interpolation of Periodic Error in a Heterodyne Laser Interferometer at Subnanometer Levels. *IEEE Trans. Instrum. and Meas.,* 1989, vol. 38 (2), 552-554
- **R. E. Best.** Phase-locked loops: theory, design, and applications. McGraw-Hill, 1993
- **H. J. Blinchikoff ; A. I. Zverev.** Filtering in the Time and Frequency Domains. Wiley, 1976
- **C. Zanoni.** Differential interferometer arrangements for distance and angle measurements: Principles, advantages and applications. *VDI Berichte Nr. 749,* 1989, 93-106
- *Semiconductor Industry Roadmap,* 1997, 82
- **J. R. Sheats ; B. W. Smith.** Microlithography: Science and Technology. Marcel Dekker, Inc, 1998